# EUROPÄISCHE PATENTSCHRIFT

(11) **EP 2 596 034 B1**
(45) Veröffentlichungstag und Bekanntmachung des Hinweises auf die Patenterteilung: **26.11.2014**
(21) Anmeldenummer: 11738159.0
(22) Anmeldetag: 30.06.2011
(51) Int. Cl.: C08F 220/30, C08F 222/10

(54) **POLYMERISIERBARE MISCHUNGEN UND IHRE VERWENDUNG IN FLÜSSIGKRISTALLANZEIGEN**
POLYMERIZABLE MIXTURES AND THE USE THEREOF IN LIQUID CRYSTAL DISPLAYS
MÉLANGES POLYMÉRISABLES ET UTILISATION DE CEUX-CI DANS DES ÉCRANS À CRISTAUX LIQUIDES

(30) Priorität: 21.07.2010 DE 102010031748
(43) Veröffentlichungstag der Anmeldung: 29.05.2013
(73) Patentinhaber: Merck Patent GmbH, 64293 Darmstadt (DE)
(72) Erfinder: GOETZ, Achim, 64665 Alsbach-Haehnlein (DE); LAUT, Sven, Christian, 64347 Griesheim (DE); TAUGERBECK, Andreas, 64285 Darmstadt (DE)
(86) Internationale Anmeldenummer: PCT/EP2011/003240
(87) Internationale Veröffentlichungsnummer: WO 2012/022391

(56) Entgegenhaltungen:
- DE-A1-102009 011 652
- US-A1- 2009 283 937

## Beschreibung

Die vorliegende Erfindung betrifft polymerisierbare Mischungen und ihre Verwendung für optische, elektrooptische und elektronische Zwecke, insbesondere in Flüssigkristall (FK)-Medien und FK-Anzeigen, vor allem in FK-Anzeigen des PS- oder PSA-Typs ("polymer sustained" bzw. "polymer sustained alignment").

Die derzeit verwendeten Flüssigkristallanzeigen (FK-Anzeigen) sind meist solche des TN-Typs ("twisted nematic"). Diese weisen allerdings den Nachteil einer starken Blickwinkelabhängigkeit des Kontrastes auf. Daneben sind sogenannte VA-Anzeigen ("vertically aligned") bekannt, die einen breiteren Blickwinkel aufweisen. Die FK-Zelle einer VA-Anzeige enthält eine Schicht eines FK-Mediums zwischen zwei transparenten Elektroden, wobei das FK-Medium üblicherweise einen negativen Wert der dielektrischen (DK-) Anisotropie aufweist. Die Moleküle der FK-Schicht sind im ausgeschalteten Zustand senkrecht zu den Elektrodenflächen (homöotrop) oder gekippt homöotrop ("tilted") orientiert. Bei Anlegen einer elektrischen Spannung an die beiden Elektroden findet eine Umorientierung der FK-Moleküle parallel zu den Elektrodenflächen statt.

Weiterhin sind OCB-Anzeigen ("optically compensated bend") bekannt, die auf einem Doppelbrechungseffekt beruhen und eine FK-Schicht mit einer sogenannten "bend"-Orientierung und üblicherweise positiver (DK-) Anisotropie aufweisen. Bei Anlegen einer elektrischen Spannung findet eine Umorientierung der FK-Moleküle senkrecht zu den Elektrodenflächen statt. Darüber hinaus enthalten OCB-Anzeigen normalerweise einen oder mehrere doppelbrechende optische Retardationsfilme, um unerwünschte Lichtdurchlässigkeit der "bend"-Zelle im dunklen Zustand zu vermeiden. OCB-Anzeigen besitzen gegenüber TN-Anzeigen einen weiteren Blickwinkel und kürzere Schaltzeiten.

Weiterhin sind sogenannte IPS-Anzeigen ("In-Plane Switching") bekannt, die eine FK-Schicht zwischen zwei Substraten enthalten, wobei die beiden Elektroden nur auf einem der beiden Substrate angeordnet sind, und vorzugsweise ineinander verzahnte, kammförmige Strukturen aufweisen. Dadurch wird bei Anlegen einer Spannung an die Elektroden ein elektrisches Feld zwsichen ihnen erzeugt, welches eine signifikante Komponente parallel zur FK-Schicht aufweist. Dies bewirkt eine Umorientierung der FK-Moleküle in der Schichtebene.

Des weiteren wurden sogenannte FFS-Anzeigen ("Fringe-Field-Switching") vorgeschlagen (siehe u.a. S.H. Jung et al., Jpn. J. Appl. Phys., Band 43, No. 3, 2004, 1028), die ebenfalls zwei Elektroden auf dem gleichen Substrat beinhalten, wovon jedoch im Gegensatz zu IPS-Anzeigen nur eine als kammförmig strukturierte Elektrode ausgebildet ist, und die andere Elektrode unstrukturiert ist. Dadurch wird ein starkes sogenanntes "fringe field" erzeugt, also ein starkes elektrisches Feld nahe am Rand der Elektroden und in der gesamten Zelle ein elektrisches Feld, welches sowohl eine starke vertikale als auch eine starke horizontale Komponente aufweist. Sowohl IPS-Anzeigen als auch FFS-Anzeigen weisen eine geringe Blickwinkelabhängigkeit des Kontrastes auf.

In VA-Anzeigen des neueren Typs ist die einheitliche Ausrichtung der FK-Moleküle auf mehrere kleinere Domänen innerhalb der FK-Zelle beschränkt. Zwischen diesen Domänen, auch als Tilt-Domänen (engl. "tilt domains") bezeichnet, können Disklinationen existieren. VA-Anzeigen mit Tilt-Domänen weisen, verglichen mit herkömmlichen VA-Anzeigen, eine größere Blickwinkelunabhängigkeit des Kontrastes und der Graustufen auf. Außerdem sind solche Anzeigen einfacher herzustellen, da eine zusätzliche Behandlung der Elektrodenoberfläche zur einheitlichen Orientierung der Moleküle im eingeschalteten Zustand, wie z.B. durch Reiben, nicht mehr notwendig ist. Stattdessen wird die Vorzugsrichtung des Kipp- oder Tiltwinkels (engl. "pretilt") durch eine spezielle Ausgestaltung der Elektroden kontrolliert.

In den sogenannten MVA-Anzeigen ("multidomain vertical alignment") wird dies üblicherweise dadurch erreicht, dass die Elektroden Erhebungen oder Vorsprünge (engl. "protrusions") aufweisen, die einen lokalen pretilt verursachen. Als Folge werden die FK-Moleküle beim Anlegen einer Spannung in verschiedenen, definierten Regionen der Zelle in unterschiedliche Richtungen parallel zu den Elektrodenflächen orientiert. Dadurch wird ein "kontrolliertes" Schalten erreicht und das Entstehen störender Disklinationslinien vermieden. Diese Anordnung verbessert zwar den Blickwinkel der Anzeige, führt aber zu einer Verringerung ihrer Lichtdurchlässigkeit.

Eine Weiterentwicklung von MVA verwendet Protrusions nur auf einer Elektroden-Seite, die gegenüberliegende Elektrode weist hingegen Schlitze (engl. "slits") auf, was die Lichtdurchlässigkeit verbessert. Die geschlitzten Elektroden erzeugen beim Anlegen einer Spannung ein inhomogenes elektrisches Feld in der FK-Zelle, so dass weiterhin ein kontrolliertes Schalten erreicht wird. Zur weiteren Verbesserung der Lichtdurchlässigkeit können die Abstände zwischen den slits und protrusions vergrößert werden, was jedoch wiederum zu einer Verlängerung der Schaltzeiten führt.

Beim sogenannten PVA (Patterned VA) kommt man ganz ohne Protrusions aus, indem man beide Elektroden auf den gegenüberliegenden Seiten durch Schlitze strukturiert, was zu einem erhöhten Kontrast und verbesserter Lichtdurchlässigkeit führt, aber technologisch schwierig ist und das Display empfindlicher gegen mechanische Einflüsse macht (Klopfen, engl. "tapping", etc.). Für viele Anwendungen, wie beispielsweise Monitore und vor allem TV-Bildschirme, ist jedoch eine Verkürzung der Schaltzeiten sowie eine Verbesserung des Kontrastes und der Luminanz (Transmission) der Anzeige gefragt.

Eine Weiterentwicklung stellen die sogenannten PS-bzw. PSA-Anzeigen ("Polymer Sustained" bzw. "Polymer Sustained Alignment") dar, für die auch gelegentlich der Begriff "Polymer Stabilized" verwendet wird. In diesen Anzeigen wird dem FK-Medium eine geringe Menge (zum Beispiel 0.3 Gew.%, typischerweise <1 Gew.%) einer oder mehrerer polymerisierbarer Verbindung(en) zugesetzt, welche nach Einfüllen in die FK-Zelle mit oder ohne angelegte elektrische Spannung zwischen den Elektroden in situ polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als reaktive Mesogene oder "RM"s bezeichnet, zur FK-Mischung erwiesen.

Nachfolgend wir der Begriff "PSA", falls nicht anders angegeben, stellvertretend für PS-Anzeigen und PSA-Anzeigen verwendet.

Mittlerweile wird das PS(A)-Prizip in diversen klassischen FK-Anzeigen angewendet. So sind beispielsweise PSA-VA-, PSA-OCB-, PSA-IPS-, PSA-FFS- und PSA-TN-Anzeigen bekannt. Die Polymerisation der polymerisierbaren Verbindung(en) erfolgt bei PSA-VA- und PSA-OCB-Anzeigen vorzugsweise bei angelegter elektrischer Spannung, bei PSA-IPS-Anzeigen mit oder ohne angelegte elektrische Spannung. Wie man in Testzellen nachweisen kann, führt das PS(A)-Verfahren zu einem pretilt in der Zelle. Bei PSA-OCB-Anzeigen beispielsweise kann man erreichen, dass die Bend-Struktur stabilisiert wird, so dass man ohne Offset-Spannung auskommt oder diese reduzieren kann. Im Falle von PSA-VA-Anzeigen wirkt sich der pretilt positiv auf die Schaltzeiten aus. Für PSA-VA-Anzeigen kann ein Standard-MVA- bzw. -PVA Pixel- und Elektroden-Layout verwendet werden. Darüber hinaus kann man aber beispielsweise auch mit nur einer strukturierten Elektrodenseite und ohne Protrusions auskommen, was die Herstellung wesentlich vereinfacht und gleichzeitig zu einem sehr guten Kontrast bei sehr guter Lichtdurchlässigkeit führt.

Außerdem haben sich sogenannte Posi-VA-Anzeigen ("Positiv-VA") als besonders günstige Ausführungsform erwiesen. Die Ausgangsorientierung der Flüssigkristalle im spannungsfreien Ausgangszustand ist hier, ebenso wie bei klassischen VA-Anzeigen, homöotrop, also im wesentlichen senkrecht zu den Substraten. Im Gegensatz zu klassischen VA-Anzeigen werden in Posi-VA-Anzeigen jedoch dielektrisch positive FK-Medien verwendet. Durch Anlegen einer elektrischen Spannung an interdigitale Elektroden, die ein im wesentlichen zur Schicht des FK-Mediums paralleles Feld erzeugen, werden die FK-Moleküle in eine im wesentlichen zu den Substraten parallele Orientierung überführt. Derartige interdigitale Elektroden werden auch üblicherweise bei IPS-Anzeigen verwendet. Auch bei Posi-VA-Anzeigen hat sich eine entsprechende Polymerstabilisierung (PSA) als vorteilhaft erwiesen, wodurch eine erhebliche Reduzierung der Schaltzeiten realisiert werden konnte.

PSA-VA-Anzeigen sind beispielsweise in JP 10-036847 A, EP 1 170 626 A2, US 6,861,107, US 7,169,449, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. 45, 2006, 2702-2704 und S. H. Kim, L.-C- Chien, Jpn. J. Appl. Phys. 43, 2004, 7643-7647 beschrieben. PSA-IPS-Anzeigen sind zum Beispiel in US 6,177,972 und Appl. Phys. Lett. 1999, 75(21), 3264 beschrieben. PSA-TN-Anzeigen sind zum Beispiel in Optics Express 2004, 12(7), 1221 beschrieben.

PSA-Anzeigen können ebenso wie die oben beschriebenen konventionallen FK-Anzeigen als Aktivmatrix- oder Passivmatrix-Anzeigen betrieben werden. Bei Aktivmatrix-Anzeigen erfolgt die Ansteuerung einzelner Bildpunkte üblicherweise durch integrierte, nicht-lineare aktive Elemente wie beispielsweise Transistoren (z.B. Dünnfilmtransistoren, engl. "thin film transistor" bzw. "TFT'), bei Passivmatrix-Anzeigen üblicherweise nach dem Multiplex-Verfahren, wobei beide Verfahren aus dem Stand der Technik bekannt sind.

Insbesondere für Monitor- und vor allem TV-Anwendungen ist nach wie vor die Optimierung der Schaltzeiten, wie aber auch des Kontrastes und der Luminanz (also auch Transmission) der FK-Anzeige gefragt. Hier kann das PSA-Verfahren entscheidende Vorteile bringen. Insbesondere bei PSA-VA-, PSA-IPS-, PSA-FFS- und PSA-Posi-VA-Anzeigen kann man ohne nennenswerte Einbußen sonstiger Parameter eine Verkürzung der Schaltzeiten erreichen, die mit einem in Testzellen messbaren pretilt korrelieren.

Im Stand der Technik werden beispielsweise polymerisierbare Verbindungen der folgenen Formel verwendet 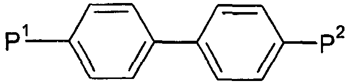 worin P eine polymerisierbare Gruppe, üblicherweise eine Acrylat- oder Methacrylategruppe bedeutet, wie beispielsweise in US 7,169,449 beschrieben.

Es ergibt sich jedoch das Problem, dass nicht alle Kombinationen bestehend aus FK-Mischung (nachfolgend auch als "FK-Hostmischung" bezeichnet) + polymerisierbarer Komponente (typischerweise RMs) für PSA-Anzeigen geeignet sind, weil sich zum Beispiel kein oder kein ausreichender Tilt einstellt, oder weil zum Beispiel die sogenannte "Voltage Holding Ratio" (VHR oder HR) für TFT-Displayanwendungen unzureichend ist. Zudem hat sich gezeigt, dass bei Verwendung in PSA-Anzeigen die aus dem Stand der Technik bekannten FK-Mischungen und RMs noch einige Nachteile aufweisen. So eignet sich nicht jedes bekannte, in FK-Mischungen lösliche RM zur Verwendung in PSA-Anzeigen. Ausserdem ist es oft schwierig, neben der direkten Messung des pretilts in der PSA-Anzeige ein geeignetes Auswahlkriterium für das RM zu finden. Noch kleiner wird die Auswahl geeigneter RMs, wenn eine Polymerisation mittels UV-Licht ohne den Zusatz von Photoinitiatoren gewünscht ist, was für bestimmte Anwendungen von Vorteil sein kann.

Darüber hinaus sollte die gewählte Kombination FK-Hostmischung/RM eine möglichst geringe Rotationsviskosität sowie möglichst gute elektrische Eigenschaften aufweisen, insbesondere sollte sie eine möglichst hohe VHR besitzen. Bei PSA-Anzeigen ist vor allem eine hohe VHR nach Bestrahlung mit UV-Licht erforderlich, da die UV-Belichtung ein notwendiger Teil des Herstellungsprozesses der Anzeige ist, aber auch als normale Belastung im Betrieb der fertigen Anzeige auftritt.

Insbesondere wäre es wünschenswert, neue Materialien für PSA-Anzeigen zur Verfügung zu haben, die einen besonders kleinen pretilt-Winkel erzeugen. Hierbei sind Materialien bevorzugt, die während der Polymerisation bei gleicher Belichtungszeit einen niedrigeren pretilt-Winkel erzeugen als die bisher bekannten Materialien, und/oder durch deren Verwendung der mit den bekannten Materialien erzielbare (höhere) pretilt-Winkel bereits nach kürzerer Belichtungszeit erreicht werden kann.

Dadurch könnten die Produktionszeit (engl. "tact time") der Anzeige verkürzt und die Kosten des Produktionsprozesses verringert werden.

Ein weiteres Problem bei der Herstellung von PSA-Anzeigen ist das Vorhandensein bzw. die Entfernung von Restmengen unpolymerisierter RMs insbesondere nach dem Polymerisationsschritt zur Erzeugung des pretilt-Winkels in der Anzeige. Beispielsweise können solche nicht abreagierten RMs die Eigenschaften der Anzeige nachteilig beeinflussen, indem sie z.B. nach Fertigstellung der Anzeige während des Betriebes unkontrolliert polymerisieren.

So zeigen die aus dem Stand der Technik bekannten PSA-Anzeigen oft den unerwünschten Effekt des sogenannten "image sticking" oder "image burn", d.h. dass das in der FK-Anzeige durch vorübergehende Ansteuerung einzelner Bildpunkte (pixel) erzeugte Bild auch nach Abschalten des elektrischen Feldes in diesen Bildpunkten, oder nach Ansteuerung anderer Bildpunkte, noch sichtbar bleibt.

Dieses "image sticking" kann einerseits auftreten, wenn FK-Hostmischungen mit einem geringen VHR verwendet wird. In diesen kann die UV-Komponente des Tageslichtes oder der Hintergrundbeleuchtung unerwünschte Zerfallsreaktionen der FK-Moleküle und dadurch die Erzeugung von ionischen oder radikalischen Verunreinigungen auslösen. Diese können sich insbesondere an den Elektroden bzw. den Orientierungsschichten anreichern und dort die effektive angelegte Spannung reduzieren. Dieser Effekt ist auch bei herkömmlichen FK-Anzeigen ohne Polymerkomponente zu beobachten.

In PSA-Anzeigen wird darüber hinaus oft ein zusätzlicher "image sticking"-Effekt beobachtet, der durch die Gegenwart von unpolymerisierten RMs hervorgerufen wird. Dabei wird durch UV-Licht aus der Umgebung oder von der Hintergrundbeleuchtung eine unkontrollierte Polymerisation der Rest-RMs ausgelöst. In den geschalteten Displaybereichen wird dadurch nach mehreren Ansteuerungszyklen der Tiltwinkel verändert. Als Resultat kann eine Transmissionsänderung in den geschalteten Bereichen auftreten, während sie in den ungeschalteten Bereichen unverändert bleibt.

Es ist deshalb wünschenswert, dass die Polymerisation der RMs bei der Herstellung der PSA-Anzeige möglichst vollständig abläuft und die Anwesenheit von unpolymerisierten RMs in der Anzeige möglichst ausgeschlossen oder auf ein Minimum reduziert wird. Hierzu werden Materialien benötigt, die eine möglichst effektive und vollständige Polymerisation ermöglichen. Zudem wäre ein kontrolliertes Abreagieren dieser Restmengen wünschenswert. Dies wäre einfacher, wenn das RM schneller und effektiver polymerisiert als die bisher bekannten Materialien.

Es besteht somit immer noch ein großer Bedarf an PSA-Anzeigen, insbesondere vom VA- und OCB-Typ, sowie FK-Medien und polymerisierbaren Verbindungen zur Verwendung in solchen Anzeigen, welche die oben beschriebenen Nachteile nicht oder nur in geringem Maße zeigen und verbesserte Eigenschaften besitzen. Zudem besteht ein großer Bedarf nach PSA-Anzeigen, sowie Materialien zur Verwendung in PSA-Anzeigen, die vorteilhate Eigenschaften aufweisen, insbesondere einen hohen spezifischen Widerstand bei gleichzeitig großem Arbeitstemperaturbereich, kurze Schaltzeiten auch bei tiefen Temperaturen und niedriger Schwellenspannung, einen niedrigen pretilt-Winkel, eine Vielzahl von Graustufen, einen hohen Kontrast und einen weiten Blickwinkel ermöglichen, sowie hohe Werte der "voltage holding ratio" (VHR) nach UV-Belastung. Ebenso sollten die FK-Mischungen nicht auskristallisieren und eine hohe Tieftemperaturstabilität, auch als "LTS" (low temperature stability) bezeichnet, d.h. der Stabilität der FK-Mischung gegen spontane Auskristallisation einzelner Komponenten, aufweisen. Hierzu müssen insbesondere die polymerisierbaren Verbindungen bzw. RMs eine ausreichend gute Löslichkeit in der FK-Mischung besitzen,.

Der Erfindung liegt die Aufgabe zugrunde, neue geeignete Materialien, insbesondere RMs und diese enthaltende FK-Medien, für die Verwendung in PSA-Anzeigen bereitzustellen, die die oben angegebenen Nachteile nicht oder in geringerem Maße aufweisen, möglichst schnell und vollständig polymerisieren, eine möglichst schnelle Einstellung eines niedrigen pretilt-Winkels ermöglichen, das Auftreten von "image sticking" in der Anzeige verringern oder vermeiden, und vorzugsweise gleichzeitig sehr hohe spezifische Widerstände, niedrige Schwellenspannungen und niedrige Schaltzeiten ermöglichen. Zudem sollten die FK-Medien günstige FK-Phaseneigenschaften sowie hohe VHR- und LTS-Werte aufweisen.

Weitere Aufgabe der Erfindung ist die Bereitstellung von neuen RMs, insbesondere für optische, elektrooptische und elektronische Anwendungen, sowie von geeigneten Verfahren und Zwischenprodukten zu ihrer Herstellung.

Insbesondere liegt der Erfindung die Aufgabe zugrunde, polymerisierbare Verbindungen bereitzustellen, die einerseits nach Photopolymerisation einen größeren maximalen Pretilt erzeugen, was zu einem schnelleren Erreichen des gewünschten Pretilts und so zu deutlich verkürzten Zeiten bei der Herstellung der FK-Anzeige führt. Andererseits sollen die FK-Medien und FK-Anzeigen aber auch weitere günstige Eigenschaften, wie einen möglichst hohen VHR-Wert, aufweisen.

Diese Aufgabe wurde erfindungsgemäß gelöst durch die Bereitstellung von Materialien, Verfahren und FK-Anzeigen wie in der vorliegenden Anmeldung beschrieben. Insbesondere wurde überraschend gefunden, dass die oben beschriebenen Aufgaben teilweise oder vollständig gelöst werden können, indem man eine polymerisierbare Mischung zur Herstellung von PSA-Anzeigen verwendet, die mindestens zwei polymerisierbare Verbindungen enthält, wobei die erste polymerisierbare Verbindung als Polymerisationsinitiator für die Polymerisation der zweiten polymerisierbaren Verbindung wirkt. Dies bedeutet, dass durch die Anwesenheit der ersten polymerisierbaren Verbindung die Polymerisation der zweiten polymerisierbaren Verbindung initiiert und/oder beschleunigt wird. Dies wird erfindungsgemäß z.B. dadurch erreicht, indem man als erste polymerisierbare Verbindung eine Verbindung auswählt, die unter den gleichen Polymerisationsbedingungen eine höhere Reaktivität als die zweite polymerisierbare Verbindung aufweist, z.B. eine Verbindung enthaltend eine höhere Anzahl an polymerisierbaren Gruppen oder enthaltend polymerisierbare Gruppen mit höherer Reaktivität als die zweite Verbindung, und/oder eine Verbindung, deren Polymerisation schneller verläuft als die Polymerisation der zweiten Verbindung.

Es hat sich überraschend gezeigt, dass durch die Verwendung einer erfindungsgemäßen polymerisierbaren Mischung, bzw. die Verwendung eines FK-Mediums enthaltend eine solche polymerisierbare Mischung, in PSA-Anzeigen sowie bei deren Herstellung deutliche Vorteile gegenüber dem Stand der Technik erzielt werden können.

So kann einerseits mit einer erfindungsgemäßen polymerisierbaren Mischung der gewünschte Pretilt in PSA-Anzeigen schneller erreicht werden als bei Verwendung eines FK-Mediums, welches z.B. nur die zweite polymerisierbare Verbindung enthält. Zudem kann in vielen Fällen ein höherer VHR-Wert erreicht werden als bei Verwendung eines FK-Mediums, welches z.B. nur die erste polymerisierbare Verbindung enthält. Dies konnte in Verbindung mit einem FK-Medium mittels belichtungszeitabhängiger Pretilt-Messungen in VA-Tilt-Messzellen nachgewiesen werden.

Ein weiterer Vorteil der erfindungsgemäßen Mischung ist, dass durch die Verwendung der ersten polymerisierbaren Verbindung, welche als Polymerisationsinitiator für die zweite polymerisierbare Verbindung wirkt, auf die üblichen aus dem Stand der Technik bekannten Photoinitiatoren vollständig verzichtet werden kann.

Wie oben beschrieben, kann in der FK-Anzeige unerwünschtes image sticking auftreten, ausgelöst z.B. durch ionische oder radikalische Verunreinigungen aus dem FK-Medium, oder durch die Gegenwart von unpolymerisierten RMs. In der US 6,781,665 wird beschrieben, dass image sticking auch durch einen zu hohen Gehalt an Polymerisationsinitiator im FK-Medium verursacht werden kann. Es wird deshalb in der US 6,781,665 vorgeschlagen, die Menge des Initiators im FK-Medium zu reduzieren oder ganz auf den Initiator zu verzichten. Dies wird allerdings mit dem Nachteil einer langsameren und ggf. auch weniger vollständigen Polymerisation "erkauft", so dass der Tiltwinkel langsamer erreicht wird und die Menge an unerwünschten, unpolymerisierten Rest-RMs ansteigen kann.

Durch die Verwendung einer erfindungsgemäßen polymerisierbaren Mischung, worin die erste polymerisierbare Verbindung als Polymerisationsinitiator für die zweite polymerisierbare Verbindung wirkt, kann auf herkömmliche Photoinitiatoren vollständig verzichtet werden, während jedoch gleichzeitig die oben beschriebenen Nachteile, wie eine langsame oder unvollständige Polymerisation, vermieden werden können. Zudem wird das Aufteten von Bruchstücken vermieden, die bei der Zerfallsreaktion von herkömmlichen Polymerisationsinitiatoren üblicherweise entstehen und das FK-Medium verunreinigen können.

Darüber hinaus besitzen die erfindungsgemäßen polymerisierbaren Mischungen eine hohe Löslichkeit in den FK-Medien, so dass FK-Medien mit hohen LTS-Werten und geringerer Neigung zu Kristallisation in der Anzeige ermöglicht werden.

Diese Ergebnisse waren jedoch im Stand der Technik bisher weder beschrieben noch nahegelegt.

### (Seite 11a)

Gegenstand der Erfindung ist somit eine polymerisierbare Mischung enthaltend mindestens eine erste polymerisierbare Verbindung und mindestens eine zweite polymerisierbare Verbindung, dadurch gekennnzeichnet, dass die erste polymerisierbare Verbindung die Polymerisation der zweiten polymerisierbaren Verbindung initiiert und/oder beschleunigt, wie in Anspruch 1 definiert.

Ein weiterer Gegenstand der Erfindung ist ein FK-Medium enthaltend eine erfindungsgemäße polymerisierbare Mischung wie vor- und nachstehend beschrieben.

Ein weiterer Gegenstand der Erfindung ist die Verwendung der erfindungsgemäßen polymerisierbaren Mischungen und FK-Medien in FK-Anzeigen des PS- oder PSA- (polymer sustained alignment) Typs.

Ein weiterer Gegenstand der Erfindung ist ein FK-Medium enthaltend eine erfindungsgemäße polymerisierbare Mischung sowie eine oder mehrere

US 2009/283937 A1 und DE 102009011652 A1 beschreiben polymerisierbare Mischungen mit Phenanthrenverbindungen, offenbaren aber keine Mischungen wie in der vorliegenden Anmeldung beansprucht. zusätzliche Verbindungen, welche auch mesogen, flüssigkristallin und/oder polymerisierbar sein können.

Ein weiterer Gegenstand der Erfindung ist ein FK-Medium, enthaltend ein Polymer erhältlich durch Polymerisation der erfindungsgemäßen polymerisierbaren Mischung, sowie eine oder mehrere zusätzliche Verbindungen, welche auch mesogen, flüssigkristallin und/oder polymerisierbar sein können.

Ein weiterer Gegenstand der Erfindung ist ein FK-Medium enthaltend
- eine polymerisierbare Komponente A), enthaltend eine erfindungsgemäße polymerisierbare Mischung, sowie
- eine flüssigkristalline Komponente B), im Folgenden auch als "FK-Hostmischung" bezeichnet, enthaltend eine oder mehrere, vorzugsweise zwei oder mehr niedermolekulare (monomere und unpolymerisierbare) Verbindungen wie vor- und nachstehend beschrieben.

Ein weiterer Gegenstand der Erfindung ist ein Verfahren zur Herstellung eines FK-Mediums wie vor- und nachstehend beschrieben, indem man eine oder mehrere niedermolekulare flüssigkristalline Verbindungen, oder eine FK-Hostmischung wie vor- und nachstehend beschrieben, mit einer erfindungsgemäßen polymerisierbaren Mischung, und gegebenenfalls mit weiteren Additiven und/oder flüssigkristallinen Verbindungen, mischt.

Weitere Gegenstände der Erfindung sind die Verwendung von erfindungsgemäßen polymerisierbaren Mischungen, sowie die Verwendung von erfindungsgemäßen FK-Medien, in PS- und PSA-Anzeigen, insbesondere die Verwendung in PS- und PSA-Anzeigen enthaltend ein FK-Medium, zur Erzeugung eines Tiltwinkels im FK-Medium durch in situ-Polymerisation der erfindungsgemäßen polymerisierbaren Mischungen in der PSA-Anzeige, vorzugsweise unter Anlegen eines elektrischen oder magnetischen Feldes.

Ein weiterer Gegenstand der Erfindung ist eine FK-Anzeige enthaltend eine erfindungsgemäße polymerisierbare Mischung, oder enthaltend ein erfindungsgemäßes FK-Medium, insbesondere eine PS- oder PSA-Anzeige, besonders bevorzugt eine PSA-VA-, PSA-OCB-, PSA-IPS-, PSA-FFS-, PSA-Posi-VA- oder PSA-TN-Anzeige.

Ein weiterer Gegenstand der Erfindung ist eine FK-Anzeige des PS- oder PSA-Typs, enthaltend eine FK-Zelle mit zwei Substraten und zwei Elektroden, wobei mindestens ein Substrat lichtdurchlässig ist und mindestens ein Substrat eine oder zwei Elektroden aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer erfindungsgemäßen polymerisierbaren Mischung zwischen den Substraten der FK-Zelle im FK-Medium, vorzugsweise unter Anlegen einer elektrischen Spannung an die Elektroden.

Ein weiterer Gegenstand der Erfindung ist ein Verfahren zur Herstellung einer FK-Anzeige wie vor- und nachstehend beschrieben, indem man ein FK-Medium, enthaltend eine oder mehrere niedermolekulare flüssigkristalline Verbindungen oder eine FK-Hostmischung wie vor- und nachstehend beschrieben sowie eine erfindungsgemäße polymerisierbare Mischung, in eine FK-Zelle mit zwei Substraten und zwei Elektroden wie vor- und nachstehend beschrieben füllt, und die polymerisierbare Mischung, vorzugsweise unter Anlegen einer elektrischen Spannung an die Elektroden, polymerisiert.

Die erfindungsgemäßen PS- und PSA-Anzeigen weisen zwei Elektroden, vorzugsweise in Form von transparenten Schichten, auf, wobei diese auf einem oder beiden der Substrate aufgebracht sind, die die FK-Zelle bilden. Dabei ist entweder jeweils eine Elektrode auf je einem der beiden Substrate aufgebracht, wie zum Beispiel in erfindungsgemäßen PSA-VA-, PSA-OCB- oder PSA-TN-Anzeigen, oder beide Elektroden sind auf nur einem der beiden Substrate aufgebracht, während das andere Substrat keine Elektrode aufweist, wie zum Beispiel in erfindungsgemäßen PSA-IPS-, PSA-Posi-VA- oder PSA-FFS-Anzeigen.

Vor- und nachstehend gelten folgende Bedeutungen:

Die Begriffe "Tilt" und "Tiltwinkel" beziehen sich auf eine gekippte oder geneigte Orientierung der FK-Moleküle eines FK-Mediums relativ zu den Oberflächen der Zelle in einer FK-Anzeige (hier vorzugsweise einer PS- oder PSA-Anzeige). Der Tiltwinkel bezeichnet dabei den durchschnittlichen Winkel (<90°) zwischen den Moleküllängsachsen der FK-Moleküle (FK-Direktor) und der Oberfläche der planparallelen Trägerplatten, welche die FK-Zelle bilden. Ein niedriger Wert des Tiltwinkels (d.h. eine große Abweichung vom 90°-Winkel) entspricht dabei einem großen Tilt. Eine geeignete Methode zur Messung des Tiltwinkels findet sich in den Beispielen. Soweit nicht anders angegeben, beziehen sich vor- und nachstehend offenbarte Werte des Tiltwinkels auf diese Messmethode.

Der Begriff "mesogene Gruppe" ist dem Fachmann bekannt und in der Literatur beschrieben, und bedeutet eine Gruppe, die durch die Anisotropie ihrer anziehenden und abstoßenden Wechselwirkungen wesentlich dazu beiträgt, in niedermolekularen oder polymeren Substanzen eine Flüssigkristall(FK-)Phase hervorzurufen. Verbindungen enthaltend mesogene Gruppen (mesogene Verbindungen) müssen nicht unbedingt selbst eine FK-Phase aufweisen. Es ist auch möglich, dass mesogene Verbindungen FK-Phasenverhalten nur nach Vermischung mit anderen Verbindungen und/oder nach Polymerisation zeigen. Typische mesogene Gruppen sind beispielsweise starre stäbchen- oder scheibchenförmige Einheiten. Ein Überblick über die im Zusammenhang mit mesogenen bzw. FK-Verbindungen verwendeten Begriffe und Definitionen findet sich in Pure Appl. Chem. 73(5), 888 (2001) und C. Tschierske, G. Pelzl, S. Diele, Angew. Chem. 2004, 116, 6340-6368.

Der Begriff "Abstandsgruppe" (engl. "spacer" oder "spacer group"), vor- und nachstehend auch als "Sp" bezeichnet, ist dem Fachmann bekannt und in der Literatur beschrieben, siehe beispielsweise Pure Appl. Chem. 73(5), 888 (2001) und C. Tschierske, G. Pelzl, S. Diele, Angew. Chem. 2004, 116, 6340-6368. Falls nicht anders angegeben, bezeichnet der Begriff "Abstandsgruppe" bzw. "Spacer" vor- und nachstehend eine flexible Gruppe, die in einer polymerisierbaren mesogenen Verbindung die mesogene Gruppe und die polymerisierbare(n) Gruppe(n) miteinander verbindet.

Der Begriff "reaktives Mesogen" oder "RM" bezeichnet eine Verbindung enthaltend eine mesogene Gruppe und eine oder mehrere funktionelle Gruppen, die zur Polymerisation geeignet sind (auch als polymerisierbare Gruppe oder Gruppe P bezeichnet).

Die Begriffe "niedermolekulare Verbindung" und "unpolymerisierbare Verbindung" bezeichnen, üblicherweise monomere, Verbindungen, die keine funktionelle Gruppe aufweisen, welche zur Polymerisation unter den üblichen dem Fachmann bekannten Bedingungen, insbesondere unter den zur Polymerisation der RMs verwendeten Bedingungen, geeignet ist.

"Halogen" bedeutet F, Cl, Br oder I.

Die erste polymerisierbare Verbindung enthält ein Ringsystem enthaltend einen oder mehrere carbo- oder heterocyclische Reste sowie einen oder mehrere polymerisierbare Reste, welche mit dem Ringsystem entweder über eine Abstandsgruppe oder direkt (d.h. nicht über eine Abstandsgruppe) verbunden sind.

Die zweite polymerisierbare Verbindung enthält vorzugsweise ein von der ersten polymerisierbaren Verbindung verschiedenes Ringsystem enthaltend einen oder mehrere carbo- oder heterocyclische Reste sowie einen oder mehrere polymerisierbare Reste, welche mit dem Ringsystem entweder über eine Abstandsgruppe oder direkt (d.h. nicht über eine Abstandsgruppe) verbunden sind.

In der ersten und der zweiten polymerisierbaren Verbindung können die einzelnen Ringe in dem Ringsystem entweder direkt oder über Brückengruppen miteinander verknüpft sein oder anelliert sein. Das Ringsystem enthält vorzugsweise 6 bis 30 C-Atome.

Die erste polymerisierbare Verbindung enthält einen divalenten Rest ausgewählt aus der Gruppe bestehend aus den Formeln A, B, C und D: 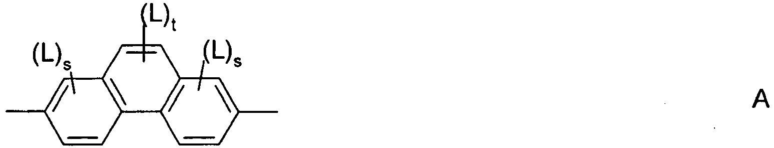 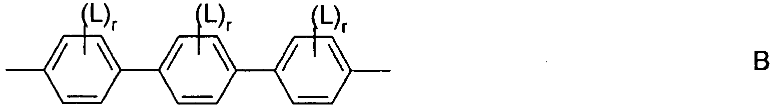 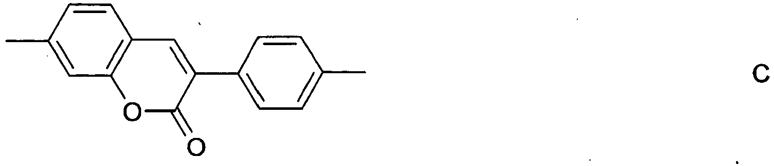 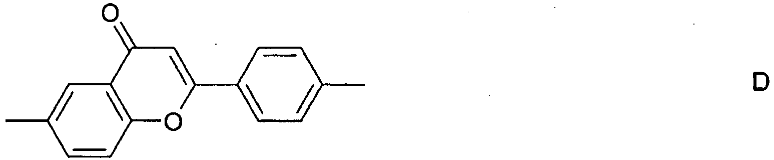 worin die einzelnen Reste folgende Bedeutung besitzen
- L: bei jedem Auftreten gleich oder verschieden F, Cl, CN, oder geradkettiges oder verzweigtes, optional ein- oder mehrfach fluoriertes Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen,
- r: 0, 1, 2, 3 oder 4,
- s: 0, 1, 2 oder 3,
- t: 0, 1 oder 2.

Weiterhin enthält die erste polymerisierbare Verbindung vorzugsweise neben dem Rest der Formel A, B, C oder D einen oder mehrere, vorzugsweise zwei oder mehr als zwei, polymerisierbare Reste, welche mit dem divalenten Rest der Formel A, B, C oder D entweder über eine Abstandsgruppe oder direkt (d.h. nicht über eine Abstandsgruppe) verbunden sind.

Ein weiterer Gegenstand der Erfindung ist eine polymerisierbare Mischung enthaltend mindestens eine erste polymerisierbare Verbindung und mindestens eine zweite polymerisierbare Verbindung, wobei die erste polymerisierbare Verbindung einen Rest ausgewählt aus der Gruppe bestehend aus den Formeln A, B, C und D wie vor- und nachstehend beschrieben enthält.

Die in der ersten und der zweiten polymerisierbaren Verbindung enthaltenen polymerisierbaren Resten sind vorzugsweise identisch.

Die in der ersten und der zweiten polymerisierbaren Verbindung enthaltenen polymerisierbaren Resten sind vorzusgweise ausgewählt aus der Gruppe bestehend aus Vinyloxy-, Acrylat-, Methacrylat-, Fluoracrylat-, Chloracrylat-, Oxetan- und Epoxygruppen.

Vorzugsweise enthält die erfindungsgemäße polymerisierbare Mischung, abgesehen von der ersten polymerisierbaren Verbindung, keinen Polymerisationsinitiator (d.h. keinen zusätzlichen Polymerisationsinitiator für die Polymerisation der ersten und/oder zweiten polymerisierbaren Verbindung).

Die erste polymerisierbare Verbindungen ist ausgewählt aus der Gruppe bestehend aus folgenden Formeln: 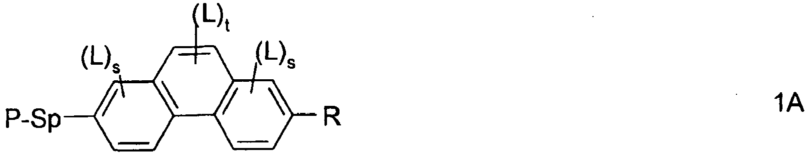 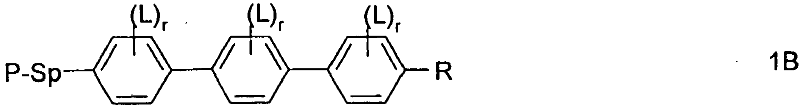 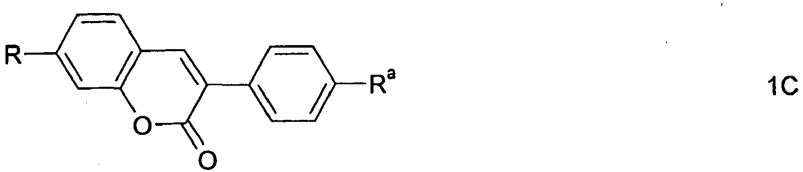 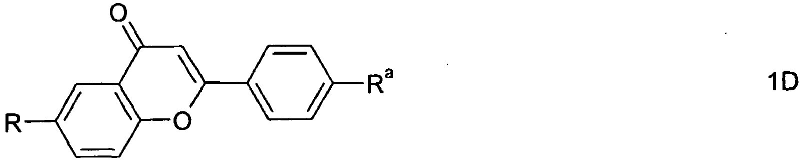 worin L, r, s und t die in Formel A angegebene Bedeutung besitzen,
- P: bei jedem Auftreten gleich oder verschieden eine polymerisierbare Gruppe,
- Sp: bei jedem Auftreten gleich oder verschieden eine Abstandsgruppe oder eine Einfachbindung,
- R und R^{a}: jeweils unabhängig voneinander P-Sp-, H, F, Cl, Br, I, -CN,-NO₂, -NCO, -NCS, -OCN, -SCN, SF₅, geradkettiges oder verzweigtes Alkyl mit 1 bis 25 C-Atomen, worin auch eine oder mehrere nicht benachbarte CH₂-Gruppen jeweils unabhängig voneinander durch Arylen, -C(R⁰)=C(R⁰⁰)-, -C≡C-, -N(R⁰)-, -O-,-S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN oder P-Sp- ersetzt sein können, oder Aryl oder Heteroaryl, vorzugsweise mit 2 bis 25 C-Atomen, welches auch zwei oder mehr anellierte Ringe enthalten kann und welches optional durch L' ein- oder mehrfach substituiert ist, wobei in Formel 1C und 1 D mindestens einer der Reste R und R^{a} P-Spbedeutet,
- L': bei jedem Auftreten gleich oder verschieden P-Sp-, H, OH, CH₂OH, Halogen, SF₅, NO₂, eine Kohlenstoffgruppe oder Kohlenwasserstoffgruppe,
- R⁰, R⁰⁰: jeweils unabhängig voneinander und bei jedem Auftreten gleich oder verschieden H oder Alkyl mit 1 bis 12 C-Atomen,
bedeuten.

Besonders bevorzugt sind Verbindungen der Formeln 1A und 1 B, worin R P-Sp bedeutet.

Weiterhin bevorzugt sind Verbindungen der Formeln 1C und 1 D, worin beide Reste R und R^{a} P-Sp- bedeuten.

Die zweite polymerisierbare Verbindung ist vorzugsweise ausgewählt aus der Gruppe bestehend aus folgenden Formeln: 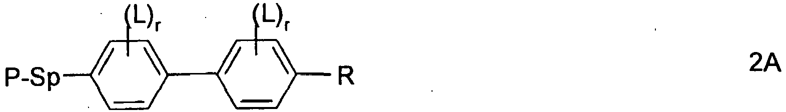 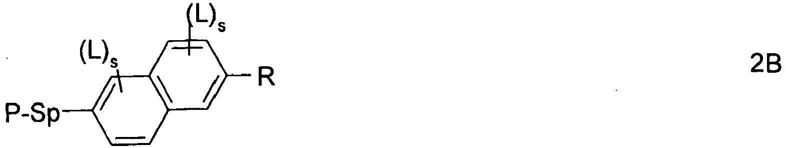 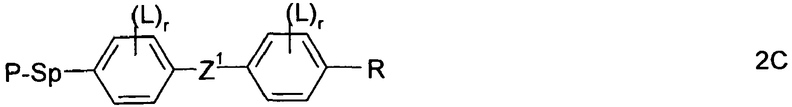 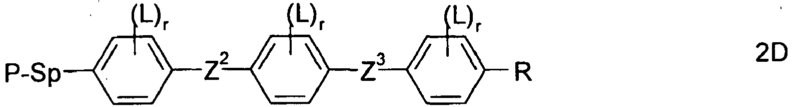 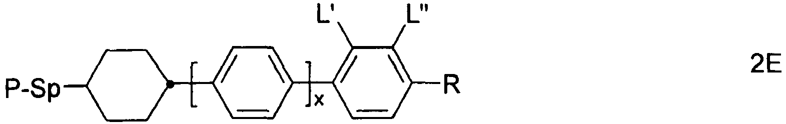 worin P, Sp, R, L und r die in Formel 1A angegebene Bedeutung besitzen,
- Z¹: -O-, -CO-, -CO-O, -O-CO-, -C(R^{y}R^{z})-, oder -CF₂CF₂-,
- R^{y} und R^{z}: jeweils unabhängig voneinander H, F, CH₃ oder CF₃,
- Z² und Z³: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
- L' und L": jeweils unabhängig voneinander H, F oder Cl, und
- x: 0 oder 1,
bedeuten.

Die polymerisierbare Gruppe P ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen

Bevorzugte Gruppen P sind ausgewählt aus der Gruppe bestehend aus CH₂=CW¹-CO-O-, CH₂=CW¹-CO-, 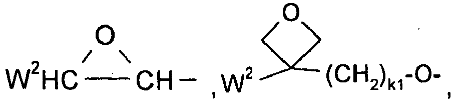 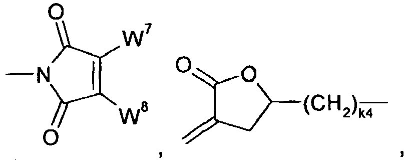 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-, und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit einem oder mehreren, von P-Sp- verschiedenen Resten L wie oben definiert substiuiert ist, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Besonders bevorzugte Gruppen P sind ausgewählt aus der Gruppe bestehend aus CH₂=CW¹-CO-O-, CH₂=CW¹-CO-, 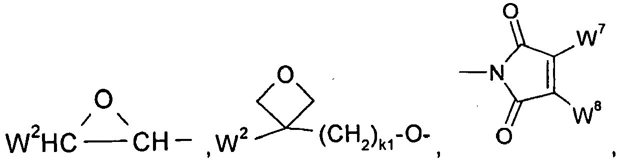 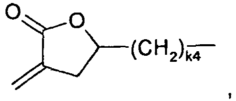 CH₂=CW²-O-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Ganz besonders bevorzugte Gruppen P sind sind ausgewählt aus der Gruppe bestehend aus CH₂=CW¹-CO-O insbesondere CH₂=CH-CO-O-, CH₂=C(CH₃)-CO-O- und CH₂=CF-CO-O-, ferner CH₂=CH-O-, (CH₂=CH)₂CH-O-CO-, (CH₂=CH)₂CH-O-, 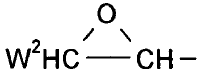 und

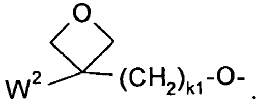

Weitere ganz besonders bevorzugte Gruppen P sind ausgewählt aus der Gruppe bestehend aus Vinyloxy-, Acrylat-, Methacrylat-, Fluoracrylat-, Chloracrylat-, Oxetan- und Epoxygruppen, und bedeuten besonders bevorzugt eine Acrylat- oder Methacrylatgruppe.

Bevorzugte Abstandsgruppen Sp sind ausgewählt aus der Formel Sp"-X", so dass der Rest "P-Sp-" der Formel "P-Sp"-X"-" entspricht, wobei
- Sp": Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-, -NH-, -N(R⁰)-, -Si(R⁰⁰R⁰⁰⁰)-, -CO-, -CO-O-, -O-CO-, -O-CO-O-, -S-CO-, -CO-S-, -N(R⁰⁰)-CO-O-, -O-CO-N(R⁰⁰)-, -N(R⁰⁰)-CO-N(R⁰⁰)-, -CH=CH- oder -C≡C- ersetzt sein können, dass O- und/oder S-Atome nicht direkt miteinander verknüpft sind,
- X": -O-, -S-, -CO-, -CO-O-, -O-CO-, -O-CO-O-, -CO-N(R⁰⁰)-, -N(R⁰⁰)-CO-, -N(R⁰⁰)-CO-N(R⁰⁰)-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-CO-O-, -O-CO-CH=CH- oder eine Einfachbindung bedeutet,
- R⁰⁰ und R⁰⁰⁰: jeweils unabhängig voneinander H oder Alkyl mit 1 bis 12 C-Atomen bedeuten, und
- Y² und Y³: jeweils unabhängig voneinander H, F, Cl oder CN bedeuten.
- X': ist vorzugsweise -O-, -S -CO-, -COO-, -OCO-, -O-COO-, -CO-NR⁰-,-NR⁰-CO-, -NR⁰-CO-NR⁰- oder eine Einfachbindung.

Typische Abstandsgruppen Sp" sind beispielsweise -(CH₂)ₚ₁-, -(CH₂CH₂O)_{q1}-CH₂CH₂-, -CH₂CH₂-S-CH₂CH₂-, -CH₂CH₂-NH-CH₂CH₂- oder -(SiR⁰⁰R⁰⁰⁰-O)ₚ₁-, worin p1 eine ganze Zahl von 1 bis 12 ist, q1 eine ganze Zahl von 1 bis 3 ist, und R⁰⁰ und R⁰⁰⁰ die oben angegebenen Bedeutungen besitzen.

Besonders bevorzugte Gruppen -Sp"-X"- sind -(CH₂)ₚ₁-, -(CH₂)ₚ₁-O-, -(CH₂)ₚ₁-O-CO-, -(CH₂)ₚ₁-O-CO-O-, worin p1 und q1 die oben angebene Bedeutung haben.

Besonders bevorzugte Gruppen Sp" sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

In einer weiteren bevorzugten Ausführungsform der Erfindung bedeutet P einen Rest mit zwei oder mehreren polymerisierbaren Gruppen (multifunktionelle polymerisierbare Reste). Geeignete Reste dieses Typs, sowie diese enthaltende polymerisierbare Verbindungen und ihre Herstellung sind beispielsweise in US 7,060,200 B1 oder US 2006/0172090 A1 beschrieben. Besonders bevorzugt sind multifunktionelle polymerisierbare Reste ausgewählt aus folgenden Formeln

-X-alkyl-CHP¹-CH₂-CH₂P² I*a

-X-alkyl-C(CH₂P¹)(CH₂P²)-CH₂P³ I*b

-X-alkyl-CHP¹CHP²-CH₂P³ I*c

-X-alkyl-C(CH₂P¹)(CH₂P²)-CₐₐH₂ₐₐ₊₁ I*d

-X-alkyl-CHP¹-CH₂P² I*e

-X-alkyl-CHP¹P² I*f

-X-alkyl-CP¹P²-CₐₐH₂ₐₐ₊₁ I*g

-X-alkyl-C(CH₂P¹)(CH₂P²)-CH₂OCH₂-C(CH₂P³)(CH₂P⁴)CH₂P⁵ I*h

-X-alkyl-CH((CH₂)ₐₐP¹)((CH₂)_{bb}P²) I*i

-X-alkyl-CHP¹CHP²-CₐₐH₂ₐₐ₊₁ I*k

-X'-alkyl-C(CH₃)(CH₂P¹)(CH₂P²) I*m

worin
- alkyl: eine Einfachbindung oder geradkettiges oder verzweigtes Alkylen mit 1 bis 12 C-Atomen bedeutet, worin eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-,-CO-, -CO-O-, -O-CO-, -O-CO-O- so ersetzt sein können, dass O-und/oder S-Atome nicht direkt miteinander verknüpft sind, und worin auch ein oder mehrere H-Atome durch F, Cl oder CN ersetzt sein können, wobei R⁰⁰ und R⁰⁰⁰ die oben angegebene Bedeutung haben,
- aa und bb: jeweils unabhängig voneinander 0, 1, 2, 3, 4, 5 oder 6 bedeuten,
- X: eine der für X' angegebenen Bedeutungen besitzt, und
- P¹⁻⁵: jeweils unabhängig voneinander eine der für P angegebenen Bedeutungen besitzen.

Der von P-Sp- verschiedene Rest R oder R^{a} in den Formeln 1A-1D und 2A-2E sowie deren Unterformeln ist vorzugsweise ausgewählt aus geradkettigem oder verzweigtem Alkyl mit 1 bis 25 C-Atomen, worin auch eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-, -CO-,-CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I oder CN ersetzt sein können.

Besonders bevorzugt bedeutet der von P-Sp- verschiedenene Rest R oder R^{a} in den Formeln 1A-1 D und 2A-2E sowie deren Unterformeln Alkyl mit 1 bis 12, vorzugsweise 5 bis 12 C-Atomen, Alkoxy, mit 1 bis 12 C-Atomen oder Alkenyl mit 2 bis 11 C-Atomen bedeuten, wobei in allen diesen Resten auch ein oder mehrere H-Atome durch F ersetzt sein können.

Ganz besonders bevorzugte Verbindungen der Formeln 1A-1 D sind ausgewählt aus folgenden Unterformeln: 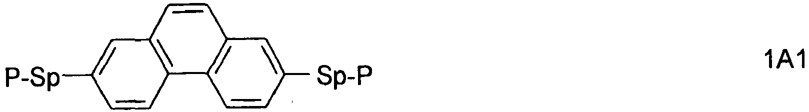 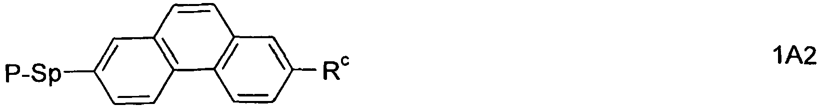 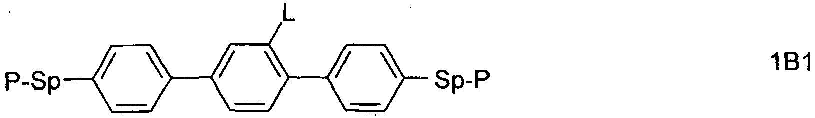 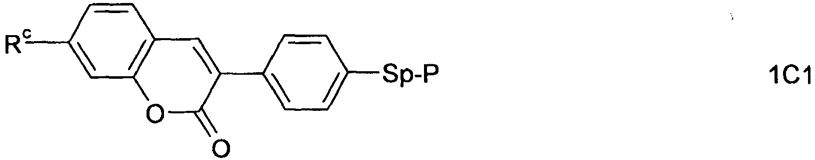 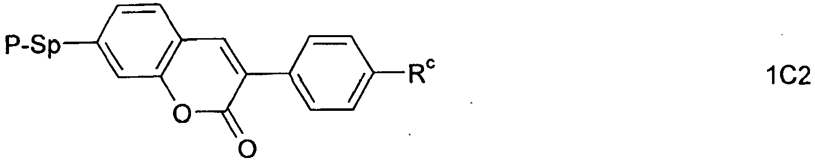 worin P, Sp und L die in Formel A angegebene Bedeutung besitzen, und R^{c} eine der vor- und nachstehend für R angegebenen, von P-Spverschiedenen Bedeutungen besitzt.

Besonders bevorzugt sind Verbindungen der Formeln 1A-1 D sowie deren Unterformeln, worin P Acrylat oder Methacrylat bedeutet.

Weiterhin bevorzugt sind Verbindungen der Formeln 1A-1D sowie deren Unterformeln, worin alle in der Verbindung vorhandenen Reste Sp eine Einfachbindung bedeuten.

Weiterhin bevorzugt sind Verbindungen der Formeln 1A-1D sowie deren Unterformeln, welche zwei Reste P-Sp enthalten, und worin einer der Reste Sp eine Einfachbindung bedeutet und der andere der Reste Sp von einer Einfachbindung verschieden ist.

Weiterhin bevorzugt sind Verbindungen der Formeln 1A-1 D sowie deren Unterformeln, worin der von einer Einfachbindung verschiedene Rest Sp-(CH₂)ₚ₁-, -(CH₂)ₚ₁-O-, -(CH₂)ₚ₁-O-CO- oder -(CH₂)ₚ₁-O-CO-O- bedeutet, worin p1 eine ganze Zahl von 1 bis 12, vorzugsweise von 1 bis 6, besonders bevorzugt 1, 2 oder 3 bedeutet, wobei diese Gruppen so mit P verknüpft sind, dass O-Atome nicht direkt benachbart sind.

Weiterhin bevorzugt sind Verbindungen der Formel 1B1, worin L F ist.

Ganz besonders bevorzugte Verbindungen der Formeln 2A-2E sind ausgewählt aus folgenden Unterformeln: 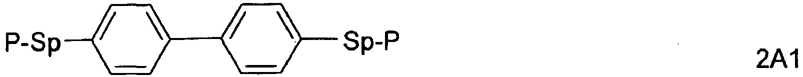 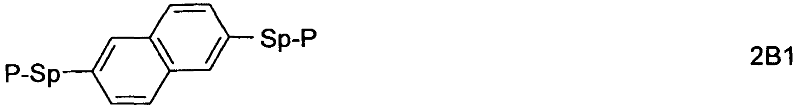 worin P, Sp und L die in Formel A angegebene Bedeutung besitzen.

Weiterhin bevorzugt sind Verbindungen der Formeln 2A-2E sowie deren Unterformeln, worin P Acrylat oder Methacrylat bedeutet.

Weiterhin bevorzugt sind Verbindungen der Formeln 2A-2E sowie deren Unterformeln, worin alle in der Verbindung vorhandenen Reste Sp eine Einfachbindung bedeuten.

Ferner bevorzugt sind Verbindungen der Formeln 2A-2E sowie deren Unterformeln, welche zwei Reste P-Sp enthalten, und worin einer der Reste Sp eine Einfachbindung bedeutet und der andere der Reste Sp von einer Einfachbindung verschieden ist..

Weiterhin bevorzugt sind Verbindungen der Formeln 2A-2E sowie deren Unterformeln, worin der von einer Einfachbindung verschiedene Rest Sp - (CH₂)ₚ₁-, -(CH₂)ₚ₁-O-, -(CH₂)ₚ₁-O-CO- oder -(CH₂)ₚ₁-O-CO-O- bedeutet, worin p1 eine ganze Zahl von 1 bis 12, vorzugsweise von 1 bis 6, besonders bevorzugt 1, 2 oder 3 bedeutet, wobei diese Gruppen so mit P verknüpft sind, dass O-Atome nicht direkt benachbart sind.

Die polymerisierbaren Verbindungen können in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart, hergestellt werden. Besonders geeignete und bevorzugte Verfahren zur Herstellung von polymerisierbaren Verbindungen der Formeln 1A-1 D sind in folgenden Schemata beispielhaft dargestellt.

### Verbindungen der Formel 1A: Siehe Schema 1-3

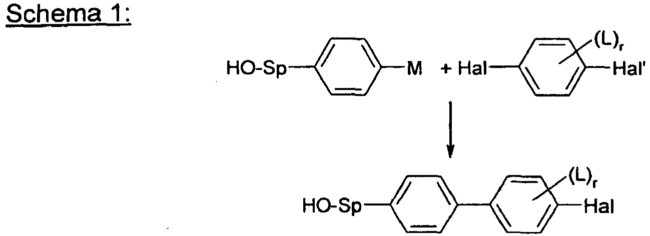

Kreuzkupplungsreaktion von Dihalogenaromaten mit Arylmetallverbindungen (Hal, Hal' gleiches oder verschiedenes Halogen). 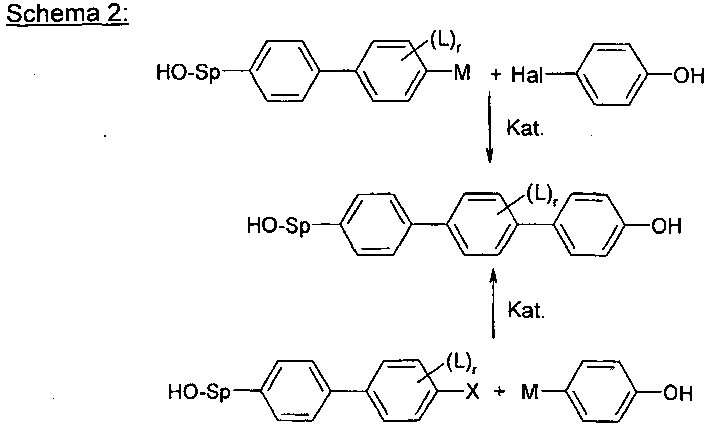 Übergangsmetallkatalysierte Kreuzkupplung (Hal = Cl, Br, I, OTf) mit Arylmetallverbindungen, beispielsweise Suzuki-Kupplung (M = B(OH)₂, B(OR)₂), Negishi- (M = ZnHal) oder Kumada-Kupplung (M = MgHal).

Herstellung der Arylmetallverbindungen aus Arylhalogeniden, entweder direkt durch Umsetzung mit Mg zu Grignardverbindungen, oder Hal-Li-Austausch mit BuLi und anschließende Transmetallierung mit Zn- oder Mg-Salzen. Umsetzung der Li-Verbindungen mit Trialkylboraten liefert Boronsäureester, aus denen durch Hydrolyse die freien Boronsäuren erhalten werden. Die freien OH-Gruppen können ggf. Schutzgruppen tragen. 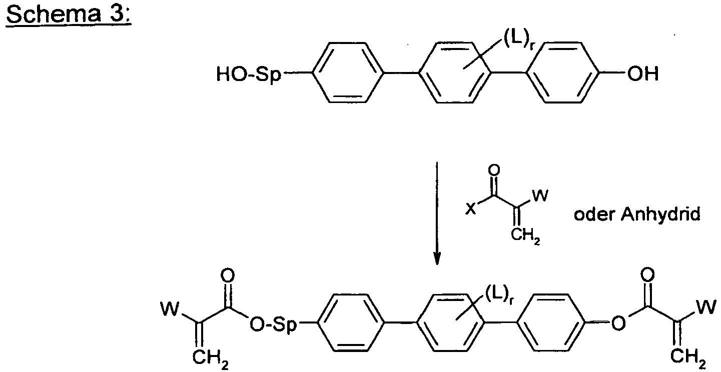 (W = H oder CH₃; X = Cl oder OH; L, r, Sp wie in Formel 2A definiert)

Veresterung mit (Meth)acrylsäurechlorid oder (Meth)acrylsäureanhydrid in Gegenwart einer Base und ggf. DMAP, oder Veresterung mit (Meth)acrylsäure in Gegenwart eines wasserentziehenden Mittels, z.B. nach Steglich mit DCC.

### Verbindungen der Formel 1 B:

Verbindungen der Formel 1 B, worin P Methacrylat bedeutet (Phenanthryl-2,7-dimethacrylat) und ihre Herstellung sind in JP 63-233952 beschrieben.

### Verbindungen der Formel 1C, 1D: Siehe Schema 4-8

### (Sg = Schutzgruppe oder H, Sp, Sp" = Sp wie in Formel 1C definiert)

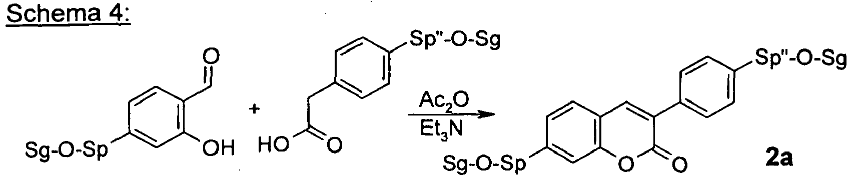

Eln allgemeiner Zugang zu Cumarinen ist z.B. durch Kondensation von Salicylaldehyden mit Phenylessigsäurederivaten im Sinne einer Perkin-Reaktion gemäß Schema 4 gegeben, wie sie beispielsweise für Hydroxyphenylcumarine in S. Kirkiacharian et al., Annales Pharmaceutiques Francaises (2003), 61(1), 51-56 beschrieben ist.

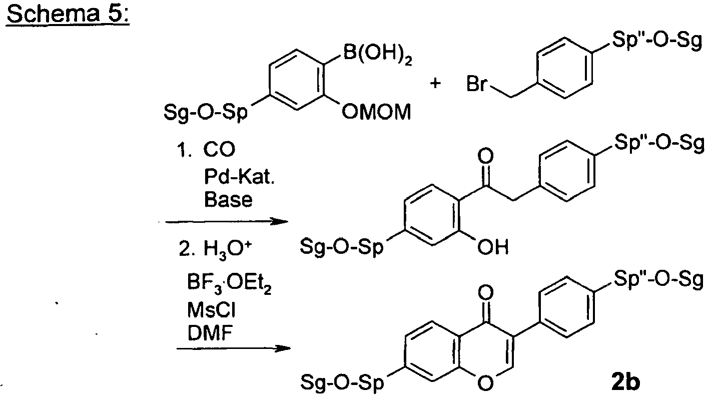

Isoflavone sind nach R. J. Bass, Chem. Comm. 1976, 78, durch Behandeln von Benzylarylketonen mit Bortrifluoridetherat in Gegenwart von Mesylchlorid in Dimethylformamid zugänglich. Die Ketone selbst können in einfacher Weise durch carbonylierende Suzuki-Reaktion nach A. Suzuki et al. J. Org. Chem. 1998, 63, 4762 hergestellt werden.

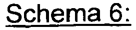

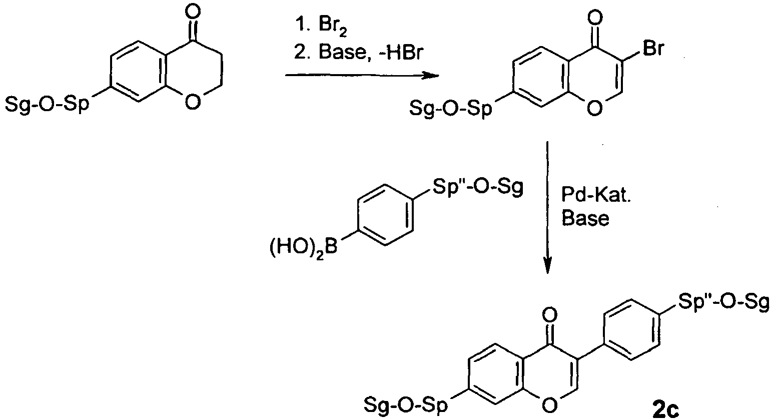

Alternativ können Isoflavone auch nach K.M.Dawood, Tetrahedron 2007, 63, 9642 aus Chromanonen über die entsprechenden Bromisoflavone durch Suzuki-Reaktion erhalten werden.

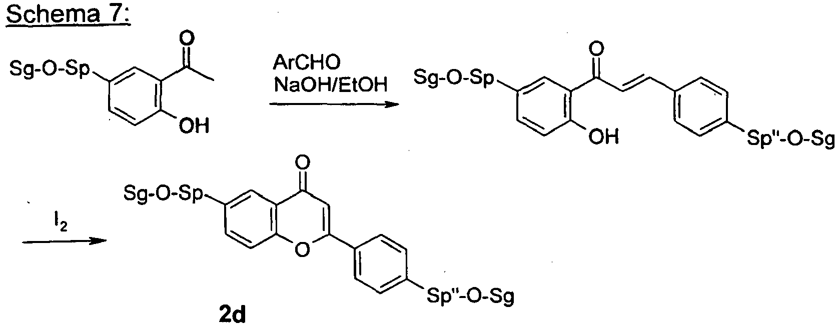

Flavone werden z.B. durch Baker-Venkataraman-Umlagerung hergestellt (W. Baker, Nature 1952, 169,706) oder sie lassen sich gemäß E.U.Mughal et al., Bioorg. Med. Chem. 2006, 14, 4704 aus o-Acylphenolen durch Aldolkondensation mit aromatischen Aldehyden und nachfolgende oxidative Zyklisierung darstellen. 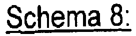 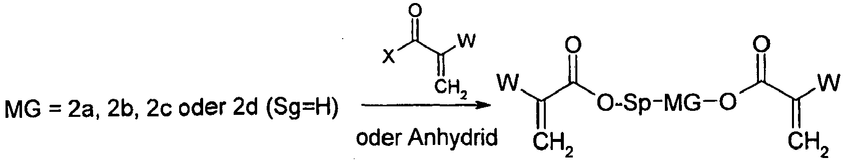 (W = H oder CH₃; X = Cl oder OH; L, r, Sp wie in Formel 2C definiert)

Veresterung von 2a, 2b, 2c, 2d (worin Sg = H) mit (Meth)acrylsäurechlorid oder (Meth)acrylsäureanhydrid in Gegenwart einer Base und ggf. DMAP, oder Veresterung mit (Meth)acrylsäure in Gegenwart eines wasserentziehenden Mittels, z.B. nach Steglich mit DCC.

Zur Herstellung von PSA-Anzeigen werden die polymerisierbaren Verbindungen im FK-Medium zwischen den Substraten der FK-Anzeige unter Anlegen einer Spannung durch in-situ-Polymerisation polymerisiert oder vernetzt (falls eine Verbindung zwei oder mehr polymerisierbare Gruppen enthält). Die Polymerisation kann in einem Schritt durchgeführt werden. Es ist auch möglich, zunächst in einem ersten Schritt die Polymerisation unter Anlegen einer Spannung durchzuführen, um einen pretilt-Winkel zu erzeugen, und anschließend in einem zweiten Polymerisationsschritt ohne anliegende Spannung die im ersten Schritt nicht abreagierten Verbindungen zu polymerisieren bzw. zu vernetzen ("end curing").

Geeignete und bevorzugte Polymerisationsmethoden sind beispielsweise die thermische oder Photopolymerisation, vorzugsweise Photopolymerisation, insbesondere UV-Photopolymerisation.

Die erfindungsgemäßen polymerisierbaren Mischungen eignen sich insbesondere für die Polymerisation ohne weiteren Initiator, was erhebliche Vorteile mit sich bringt, wie beispielsweise geringere Materialkosten und insbesondere eine geringere Verunreinigung des FK-Mediums durch mögliche Restmengen des Initiators oder dessen Abbauprodukte. Die Polymerisation kann ohne Zusatz eines solchen Initiators erfolgen. Somit enthält das FK-Medium in einer bevorzugten Ausführungsform keinen Polymerisationsinitiator (abgesehen von der ersten polymerisierbaren Verbindung, welche als Initiator für die zweite polymerisierbare Verbindung wirkt).

Die polymerisierbare Komponente A) oder das FK-Medium können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind zum Beispiel die kommerziell erhältlichen Stabilisatoren der Serie Irganox® (Ciba AG), wie beispielsweise Irganox® 1076. Falls Stabilisatoren eingesetzt werden, beträgt deren Anteil, bezogen auf die Gesamtmenge der RMs beziehungsweise der polymerisierbaren Komponente A), vorzugsweise 10 - 10,000 ppm, besonders bevorzugt 50 - 500 ppm.

Die Gesamtkonzentration aller polymerisierbarer Verbindungen, vorzugsweise ausgewählt aus den oben genannten Formeln 1A-1D und 2A-2E und deren Unterformeln, im erfindungsgemäßen FK-Medium beträgt vorzugsweise ≤ 9.0 Gew.-%, ferner bevorzugt ≤ 5,0 Gew.-%, besonders bevorzugt ≤ 3,0 Gew.-%, ganz besonders bevorzugt ≤ 1,5 Gew.-%, insbesondere ≤ 0,5 Gew.-%.

Die Konzentration der ersten polymerisierbaren Verbindung, insbesondere ausgewählt aus den Formeln 1A-1D, im erfindungsgemäßen FK-Medium beträgt vorzugsweise 0,01 bis 4,0 Gew.-%, ferner bevorzugt 0,01 bis 1,0 Gew.-%, besonders bevorzugt 0,01 bis 0,1 Gew.-%, ganz besonders bevorzugt 0,01 bis 0,05 Gew.-%.

Die Konzentration der zweiten polymerisierbaren Verbindung, insbesondere ausgewählt aus den Formeln 2A-2E, im erfindungsgemäßen FK-Medium beträgt vorzugsweise 0,1 bis 5,0 Gew.-%, ferner bevorzugt 0,1 bis 2,0 Gew.-%, besonders bevorzugt 0,1 bis 1,0 Gew.-%, ganz besonders bevorzugt 0,1 bis 0,5 Gew.-%.

Ferner bevorzugt sind FK-Medien, worin die polymerisierbare Komponente (Komponente A) ausschließlich erfindungsgemäße polymerisierbare Verbindungen ausgewählt aus den Formeln 1A-1 D und 2A-2E enthält.

Ferner bevorzugt sind FK-Medien, worin Komponente B) eine FK-Verbindung oder eine FK-Mischung ist, die eine nematische Flüssigkristallphase aufweist.

Ferner bevorzugt sind achirale erfindungsgemäße polymerisierbare Verbindungen, sowie FK-Medien worin die Verbindungen der Komponente A) und/oder B) ausschließlich aus der Gruppe bestehend aus achiralen Verbindungen ausgewählt sind.

Ferner bevorzugt sind FK-Medien, worin die polymerisierbare Mischung bzw. Komponente A) eine oder mehrere polymerisierbare Verbindungen mit einer polymerisierbaren Gruppe (monoreaktiv) und eine oder mehrere polymerisierbare Verbindungen mit zwei oder mehr, vorzugsweise zwei polymerisierbaren Gruppen (di- oder multireaktiv) enthält.

Ferner bevorzugt sind PSA-Anzeigen und FK-Medien, worin die polymerisierbare Mischung bzw. Komponente A) ausschließlich polymerisierbare Verbindungen mit zwei polymerisierbaren Gruppen (direaktiv) enthält.

Der Anteil der polymerisierbaren Mischung bzw. Komponente A) in den erfindungsgemäßen FK-Medien ist vorzugsweise < 5%, besonders bevorzugt < 1%, ganz besonders bevorzugt < 0.5 %.

Der Anteil der flüssigkristallinen Komponente bzw. Komponente B) in den erfindungsgemäßen FK-Medien ist vorzugsweise > 95%, besonders bevorzugt > 99%.

Die polymerisierbaren Mischungen können auch zusätzlich zu den oben genannten Verbindungen eine oder mehrere weitere polymerisierbare Verbindungen (Comonomere) enthalten, welche vorzugsweise mesogen oder flüssigkristallin sind. Geeignete und bevorzugte mesogene Comonomere, besonders für die Verwendung in PSA-Anzeigen, sind beispielsweise ausgewählt aus den folgenden Formeln: 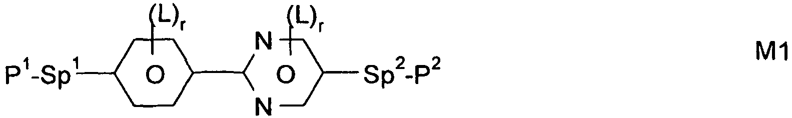 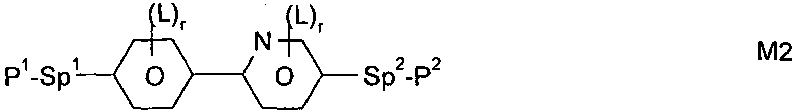 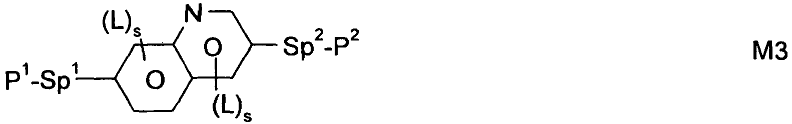 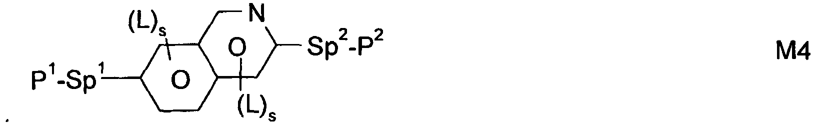 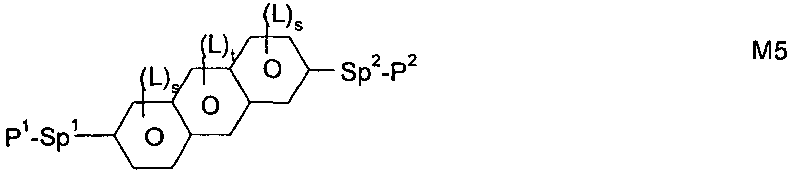 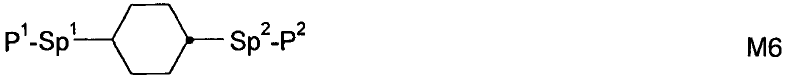 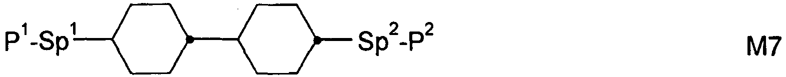 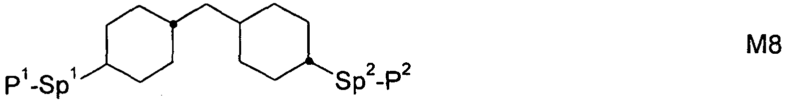 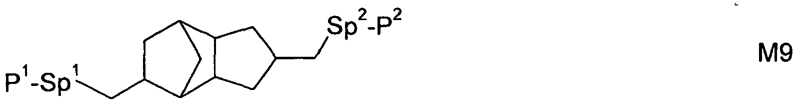 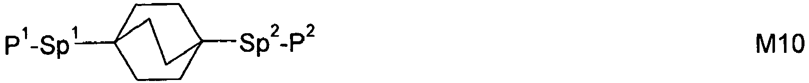 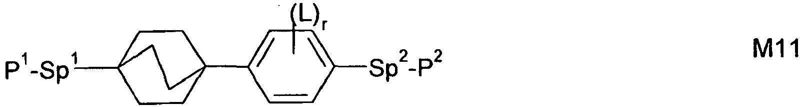 worin die einzelnen Reste folgende Bedeutung besitzen:
- P¹ und P²: jeweils unabhängig voneinander eine polymerisierbare Gruppe, vorzugsweise mit einer der vor- und nachstehend für P angegebenen Bedeutungen, besonders bevorzugt eine Acrylat-, Methacrylat-, Fluoracrylat-, Oxetan-, Vinyloxy- oder Epoxygruppe,
- Sp¹ und Sp²: jeweils unabhängig voneinander eine Einfachbindung oder eine Abstandsgruppe, vorzugsweise mit einer der vor- und nachstehend für Sp angegebenen Bedeutungen, und besonders bevorzugt -(CH₂)ₚ₁-, -(CH₂)ₚ₁-O-, -(CH₂)ₚ₁-CO-O- oder -(CH₂)ₚ₁-O-CO-O- bedeuten, worin p1 eine ganze Zahl von 1 bis 12 ist, und wobei in den letztgenannten Gruppen die Verknüpfung zur benachbarten Ring über das O-Atom erfolgt,
wobei auch einer oder mehrere der Reste P¹-Sp¹- und P²-Sp²- R^{aa} bedeuten können, mit der Maßgabe dass mindestens einer der vorhandenen Reste P¹-Sp¹- und P²-Sp²- nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -N(R⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹- ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen (wobei die Alkenyl- und Alkinylreste mindestens zwei und die verzweigten Reste mindestens drei C-Atome aufweisen),
- R⁰, R⁰⁰: jeweils unabhängig voneinander und bei jedem Auftreten gleich oder verschieden H oder Alkyl mit 1 bis 12 C-Atomen,
- L: bei jedem Auftreten gleich oder verschieden F, Cl, CN, oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen vorzugsweise F,
- r: 0, 1, 2, 3 oder 4,
- s: 0, 1, 2 oder 3,
- t: 0, 1 oder 2.

Die FK-Medien zur Verwendung in den erfindungsgemäßen FK-Anzeigen enthalten, neben den oben beschriebenen polymerisierbaren Verbindungen, eine FK-Mischung ("Host-Mischung") enthaltend eine oder mehr, vorzugsweise zwei oder mehr niedermolekulare (d.h. monomere bzw. unpolymerisierte) Verbindungen. Letztere sind stabil bzw. unreaktiv gegenüber einer Polymerisationsreaktion unter den zur Polymerisation der polymerisierbaren Verbindungen verwendeten Bedingungen. Prinzipiell eignet sich als Host-Mischung jede zur Verwendung in herkömmlichen VA- und OCB-Anzeigen geeignete FK-Mischung. Geeignete FK-Mischungen sind dem Fachmann bekannt und in der Literatur beschrieben, beispielsweise Mischungen in VA-Anzeigen in EP 1 378 557 A1, und Mischungen für OCB-Anzeigen in EP 1 306 418 A1 und DE 102 24 046 A1.

Besonders bevorzugte FK-Anzeigen, FK-Host-Mischungen und FK-Medien werden im Folgenden genannt:
a) FK-Medium, welches eine oder mehrere Verbindungen der Formel CY und/oder PY enthält: 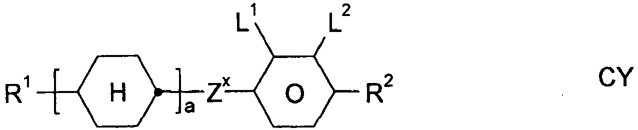 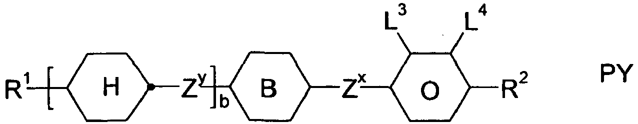 worin die einzelnen Reste folgende Bedeutung besitzen
   - a: 1 oder 2,
   - b: 0 oder 1, 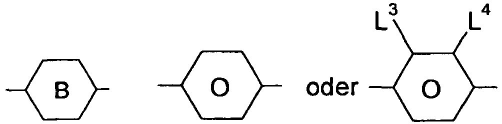
   - R¹ und R²: jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind, vorzugsweise Alkyl oder Alkoxy mit 1 bis 6 C-Atomen,
   - Z^{x} und Z^{y}: jeweils unabhängig voneinander -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, oder eine Einfachbindung, vorzugsweise eine Einfachbindung,
   - L¹⁻⁴: jeweils unabhängig voneinander F, Cl, OCF₃, CF₃, CH₃, CH₂F, CHF₂.

   Vorzugsweise bedeuten beide Reste L¹ und L² F, oder einer der Reste L¹ und L² F und der andere Cl, bzw. beide Reste L³ und L⁴ F, oder einer der Reste L³ und L⁴ F und der andere Cl.
   Die Verbindungen der Formel CY sind vorzugsweise ausgewählt aus der Gruppe bestehend aus folgenden Unterformeln 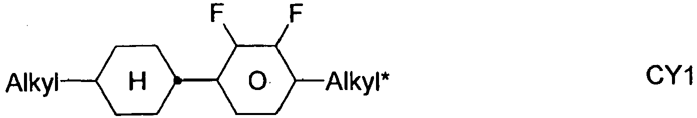 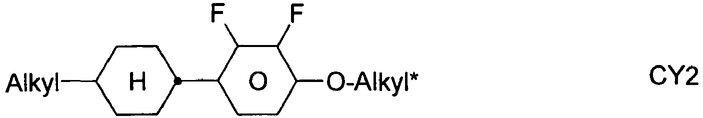 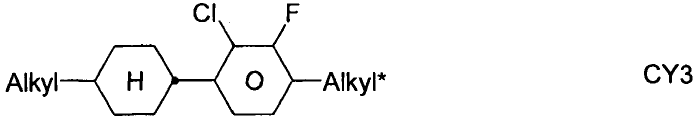 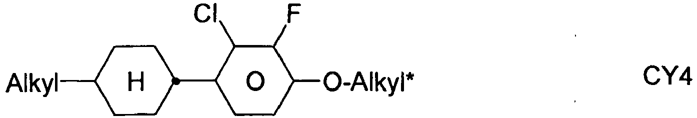 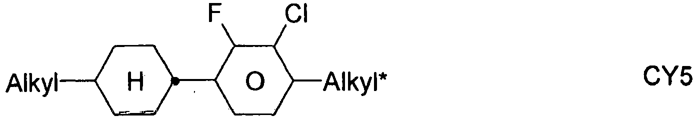 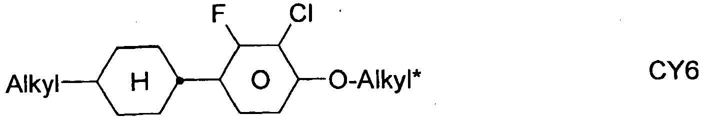 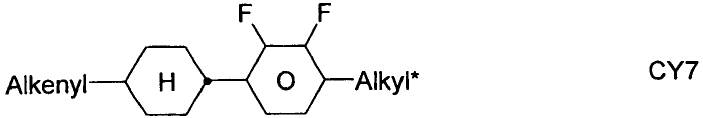 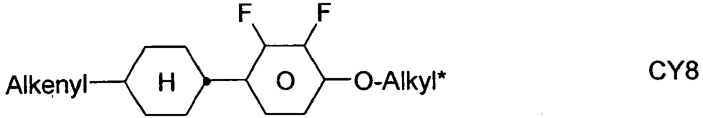 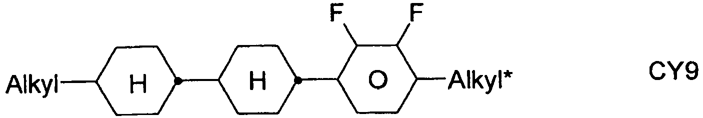 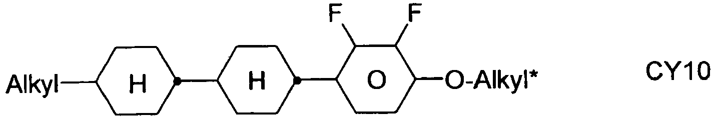 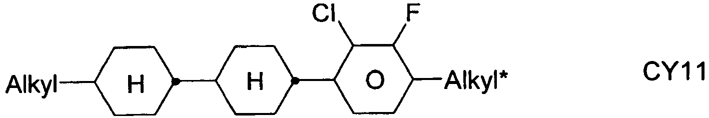 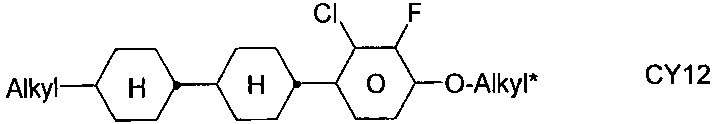 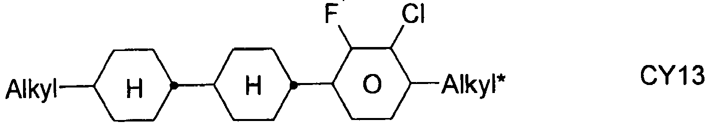 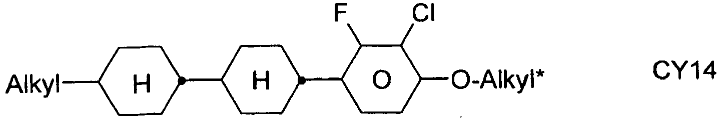 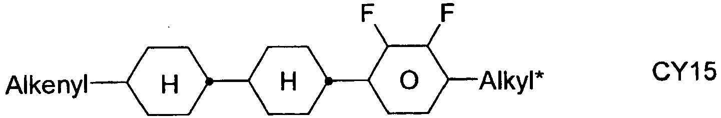 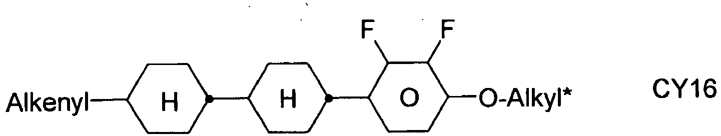 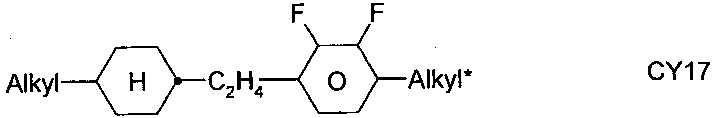 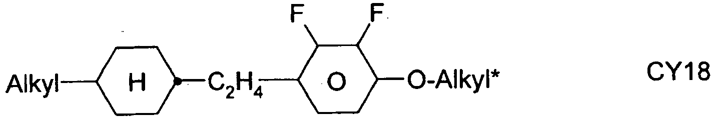 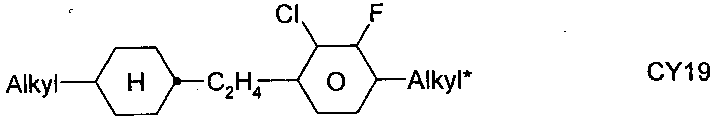 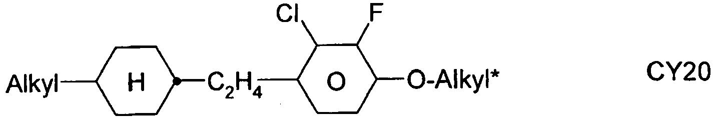 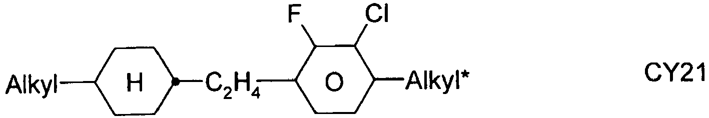 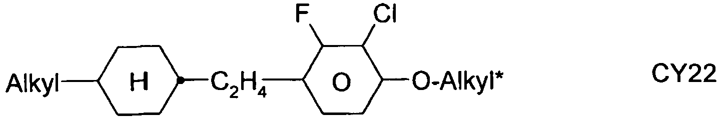 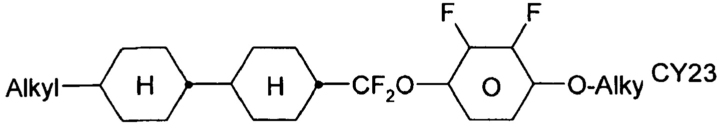 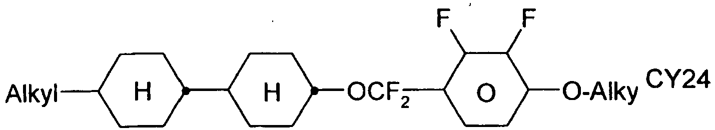 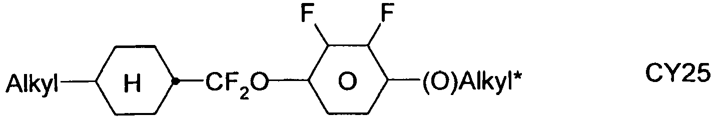 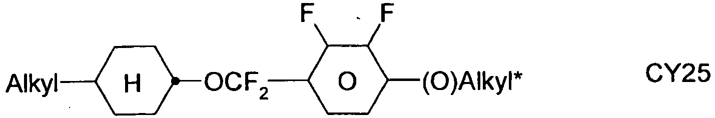 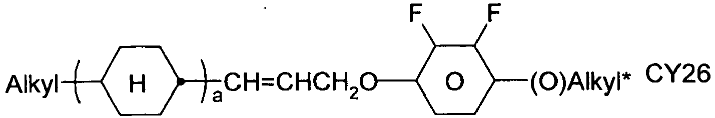 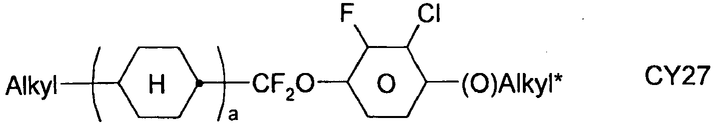 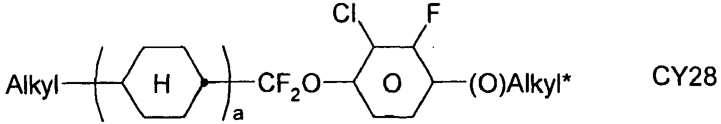 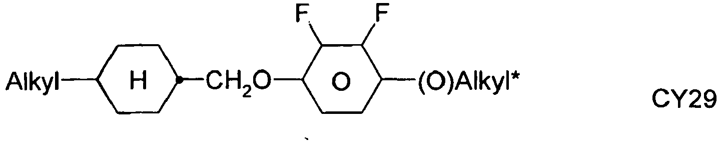 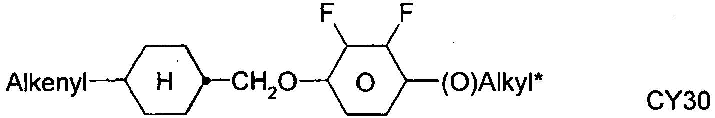 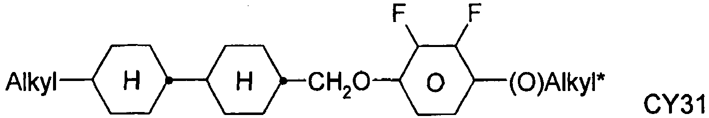 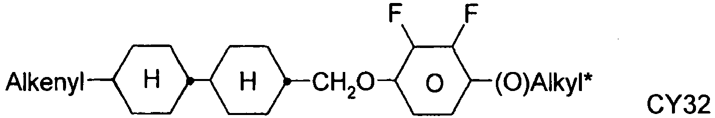 worin a 1 oder 2, Alkyl und Alkyl* jeweils unabhängig voneinander einen geradkettigen Alkylrest mit 1-6 C-Atomen, und Alkenyl einen geradkettigen Alkenylrest mit 2-6 C-Atomen, und (O) ein Sauerstoffatom oder eine Einfachbindung bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Die Verbindungen der Formel PY sind vorzugsweise ausgewählt aus der Gruppe bestehend aus folgenden Unterformeln: 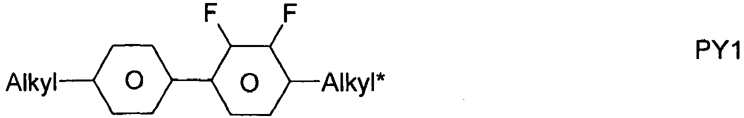 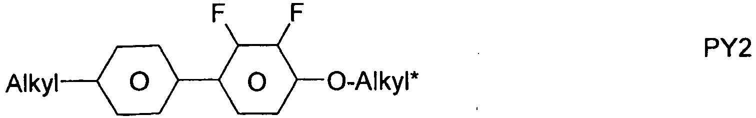 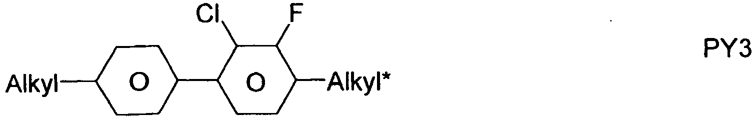 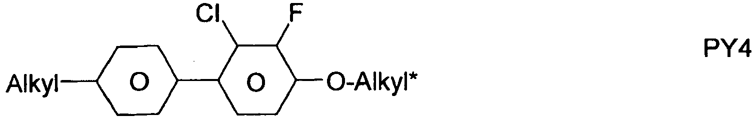 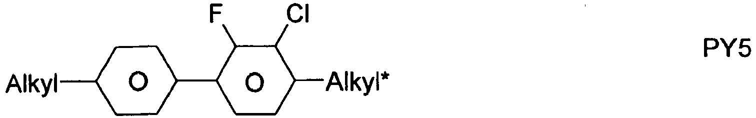 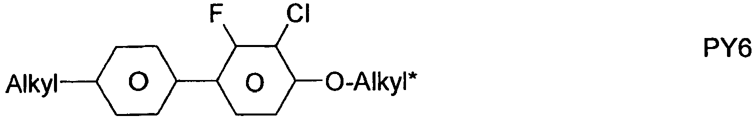 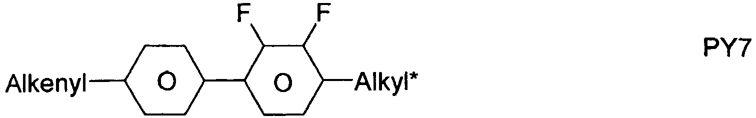 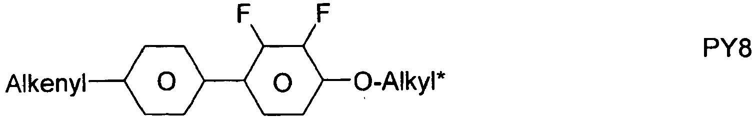 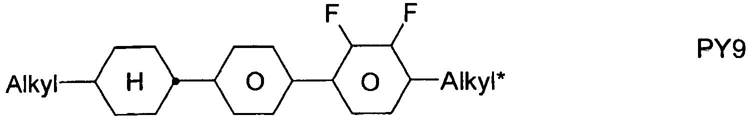 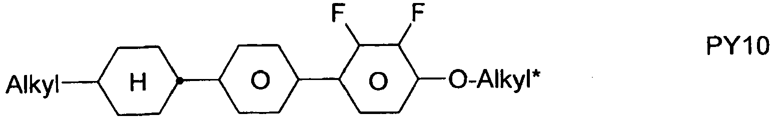 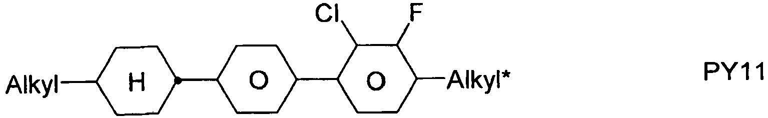 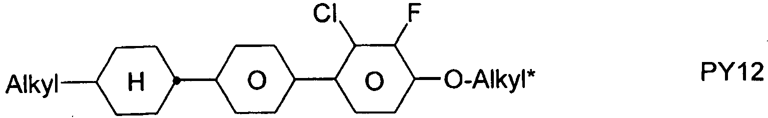 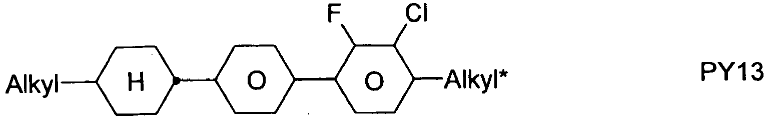 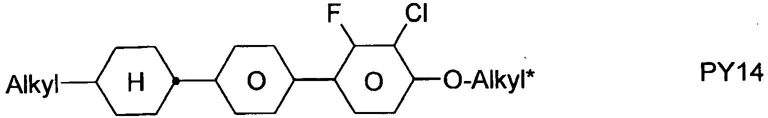 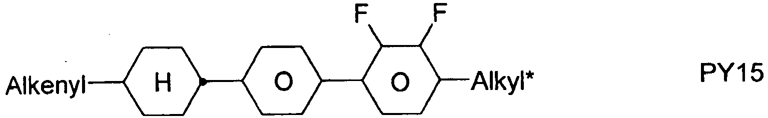 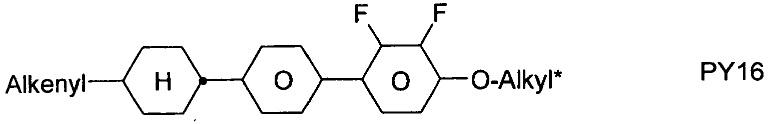 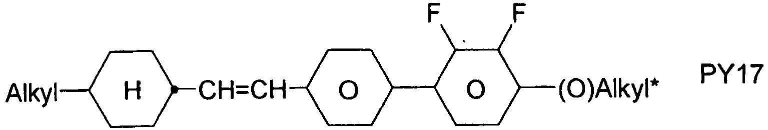 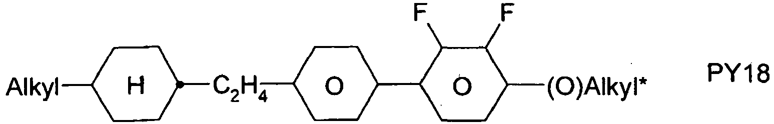 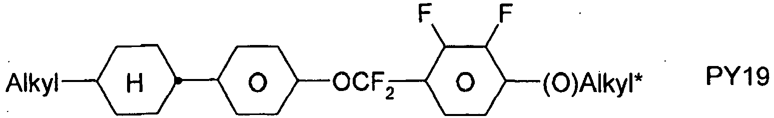 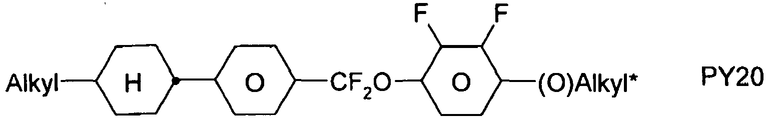 worin Alkyl und Alkyl* jeweils unabhängig voneinander einen geradkettigen Alkylrest mit 1-6 C-Atomen und Alkenyl einen geradkettigen Alkenylrest mit 2-6 C-Atomen, und (O) ein Sauerstoffatom oder eine Einfachbindung bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
b) FK-Medium, welches zusätzlich eine oder mehrere Verbindungen der folgenden Formel enthält: 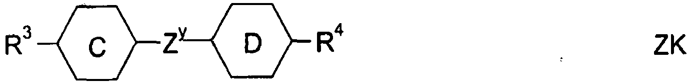 worin die einzelnen Reste folgende Bedeutung besitzen 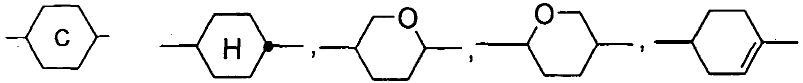 oder 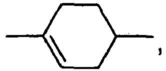 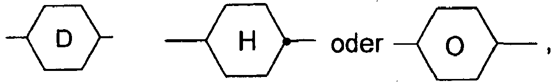
   - R³ und R⁴: jeweils unabhängig voneinander Alkyl mit 1 bis 12 C-Atomen, worin auch eine oder zwei nicht benachbarte CH₂-Gruppen durch -O-, -CH=CH-, -CO-, -O-CO- oder -CO-O- so ersetzt sein können, dass O-Atome nicht direkt miteinander verknüpft sind,
   - Z^{y}: -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, oder eine Einfachbindung, vorzugsweise eine Einfachbindung.

   Die Verbindungen der Formel ZK sind vorzugsweise ausgewählt aus der Gruppe bestehend aus folgenden Unterformeln: 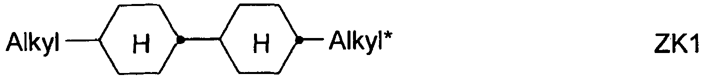 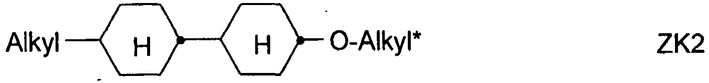 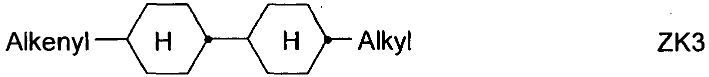 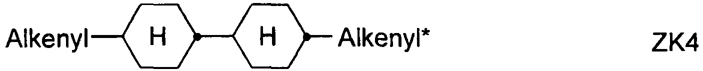 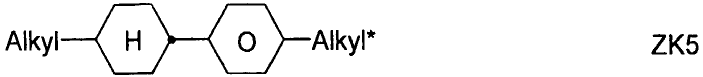 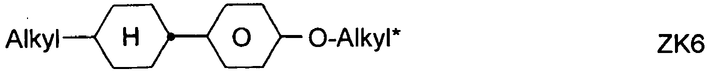 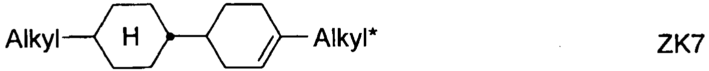 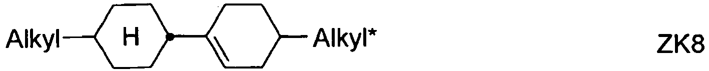 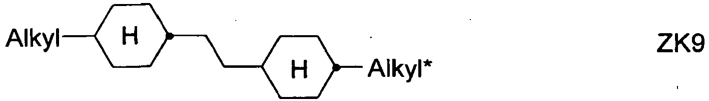 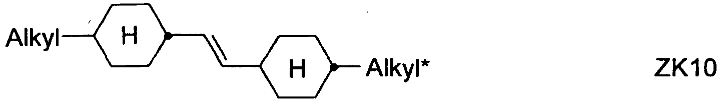 worin Alkyl und Alkyl* jeweils unabhängig voneinander einen geradkettigen Alkylrest mit 1-6 C-Atomen bedeuten, und Alkenyl einen geradkettigen Alkenylrest mit 2-6 C-Atomen bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
c) FK-Medium, welches zusätzlich eine oder mehrere Verbindungen der folgenden Formel enthält: 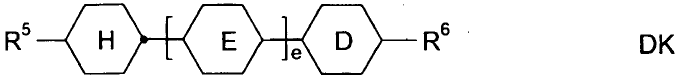 worin die einzelnen Reste bei jedem Auftreten gleich oder verschieden folgende Bedeutung haben:
   - R⁵ und R⁶: jeweils unabhängig voneinander eine der oben für R¹ angegebenen Bedeutungen, 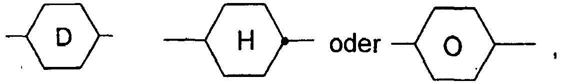 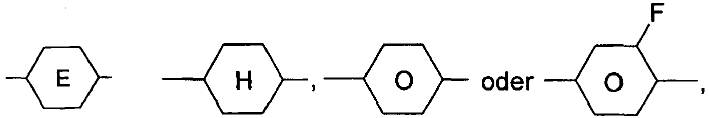 und
   - e: 1 oder 2.

   Die Verbindungen der Formel DK sind vorzugsweise ausgewählt aus der Gruppe bestehend aus folgenden Unterformeln: 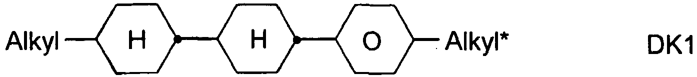 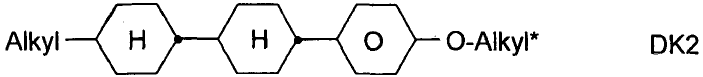 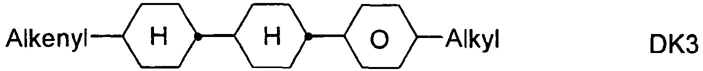 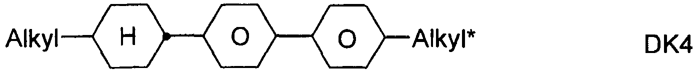 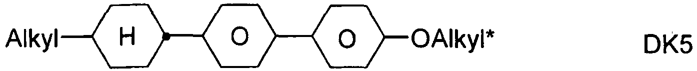 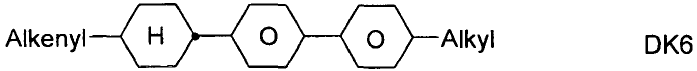 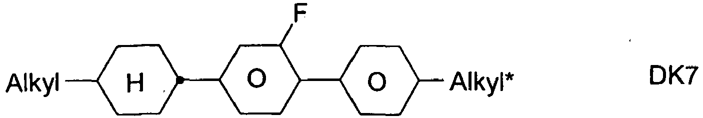 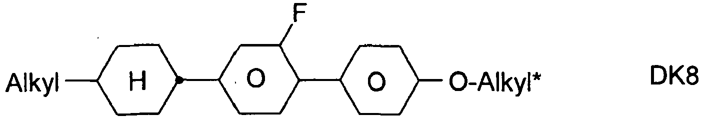 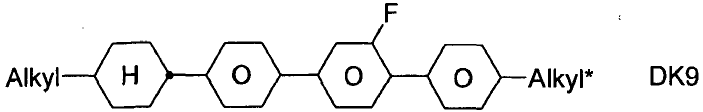 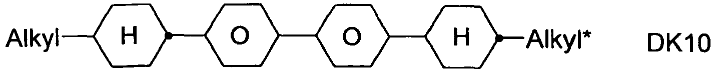 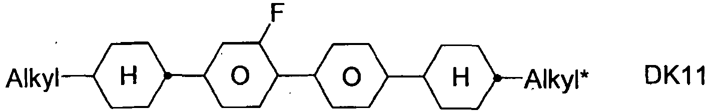 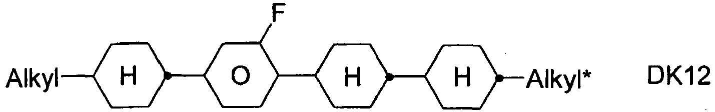 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
d) FK-Medium, welches zusätzlich eine oder mehrere Verbindungen der folgenden Formel enthält: 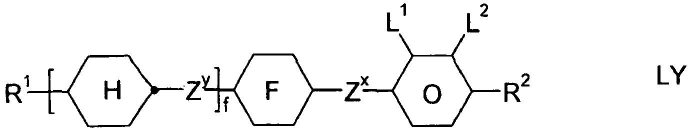 worin die einzelnen Reste folgende Bedeutung besitzen 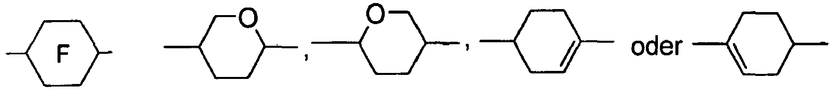
   - f: 0 oder 1,
   - R¹ und R²: jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder-COO- so ersetzt sein können, dass O-Atome nicht direkt miteinander verknüpft sind,
   - Z^{x} und Z^{y}: jeweils unabhängig voneinander -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, oder eine Einfachbindung, vorzugsweise eine Einfachbindung,
   - L¹ und L²: jeweils unabhängig voneinander F, Cl, OCF₃, CF₃, CH₃, CH₂F, CHF₂.

   Vorzugsweise bedeuten beide Reste L¹ und L² F oder einer der Reste L¹ und L² F und der andere Cl.
   Die Verbindungen der Formel LY sind vorzugsweise ausgewählt aus der Gruppe bestehend aus folgenden Unterformeln, 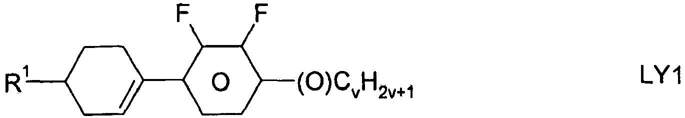 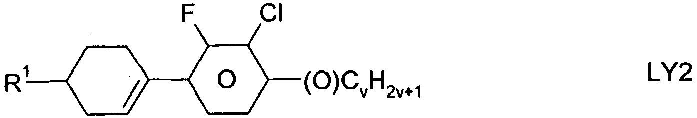 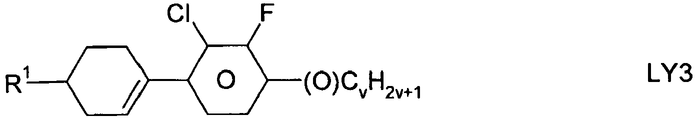 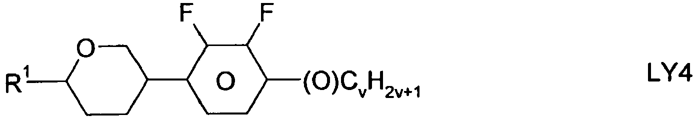 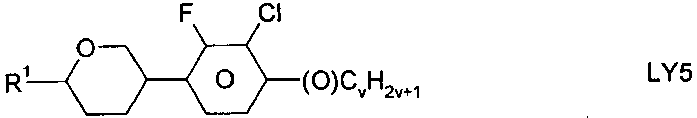 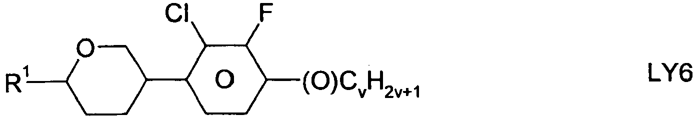 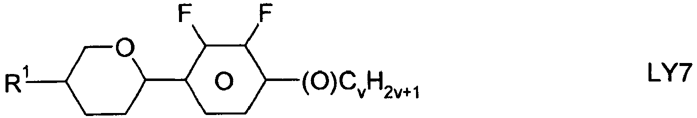 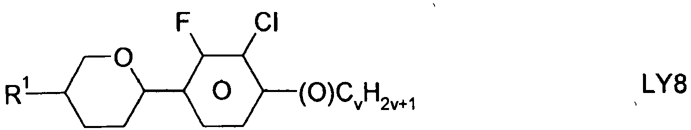 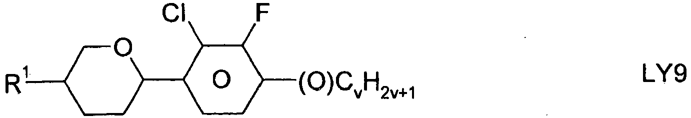 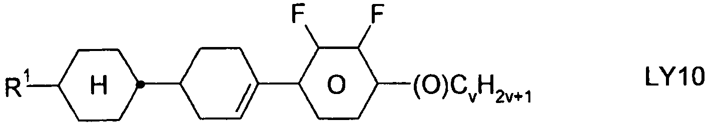 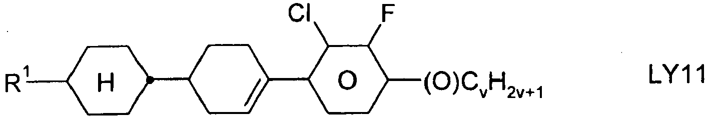 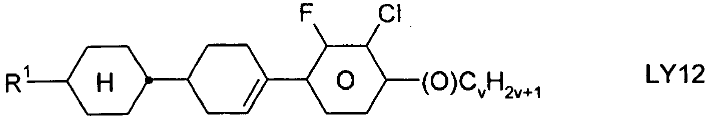 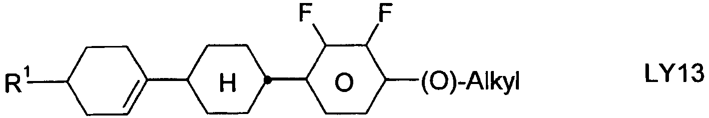 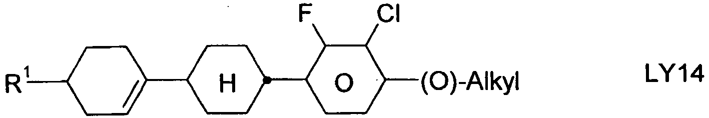 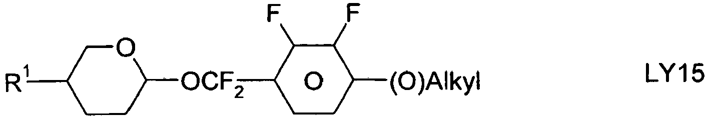 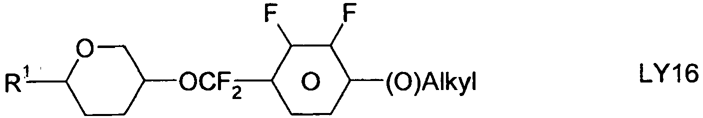 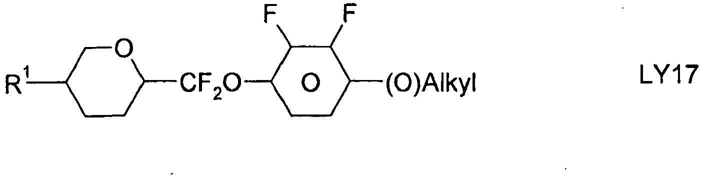 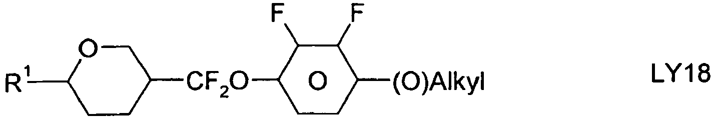 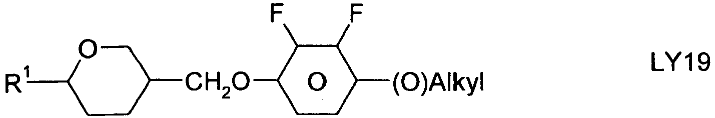 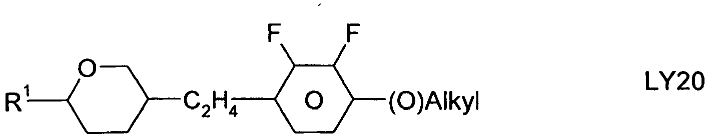 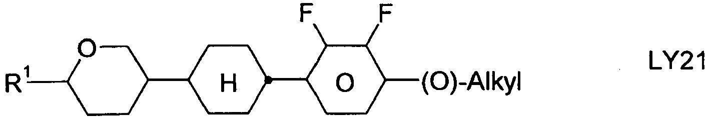 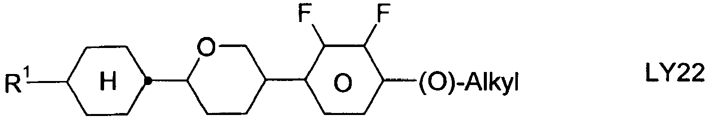 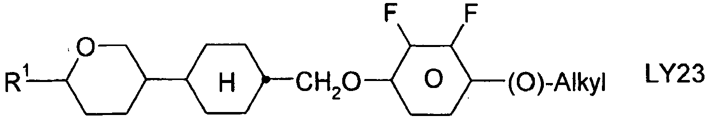 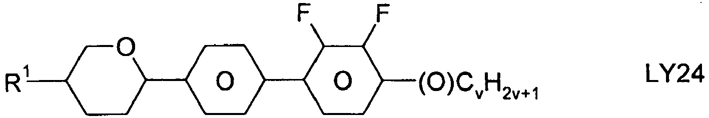 worin R¹ die oben angegebene Bedeutung hat, Alkyl einen geradkettigen Alkylrest mit 1-6 C-Atomen, (O) ein Sauerstoffatom oder eine Einfachbindung und v eine ganze Zahl von 1 bis 6 bedeuten. R¹ bedeutet vorzugsweise geradkettiges Alkyl mit 1 bis 6 C-Atomen oder geradkettiges Alkenyl mit 2 bis 6 C-Atomen, insbesondere CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
e) FK-Medium, welches zusätzlich eine oder mehrere Verbindungen ausgewählt aus der Gruppe bestehend aus folgenden Formeln enthält: 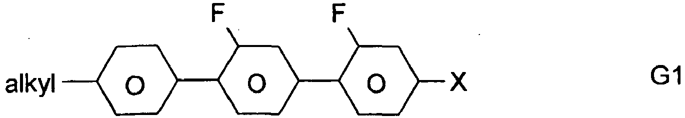 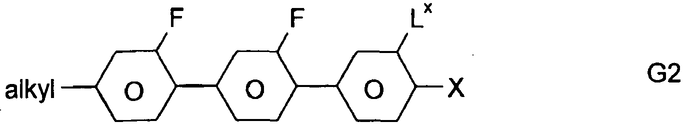 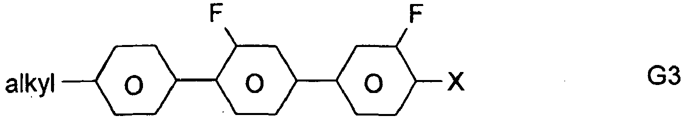 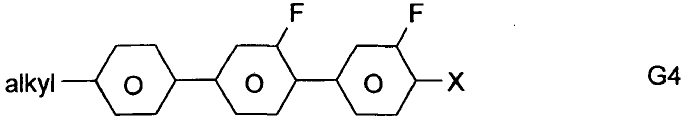 worin alkyl C₁₋₆-alkyl, L^{x} H oder F und X F, Cl, OCF₃, OCHF₂ oder OCH=CF₂ bedeutet. Besonders bevorzugt sind Verbindungen der Formel G1, worin X F bedeutet.
f) FK-Medium, welches zusätzlich eine oder mehrere Verbindungen ausgewählt aus der Gruppe bestehend aus folgenden Formeln enthält: 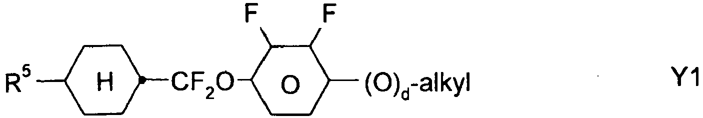 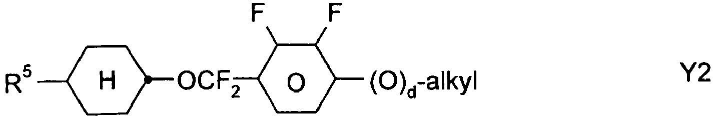 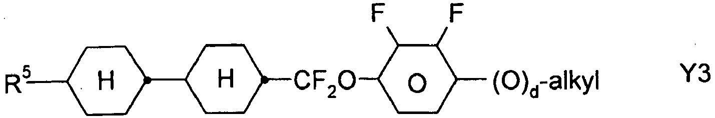 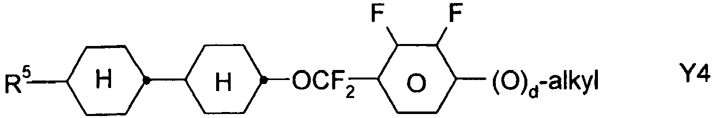 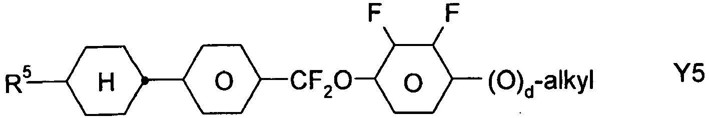 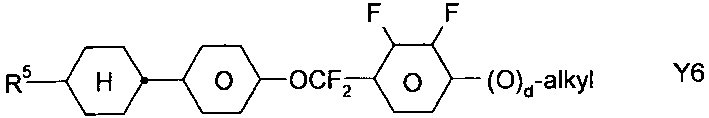 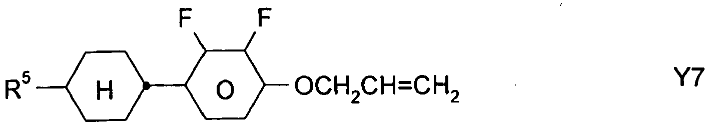 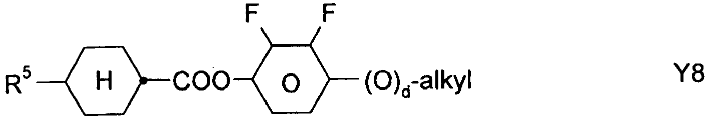 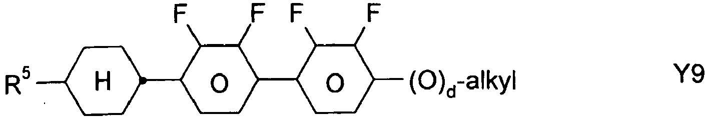 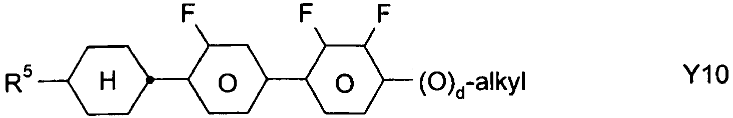 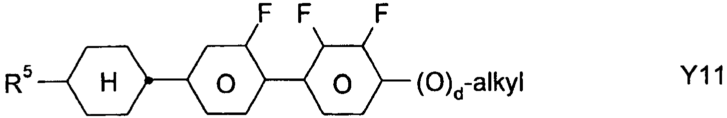 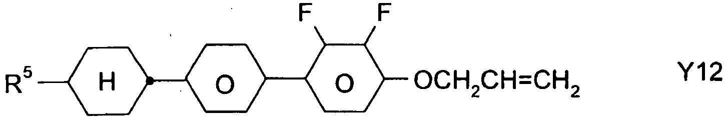 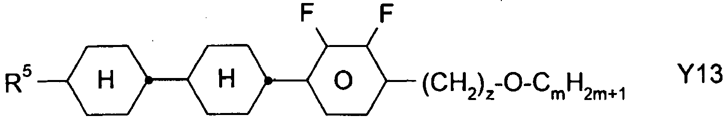 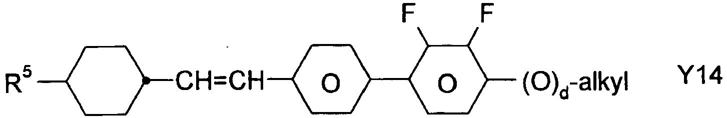 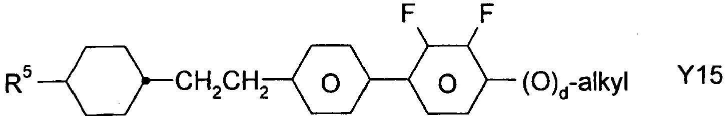 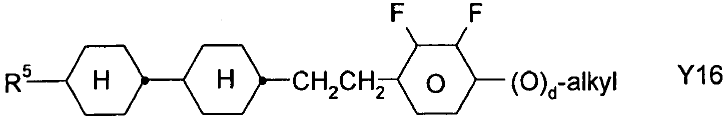 worin R⁵ eine der oben für R¹ angegebenen Bedeutungen besitzt, alkyl C₁₋₆-alkyl, d 0 oder 1, und z und m jeweils unabhängig voneinander eine ganze Zahl von 1 bis 6 bedeuten. R⁵ ist in diesen Verbindungen besonders bevorzugt C₁₋₆-alkyl oder -alkoxy oder C₂₋₆-alkenyl, d ist vorzugsweise 1. Vorzugsweise enthält das erfindungsgemäße FK-Medium eine oder mehrere Verbindungen der oben genannten Formeln in Mengen von ≥ 5 Gew.%.
g) FK-Medium, weiches zusätzlich eine oder mehrere Biphenylverbindungen ausgewählt aus der Gruppe bestehend aus folgenden Formeln enthält: 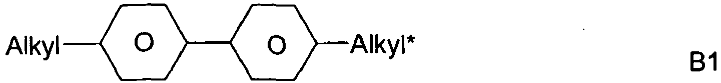 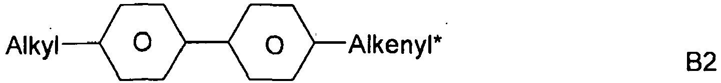 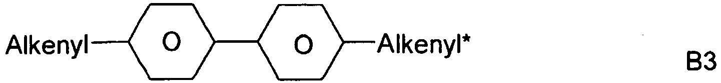 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Der Anteil der Biphenyle der Formeln B1 bis B3 in der FK-Mischung beträgt vorzugsweise mindestens 3 Gew.%, insbesondere ≥ 5 Gew.%.
   Die Verbindungen der Formel B2 sind besonders bevorzugt.
   Die Verbindungen der Formel B1 bis B3 sind vorzugsweise ausgewählt aus der Gruppe bestehend aus folgenden Unterformeln 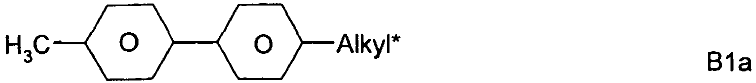 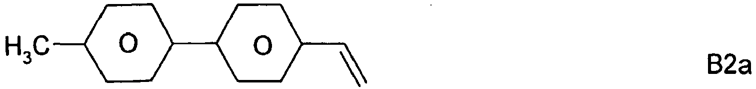 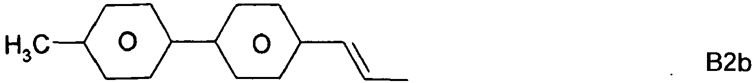 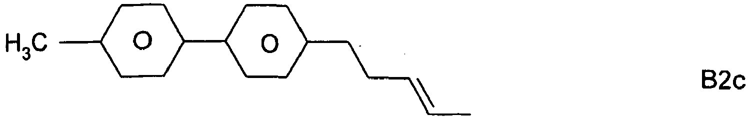 worin Alkyl* einen Alkylrest mit 1-6 C-Atomen bedeutet. Insbesondere bevorzugt enthält das erfindungsgemäße Medium eine oder mehrere Verbindungen der Formeln B1 a und/oder B2c.
h) FK-Medium, welches zusätzlich eine oder mehrere Terphenylverbindungen der folgenden Formel enthält: 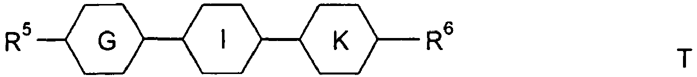 worin R⁵ und R⁶ jeweils unabhängig voneinander eine der oben für R¹ angegebenen Bedeutungen besitzen und 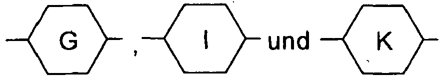 jeweils unabhängig voneinander 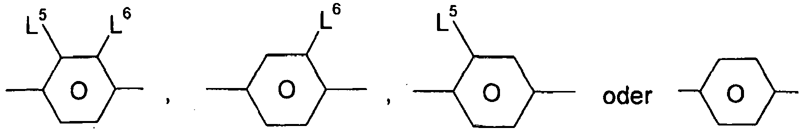 bedeuten, worin L⁵ F oder Cl, vorzugsweise F, und L⁶ F, Cl, OCF₃, CF₃, CH₃, CH₂F oder CHF₂, vorzugsweise F, bedeuten.
   Die Verbindungen der Formel T sind vorzugsweise ausgewählt aus der Gruppe bestehend aus folgenden Unterformeln 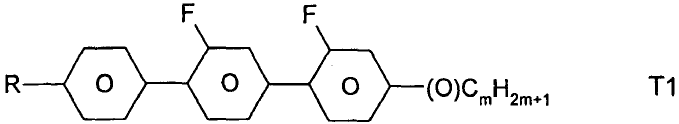 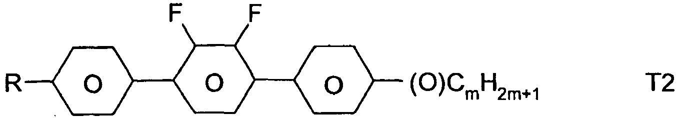 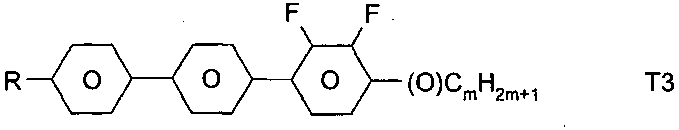 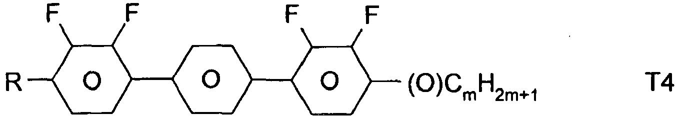 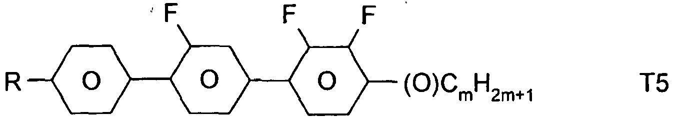 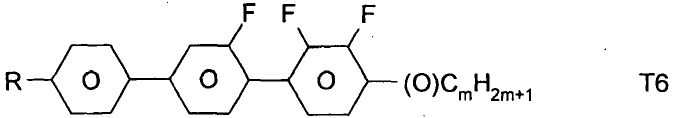 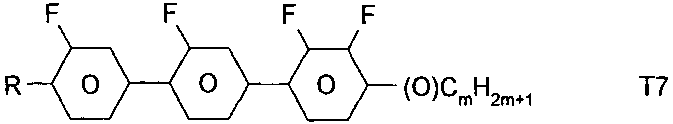 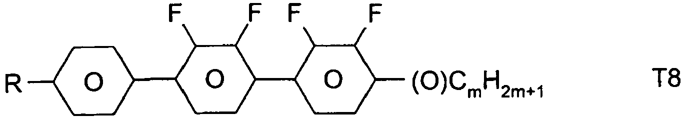 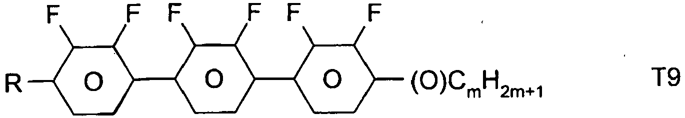 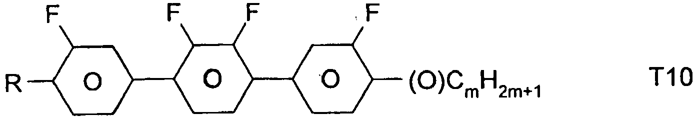 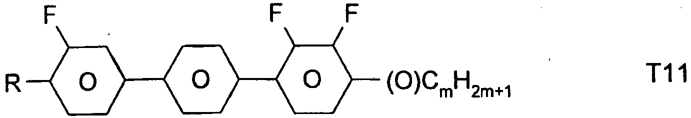 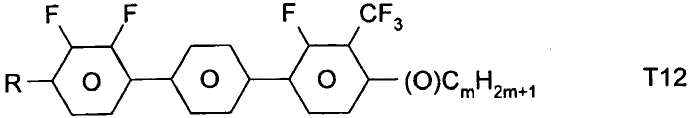 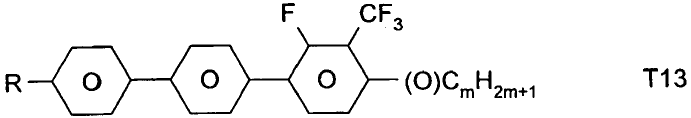 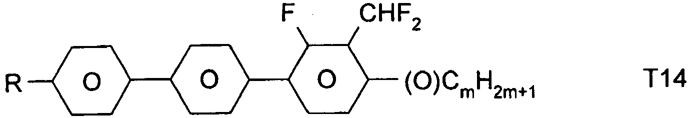 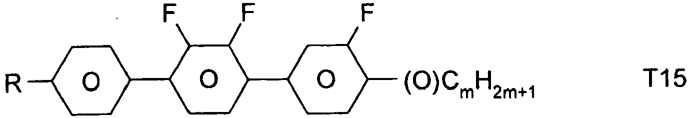 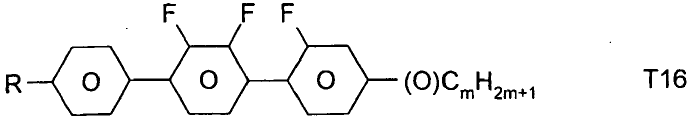 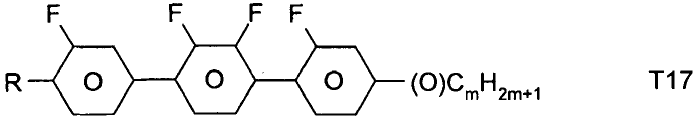 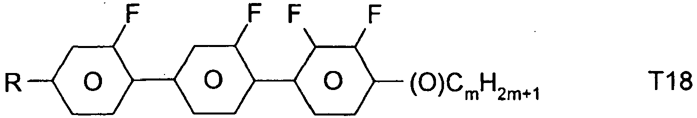 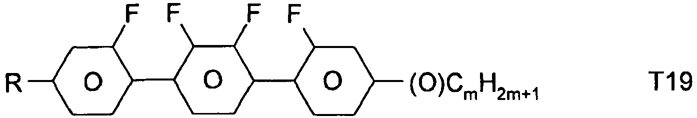 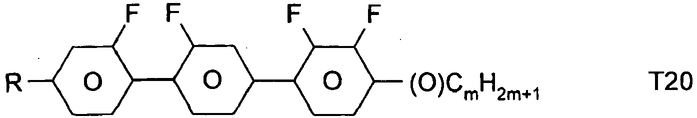 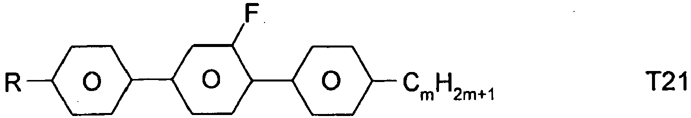 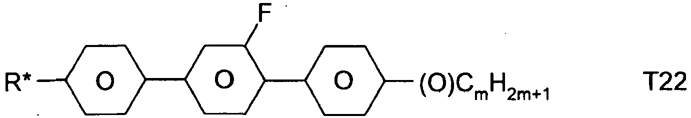 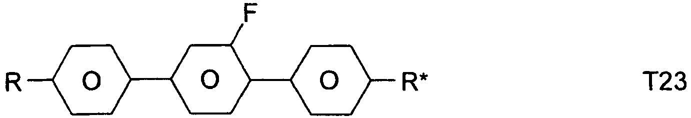 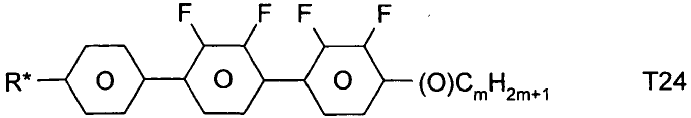 worin R einen geradkettigen Alkyl- oder Alkoxyrest mit 1-7 C-Atomen, R* einen geradkettigen Alkenylrest mit 2-7 C-Atomen, (O) ein Sauerstoffatom oder eine Einfachbindung, und m eine ganze Zahl von 1 bis 6 bedeutet. R* bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Vorzugsweise bedeutet R Methyl, Ethyl, Propyl, Butyl, Pentyl, Hexyl Methoxy, Ethoxy, Propoxy, Butoxy oder Pentoxy.
   Das erfindungsgemäße FK-Medium enthält die Terphenyle der Formeln T und deren bevorzugte Unterformeln vorzugsweise in einer Menge von 0,5-30 Gew.%, insbesondere von 1-20 Gew.%.
   Besonders bevorzugt sind Verbindungen der Formeln T1, T2, T3 und T21. In diesen Verbindungen bedeutet R vorzugsweise Alkyl, ferner Alkoxy jeweils mit 1-5 C-Atomen.
   Vorzugsweise werden die Terphenyle in erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen der Formel T, vorzugsweise ausgewählt aus der Gruppe der Verbindungen T1 bis T22.
i) FK-Medium, welches zusätzlich eine oder mehrere Verbindungen ausgewählt aus der Gruppe bestehend aus folgenden Formeln enthält: 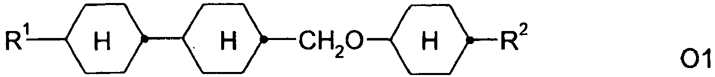 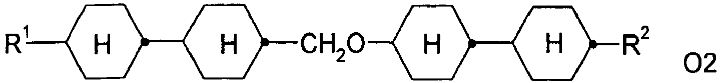 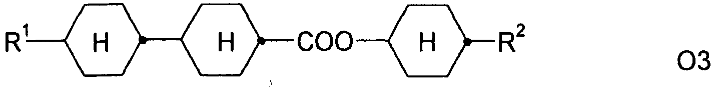 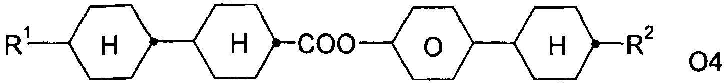 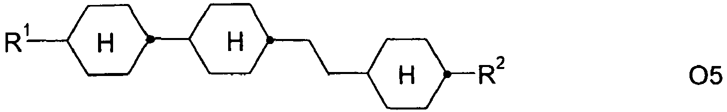 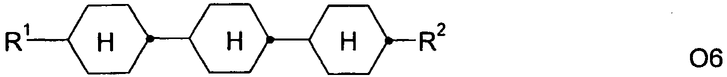 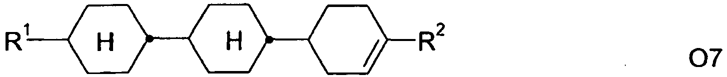 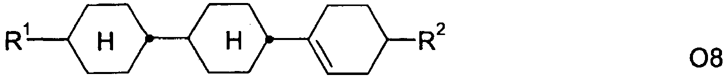 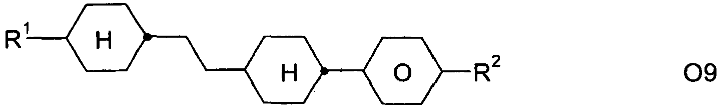 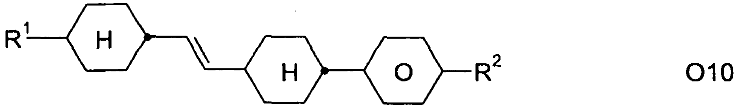 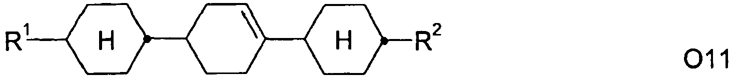 worin R¹ und R² die oben angegebenen Bedeutungen haben, und vorzugsweise jeweils unabhängig voneinander geradkettiges Alkyl mit 1 bis 6 C-Atomen oder geradkettiges Alkenyl mit 2 bis 6 C-Atomen bedeuten.
   Bevorzugte Medien enthalten eine oder mehrere Verbindungen ausgewählt aus den Formeln O1, 03 und 04.
k) FK-Medium, welches zusätzlich eine oder mehrere Verbindungen der folgenden Formel enthält: 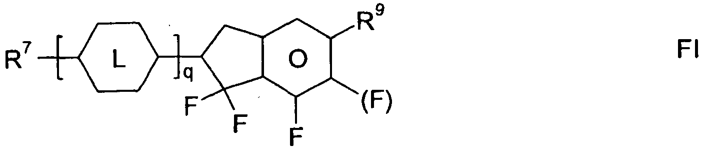 worin 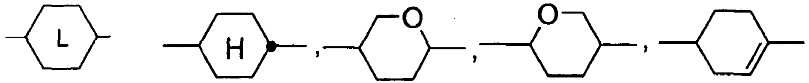 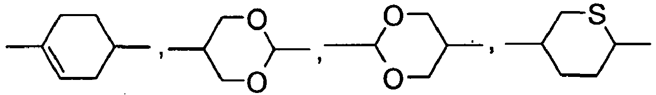 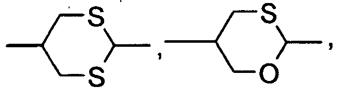 R⁹ H, CH₃, C₂H₅ oder n-C₃H₇, (F) einen optionalen Fluorsubstituenten und q 1, 2 oder 3 bedeutet, und R⁷ eine der für R¹ angegebenen Bedeutungen hat, vorzugsweise in Mengen von > 3 Gew.%, insbesondere ≥ 5 Gew.%, und ganz besonders bevorzugt von 5-30 Gew.%.
   Besonders bevorzugte Verbindungen der Formel IF sind ausgewählt aus der Gruppe bestehend aus folgenden Unterformeln: 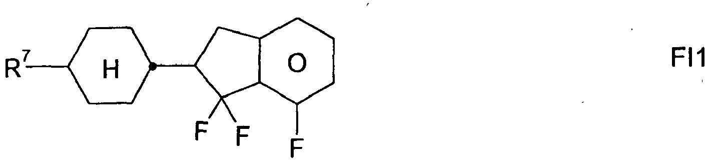 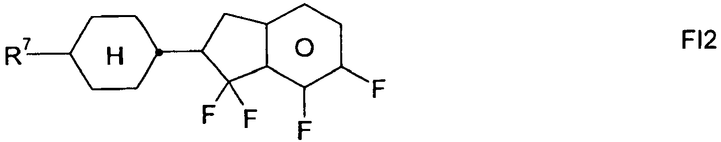 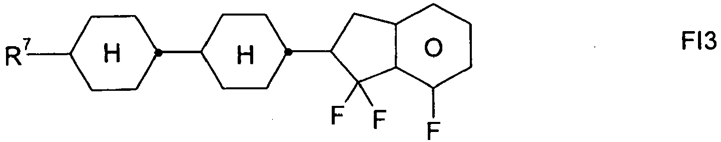 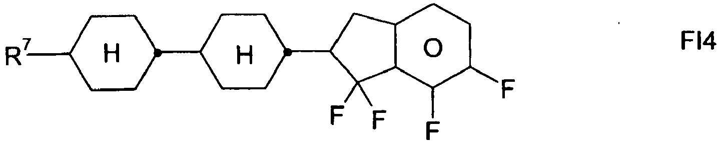 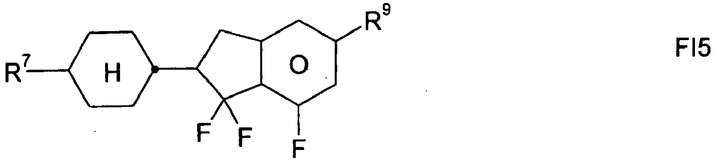 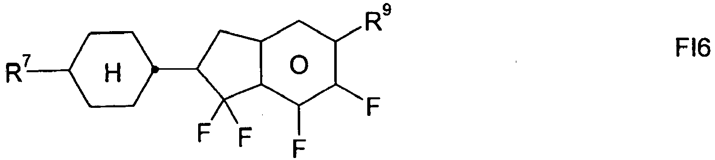 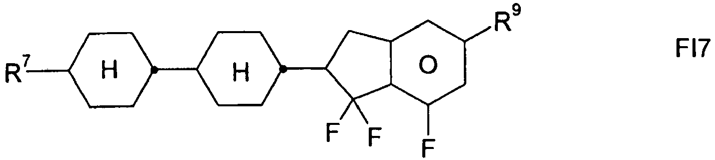 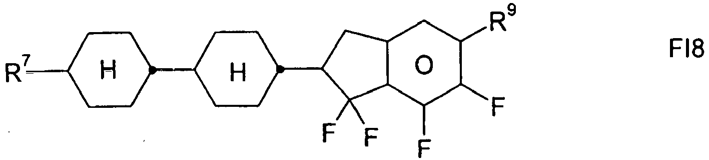 worin R⁷ vorzugsweise geradkettiges Alkyl bedeutet und R⁹ CH₃, C₂H₅ oder n-C₃H₇ bedeutet. Besonders bevorzugt sind die Verbindungen der Formel Fl1, Fl2 und Fl3.
m) FK-Medium, welches zusätzlich eine oder mehrere Verbindungen ausgewählt aus der Gruppe bestehend aus folgenden Formeln enthält: 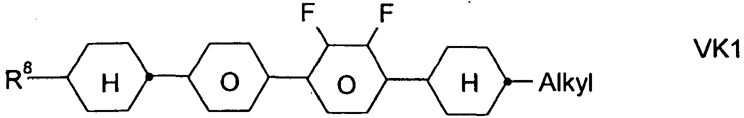 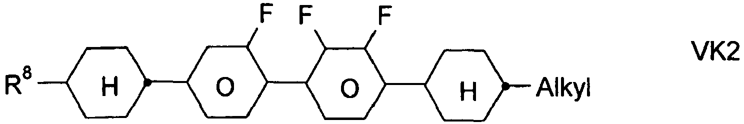 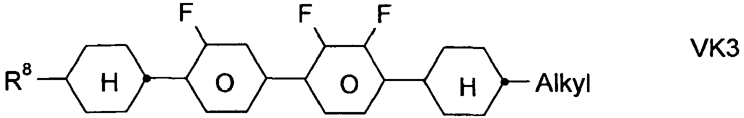 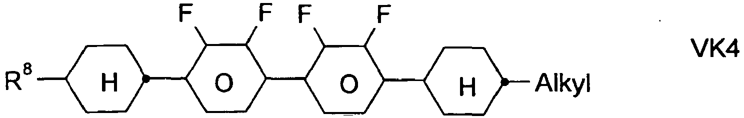 worin R⁸ die für R¹ angegebene Bedeutung hat und Alkyl einen geradkettigen Alkylrest mit 1-6 C-Atomen bedeutet.
n) FK-Medium, welches zusätzlich eine oder mehrere Verbindungen enthält, die eine Tetrahydronaphthyl- oder Naphthyl-Einheit aufweisen, wie z.B. die Verbindungen ausgewählt aus der Gruppe bestehend aus folgenden Formeln: 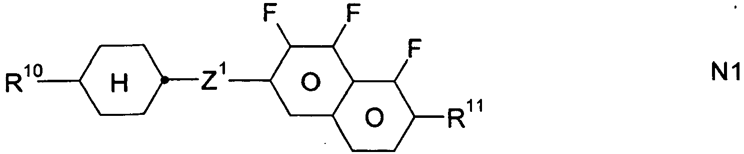 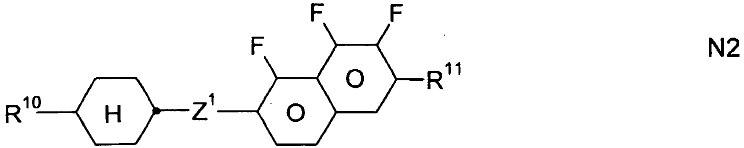 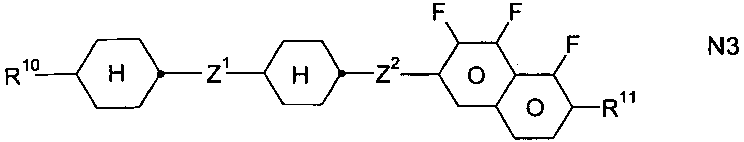 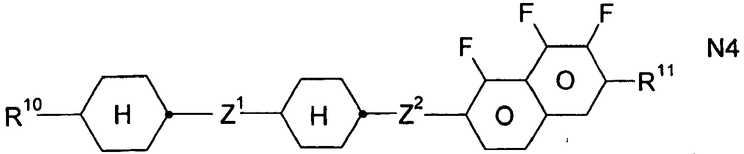 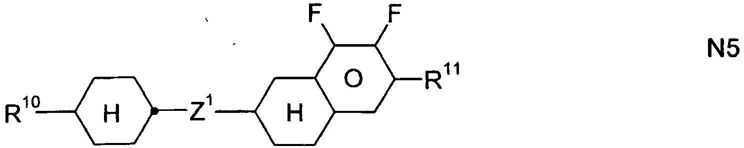 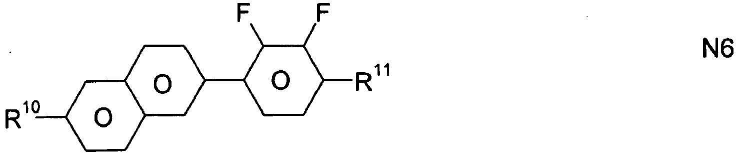 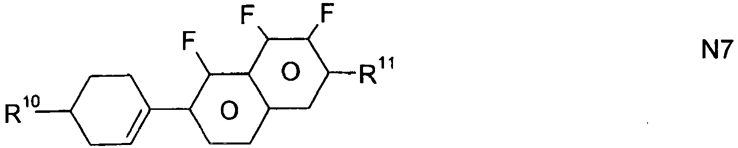 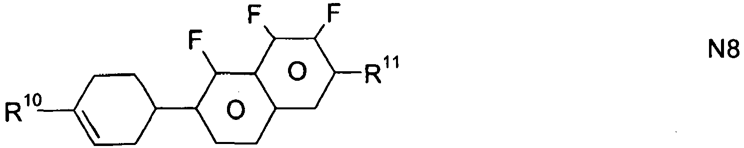 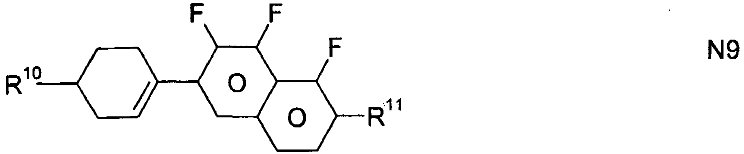 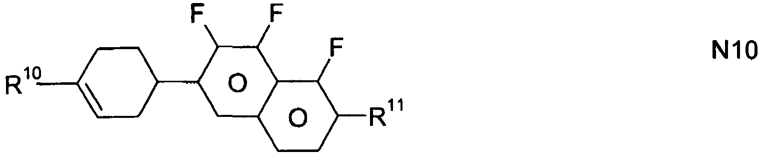 worin R¹⁰ und R¹¹ jeweils unabhängig voneinander eine der für R¹ angegebenen Bedeutungen haben, vorzugsweise geradkettiges Alkyl oder Alkoxy mit 1 bis 6 C-Atomen oder geradkettiges Alkenyl mit 2 bis 6 C-Atomen bedeuten, und Z¹ und Z² jeweils unabhängig voneinander -C₂H₄-, -CH=CH-, -(CH₂)₄-, -(CH₂)₃O-, -O(CH₂)₃-, -CH=CH-CH₂CH₂-, -CH₂CH₂CH=CH-, -CH₂O-, -OCH₂-, -CO-O-, -O-CO-, -C₂F₄-, -CF=CF-, -CF=CH-, -CH=CF-, -CH₂- oder eine Einfachbindung bedeuten.
o) FK-Medium, welches zusätzlich eine oder mehrere eine oder mehrere Difluordibenzochromane und/oder Chromane der folgenden Formeln enthält: 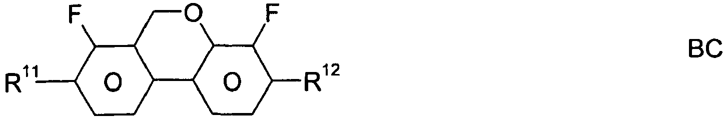 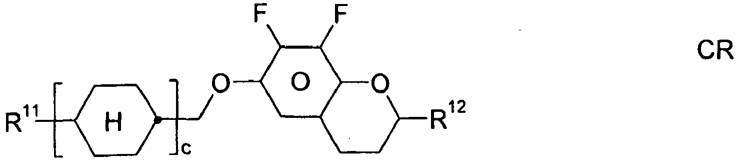 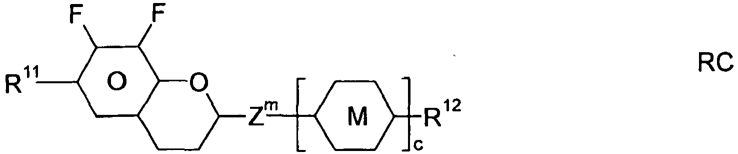 worin
   - R¹¹ und R¹²: jeweils unabhängig voneinander die oben angegebene Bedeutung aufweisen,
   - M: trans-1,4-Cyclohexylen oder 1,4-Phenylen,
   - Z^{m}: -C₂H₄-, -CH₂O-, -OCH₂-, -CO-O- oder -O-CO-, und
   - c: 0 oder 1 bedeutet,
   vorzugsweise in Mengen von 3 bis 20 Gew.%, insbesondere in Mengen von 3 bis 15 Gew.%.
   Besonders bevorzugte Verbindungen der Formeln BC und CR sind ausgewählt aus der Gruppe bestehend aus folgenden Unterformeln: 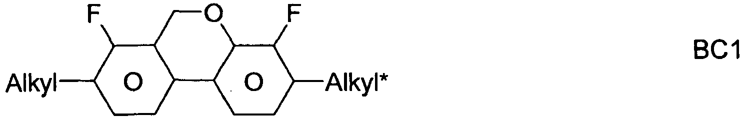 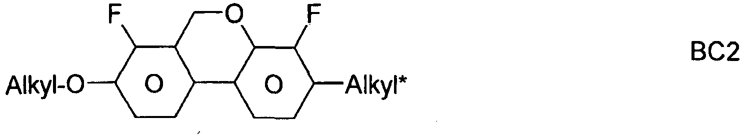 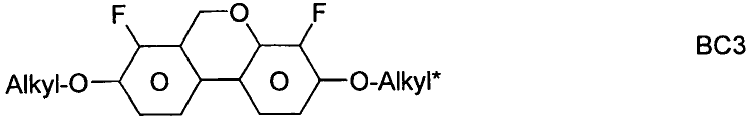 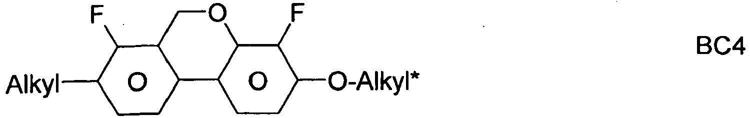 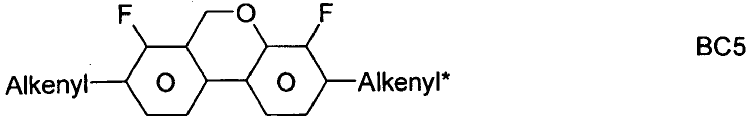 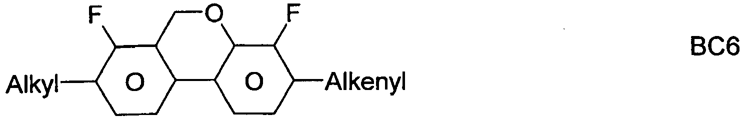 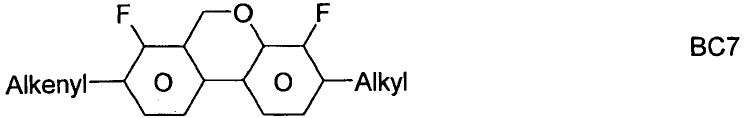 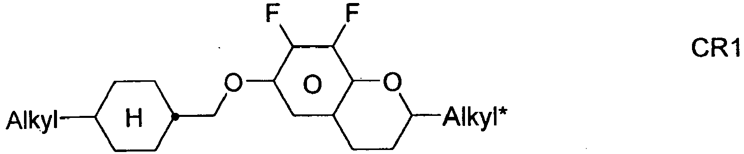 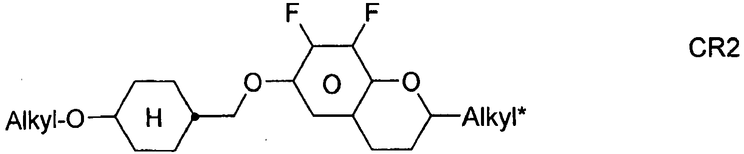 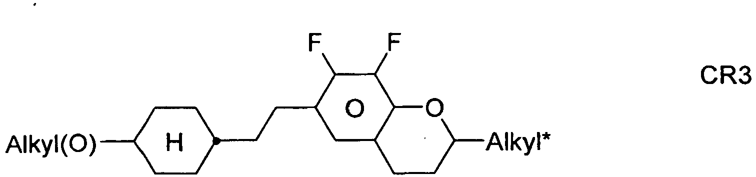 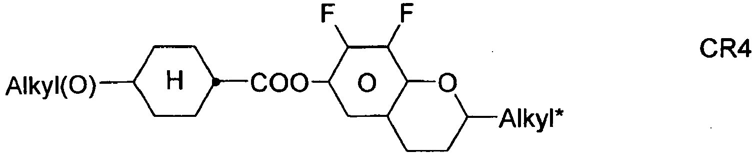 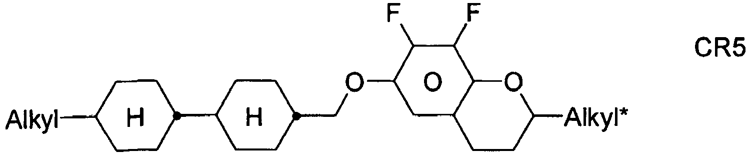 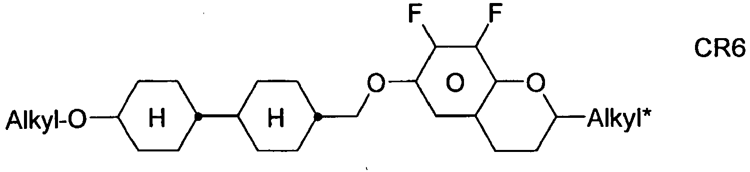 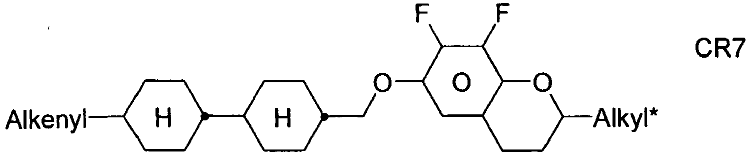 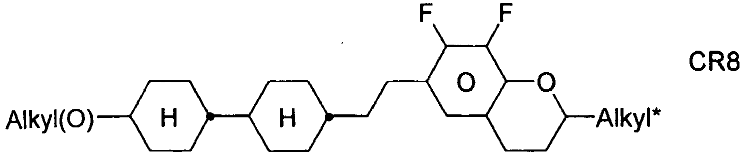 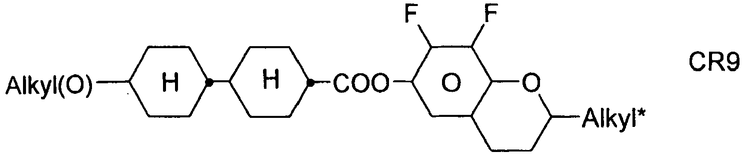 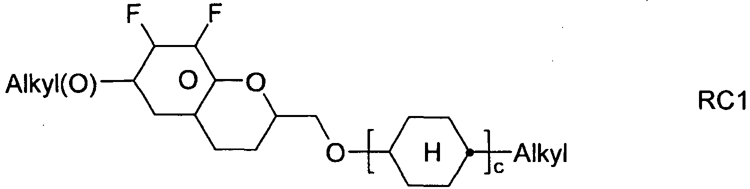 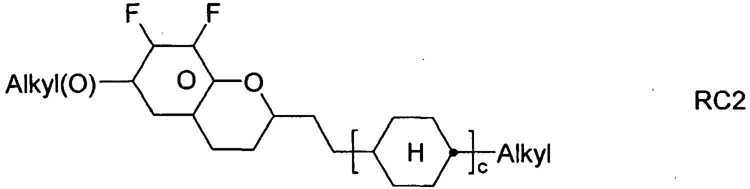 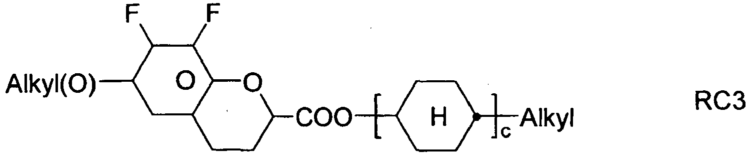 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Ganz besonders bevorzugt sind Mischungen enthaltend eine, zwei oder drei Verbindungen der Formel BC-2.
p) FK-Medium, welches zusätzlich eine oder mehrere fluorierte Phenanthrene und/oder Dibenzofurane der folgenden Formeln enthält: 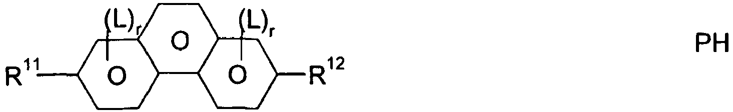 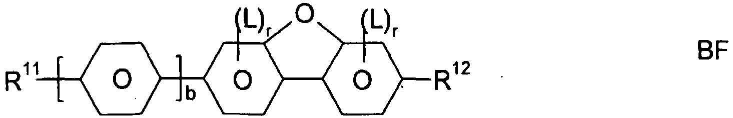 worin R¹¹ und R¹² jeweils unabhängig voneinander die oben angegebenen Bedeutungen besitzen, b 0 oder 1, L F und r 1, 2 oder 3 bedeutet.
   Besonders bevorzugte Verbindungen der Formeln PH und BF sind ausgewählt aus der Gruppe bestehend aus folgenden Unterformeln: 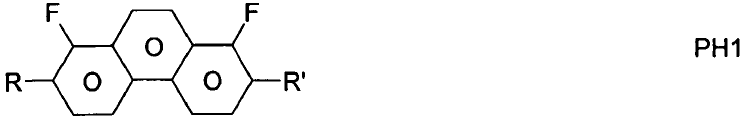 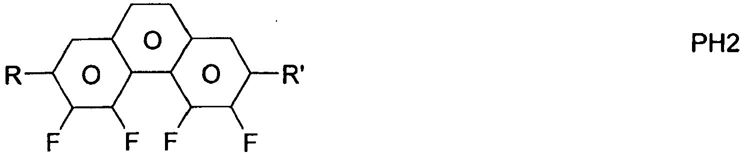 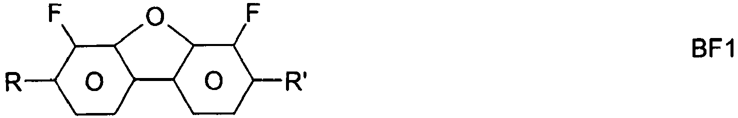 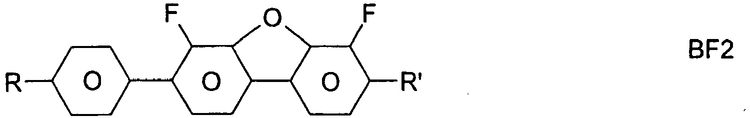 worin R und R' jeweils unabhängig voneinander einen geradkettigen Alkyl- oder Alkoxyrest mit 1-7 C-Atomen bedeuten.
q) FK-Medium, vorzugsweise zur Verwendung in PSA-OCB-, PSA-TN-, PSA-IPS- oder PSA-FFS-Anzeigen, welches eine oder mehrere Verbindungen ausgewählt aus der Gruppe bestehend aus folgenden Formeln enthält: 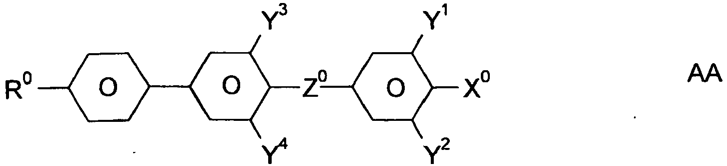 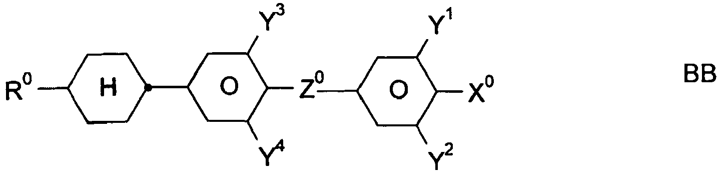 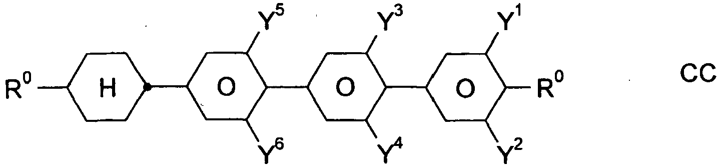 worin
   - R⁰: bei jedem Auftreten gleich oder verschieden n-Alkyl, Alkoxy, Oxaalkyl, Fluoralkyl oder Alkenyl mit jeweils bis zu 9 C-Atomen,
   - X⁰: F, Cl oder jeweils halogeniertes Alkyl, Alkenyl, Alkenyloxy oder Alkoxy mit jeweils bis zu 6 C-Atomen,
   - Z⁰: -CF₂O- oder eine Einfachbindung,
   - Y¹⁻⁶: jeweils unabhängig voneinander H oder F,
   bedeuten.
   X⁰ ist vorzugsweise F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃ oder CH=CF₂, besonders bevorzugt F oder OCF₃.
   Die Verbindungen der Formel AA sind vorzugsweise ausgewählt aus der Gruppe bestehend aus folgenden Formeln: 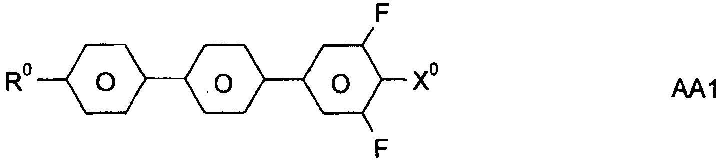 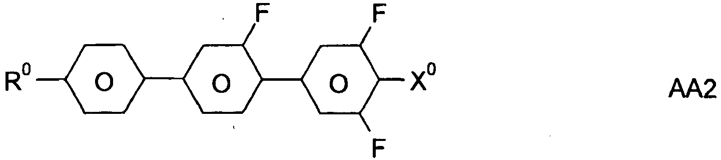 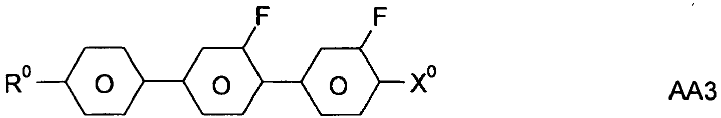 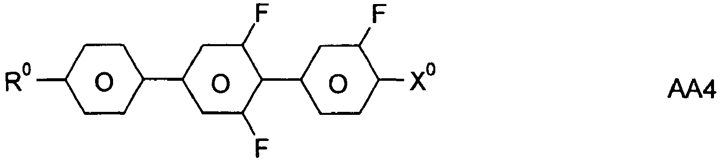 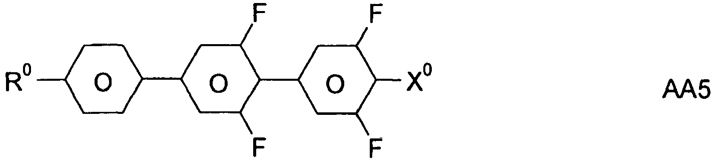 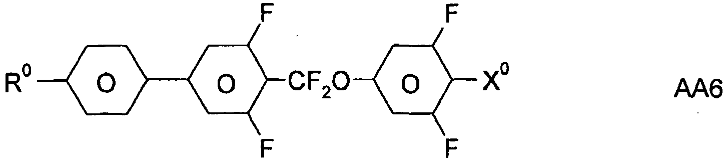 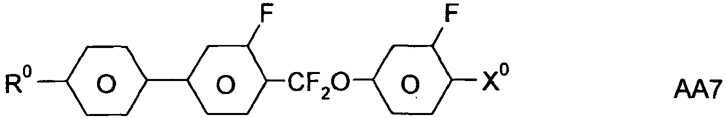 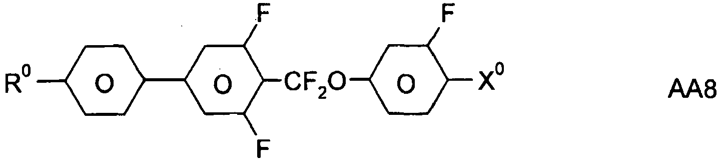 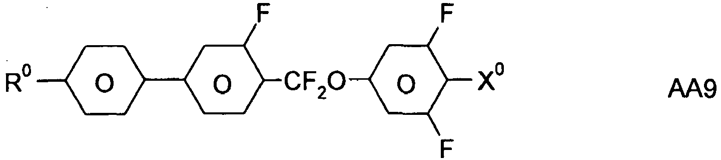 worin R⁰ und X⁰ die oben angegebene Bedeutung besitzen, und X⁰ vorzugsweise F bedeutet. Besonders bevorzugt sind Verbindungen der Formeln AA2 und AA6.
   Die Verbindungen der Formel BB sind vorzugsweise ausgewählt aus der Gruppe bestehend aus folgenden Formeln: 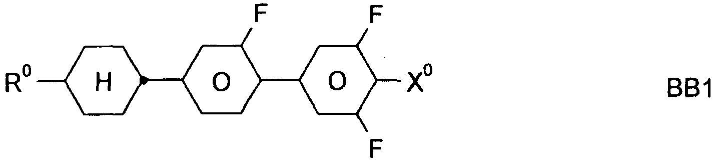 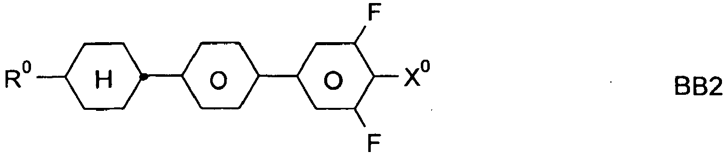 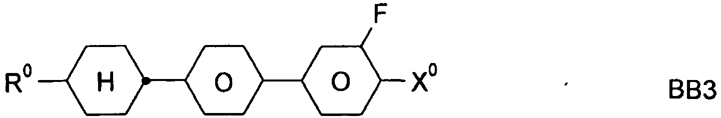 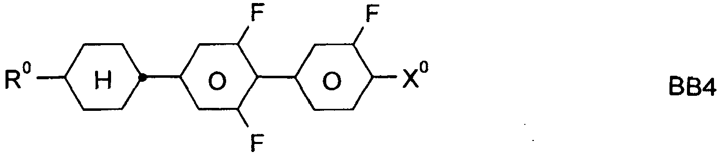 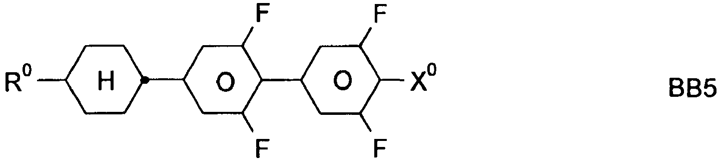 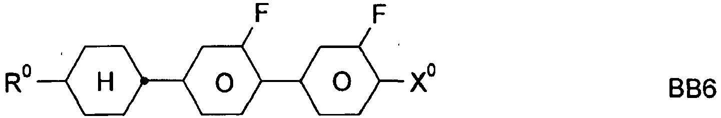 worin R⁰ und X⁰ die oben angegebene Bedeutung besitzen, und X⁰ vorzugsweise F bedeutet. Besonders bevorzugt sind Verbindungen der Formeln BB1, BB2 und BB5.
   Die Verbindungen der Formel CC sind vorzugsweise ausgewählt aus folgender Formel: 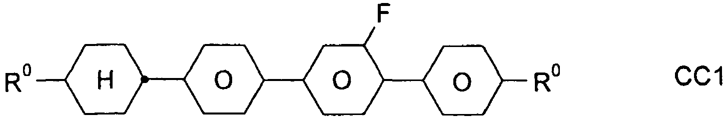 worin R⁰ bei jedem Auftreten gleich oder verschieden die oben angegebene Bedeutung besitzt, und vorzugsweise Alkyl mit 1 bis 6 C-Atomen bedeutet.
r) FK-Medium, welches außer den erfindungsgemäßen polymerisierbaren Verbindungen, insbesondere der Formel I oder deren Unterformeln, sowie den Comonomeren, keine Verbindungen enthält, die eine endständige Vinyloxygruppe (-O-CH=CH₂) aufweisen.
s) FK-Medium, welches 1 bis 5, vorzugsweise 1, 2 oder 3 polymerisierbare Verbindungen, vorzusgweise ausgewählt aus erfindungsgemäßen polymerisierbare Verbindungen, insbesondere der Formel I oder deren Unterformeln, enthält.
t) FK-Medium, worin der Anteil an polymerisierbaren Verbindungen, insbesondere der Formel I oder deren Unterformeln, im Gesamtgemisch 0,05 bis 5 %, vorzugsweise 0,1 bis 1 % beträgt.
u) FK-Medium, welches 1 bis 8, vorzugsweise 1 bis 5 Verbindungen der Formel CY1, CY2, PY1 und/oder PY2 enthält. Der Anteil dieser Verbindungen im Gesamtgemisch beträgt vorzugsweise 5 bis 60 %, besonders bevorzugt 10 bis 35 %. Der Gehalt dieser einzelnen Verbindungen beträgt vorzugsweise jeweils 2 bis 20 %.
v) FK-Medium, welches 1 bis 8, vorzugsweise 1 bis 5 Verbindungen der Formel CY9, CY10, PY9 und/oder PY10 enthält. Der Anteil dieser Verbindungen im Gesamtgemisch beträgt vorzugsweise 5 bis 60 %, besonders bevorzugt 10 bis 35 %. Der Gehalt dieser einzelnen Verbindungen beträgt vorzugsweise jeweils 2 bis 20 %.
w) FK-Medium, welches 1 bis 10, vorzugsweise 1 bis 8 Verbindungen der Formel ZK enthält, insbesondere Verbindungen der Formel ZK1, ZK2 und/oder ZK6. Der Anteil dieser Verbindungen im Gesamtgemisch beträgt vorzugsweise 3 bis 25%, besonders bevorzugt 5 bis 45 %. Der Gehalt dieser einzelnen Verbindungen beträgt vorzugsweise jeweils 2 bis 20 %.
x) FK-Medium, worin der Anteil an Verbindungen der Formel CY, PY und ZK im Gesamtgemisch mehr als 70 %, vorzugsweise mehr als 80 % beträgt,
y) PSA-VA-Anzeige, worin der pretilt-Winkel vorzugsweise ≤ 85°, besonderes bevorzugt ≤ 80° beträgt.

Die Kombination von Verbindungen der oben genannten bevorzugten Ausführungsformen a)-y) mit den oben beschriebenen polymerisierten Verbindungen bewirkt in den erfindungsgemäßen FK-Medien niedrige Schwellenspannungen, niedrige Rotationsviskositäten und sehr gute Tieftemperaturstabilitäten bei gleichbleibend hohen Klärpunkten und hohen HR-Werten, und erlaubt die schnelle Einstellung eines besonders niedrigen pretilt-Winkels in PSA-Anzeigen. Insbesondere zeigen die FK-Medien in PSA-Anzeigen im Vergleich zu den Medien aus dem Stand der Technik deutlich verringerte Schaltzeiten, insbesondere auch der Graustufenschaltzeiten.

Vorzugsweise weist die Flüssigkristallmischung einen nematischen Phasenbereich von mindestens 80 K, besonders bevorzugt von mindestens 100 K, und eine Rotationsviskosität von nicht mehr als 250, vorzugsweise nicht mehr als 200 mPa·s, bei 20°C auf.

Erfindungsgemäße FK-Medien zur Verwendung in Anzeigen des PSA-VA-Typs weisen eine negative dielektrische Anisotropie Δε auf, vorzugsweise von etwa -0,5 bis -10, insbesondere von etwa -2,5 bis -7,5 bei 20°C und 1 kHz.

In den erfindungsgemäßen Anzeigen des VA-Typs sind die Moleküle in der Schicht des FK-Mediums im ausgeschalteten Zustand senkrecht zu den Elektrodenflächen (homöotrop) oder gekippt homöotrop (engl. "tilted") orientiert. Bei Anlegen einer elektrischen Spannung an die Elektroden findet eine Umorientierung der FK-Moleküle mit den Moleküllängsachsen parallel zu den Elektrodenflächen statt.

In den erfindungsgemäßen Anzeigen des OCB-Typs sind die Moleküle in der Schicht des FK-Mediums eine "bend"-Orientierung auf. Bei Anlegen einer elektrischen Spannung findet eine Umorientierung der FK-Moleküle mit den Moleküllängsachsen senkrecht zu den Elektrodenflächen statt.

Erfindungsgemäße FK-Medien zur Verwendung in Anzeigen des PSA-OCB-Typs weisen vorzugsweise eine positive dielektrische Anisotropie Δε auf, vorzugsweise von etwa +4 bis +17 bei 20°C und 1 kHz.

Die Doppelbrechung Δn in erfindungsgemäßen FK-Medien zur Verwendung in Anzeigen des VA-Typs liegt vorzugsweise unter 0,16, besonders bevorzugt zwischen 0,06 und 0,14, insbesondere zwischen 0,07 und 0,12.

Die Doppelbrechung Δn in erfindungsgemäßen FK-Medien zur Verwendung in Anzeigen des OCB-Typs liegt vorzugsweise zwischen 0,14 und 0,22, insbesondere zwischen 0,16 und 0,22.

Die Doppelbrechung Δn in erfindungsgemäßen FK-Medien zur Verwendung in Anzeigen des PSA-TN-, PSA-IPS-, oder PSA-FFS-Typs liegt vorzugsweise zwischen 0,07 und 0,15, insbesondere zwischen 0,08 und 0,13. Die dielektrische Anisotropie dieser Medien liegt vorzugsweise zwischen +2 und +17, insbesondere zwischen +3 und +15.

Die erfindungsgemäßen FK-Medien können auch weitere, dem Fachmann bekannte und in der Literatur beschriebene Zusätze oder Additive enthalten, wie beispielsweise Polymerisationsinitiatoren, Inhibitoren, Stabilisatoren, oberflächenaktive Substanzen oder chirale Dotierstoffe. Diese können polymerisierbar oder unpolymerisierbar sein. Polymerisierbare Additive werden dementsprechend der polymerisierbaren Komponente oder Komponente A) zugerechnet. Unpolymerisierbare Additive werden dementsprechend der unpolymerisierbaren Komponente oder Komponente B) zugerechnet.

Die FK.Medien können beispielsweise einen oder mehrere chirale Dotierstoffe enthalten, vorzusgweise solche ausgewählt aus der Gruppe bestehend aus Verbindungen der nachfolgenden Tabelle B.

Ferner können den FK.Medien beispielsweise 0 bis 15 Gew.-% pleochroitische Farbstoffe zugesetzt werden, ferner Nanopartikel, Leitsalze, vorzugsweise Ethyl-dimethyldodecylammonium-4-hexoxy-benzoat, Tetrabutylammoniumtetraphenylborat oder Komplexsalze von Kronenethern (vgl. z.B. Haller et al., Mol. Cryst. Liq. Cryst. 24, 249-258 (1973)) zur Verbesserung der Leitfähigkeit, oder Substanzen zur Veränderung der dielektrischen Anisotropie, der Viskosität und/oder der Orientierung der nematischen Phasen. Derartige Substanzen sind z.B. in DE-A 22 09 127, 22 40 864, 23 21 632, 23 38 281, 24 50 088, 26 37 430 und 28 53 728 beschrieben.

Die einzelnen Komponenten der bevorzugten Ausführungsformen a)-z) der erfindungsgemäßen FK-Medien sind entweder bekannt, oder ihre Herstellungsweisen sind für den einschlägigen Fachmann aus dem Stand der Technik ohne weiteres abzuleiten, da sie auf in der Literatur beschriebenen Standardverfahren basieren. Entsprechende Verbindungen der Formel CY werden beispielsweise in EP-A-0 364 538 beschrieben. Entsprechende Verbindungen der Formel ZK werden beispielsweise in DE-A-26 36 684 und DE-A-33 21 373 beschrieben.

Die Herstellung der erfindungsgemäß verwendbaren FK-Medien erfolgt in an sich üblicher Weise, beispielsweise indem man eine oder mehrere der oben genannten Verbindungen mit einer oder mehreren polymerisierbaren Verbindungen wie oben definiert, und ggf. mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Das Verfahren zur Herstellung der erfindungsgemäßen FK-Medien ist ein weiterer Gegenstand der Erfindung.

Es versteht sich für den Fachmann von selbst, daß die erfindungsgemäßen FK-Medien auch Verbindungen enthalten können, worin beispielsweise H, N, O, Cl, F durch die entsprechenden Isotope ersetzt sind.

Der Aufbau der erfindungsgemäßen FK-Anzeigen entspricht der für PSA-Anzeigen üblichen Geometrie, wie er im eingangs zitierten Stand der Technik beschrieben ist. Es sind Geometrien ohne Protrusions bevorzugt, insbesondere diejenigen, bei denen darüber hinaus die Elektrode auf der Colour Filter-Seite unstrukturiert ist und lediglich die Elektrode auf der TFT-Seite Schlitze aufweist. Besonders geeignete und bevorzugte Elektrodenstrukturen für PSA-VA-Anzeigen sind beispielsweise in US 2006/0066793 A1 beschrieben.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschftskombinationen zugänglich sind.

Folgende Abkürzungen werden verwendet:
(n, m, z: jeweils unabhängig voneinander 1, 2, 3, 4, 5 oder 6)

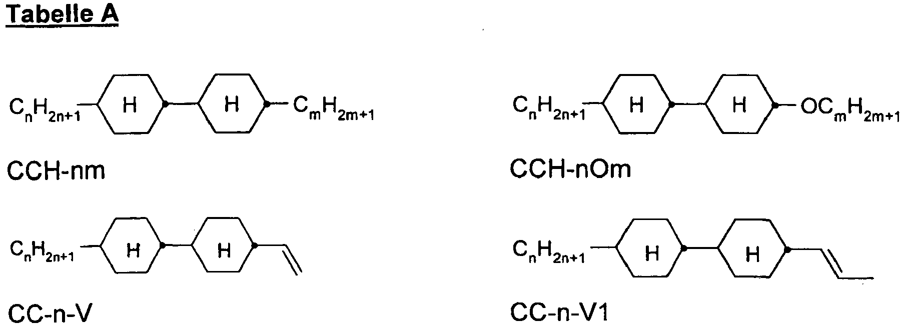

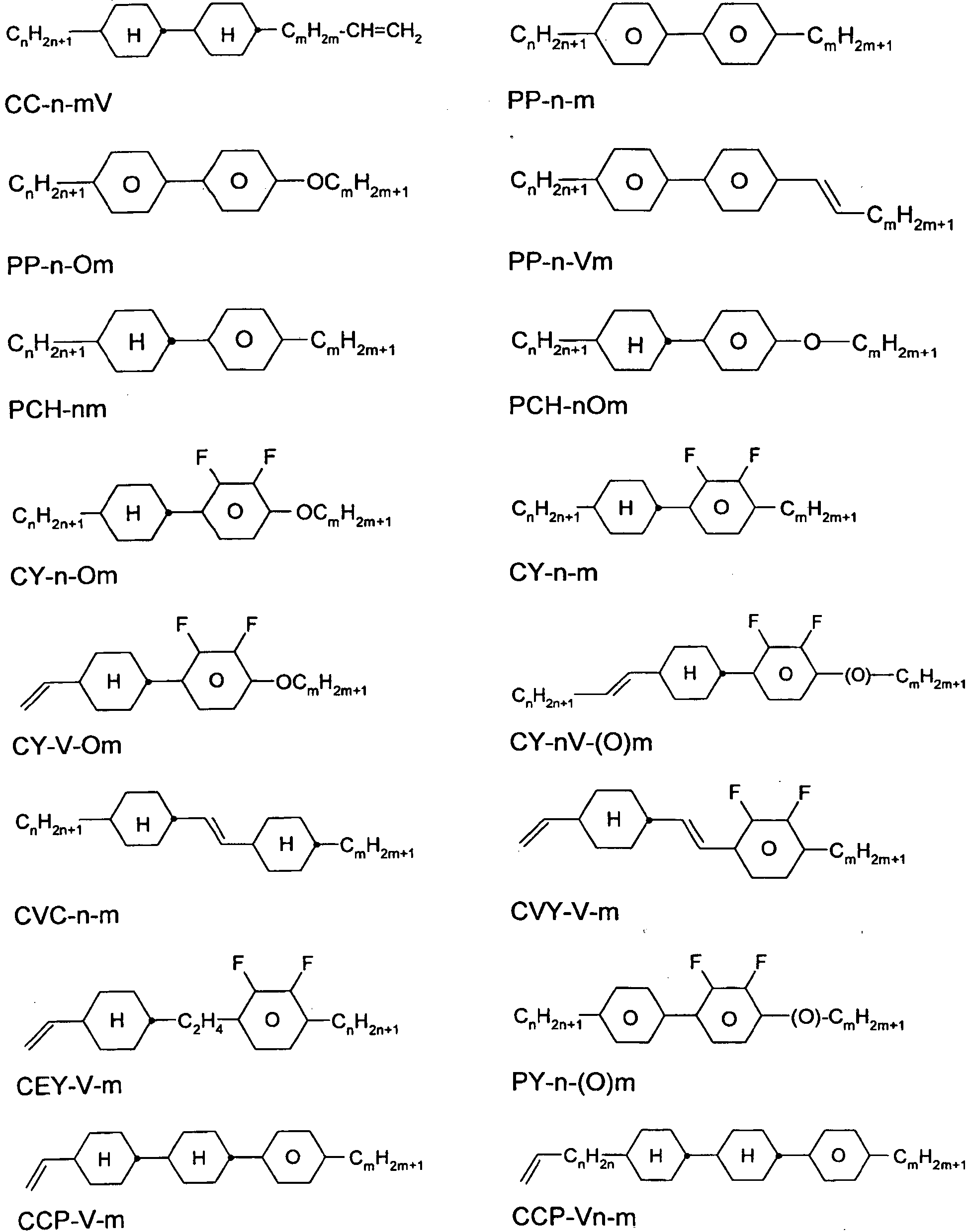

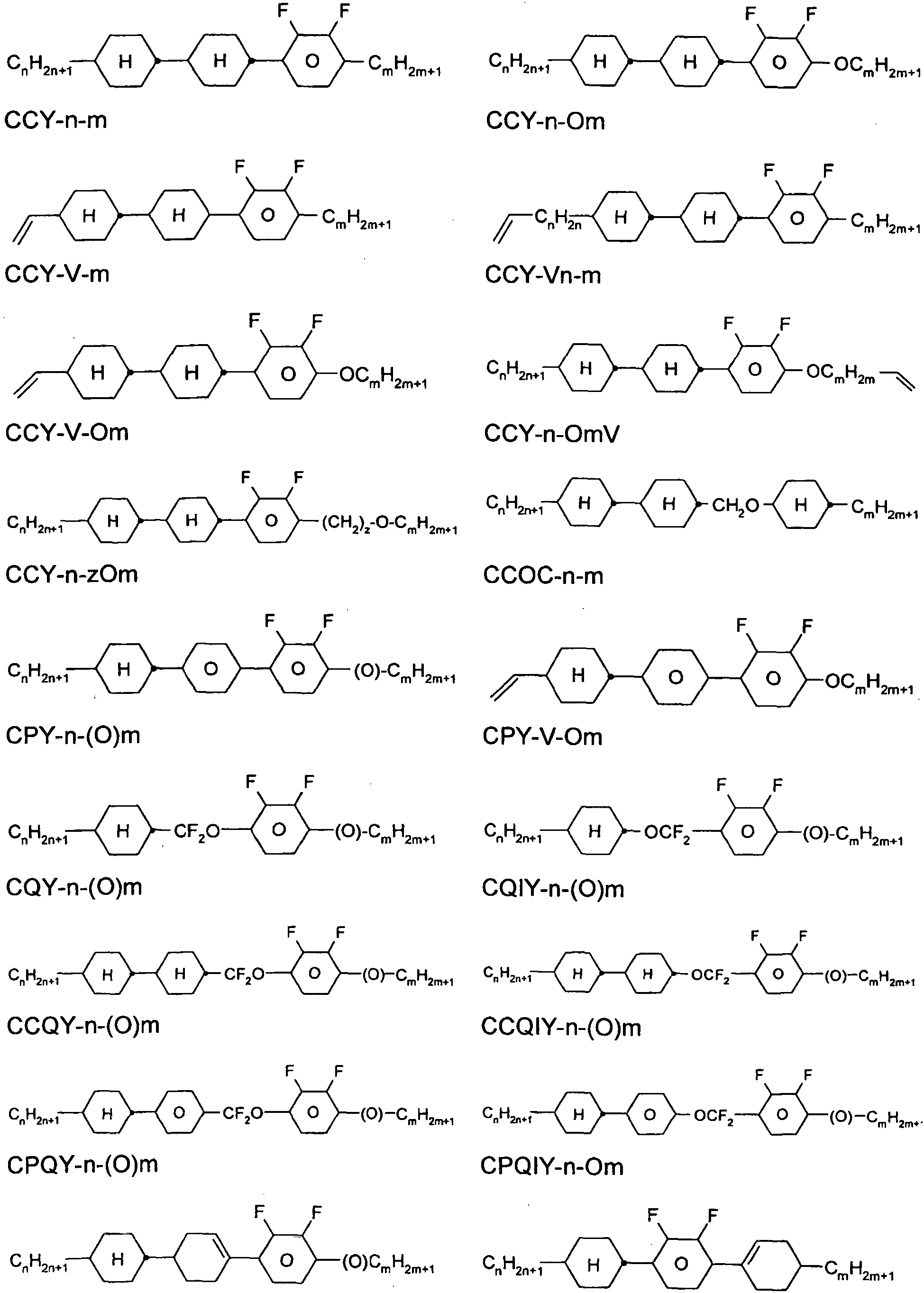

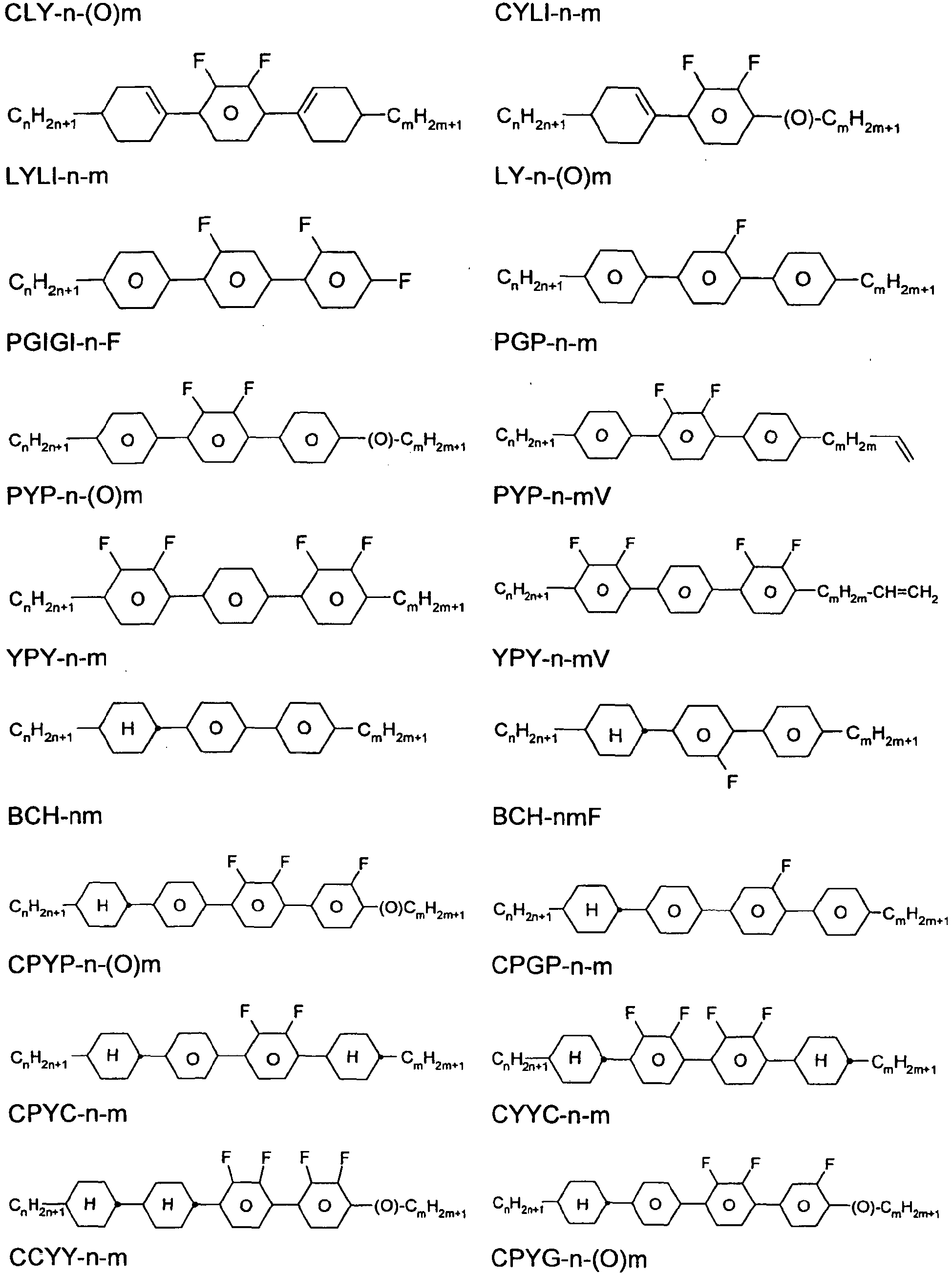

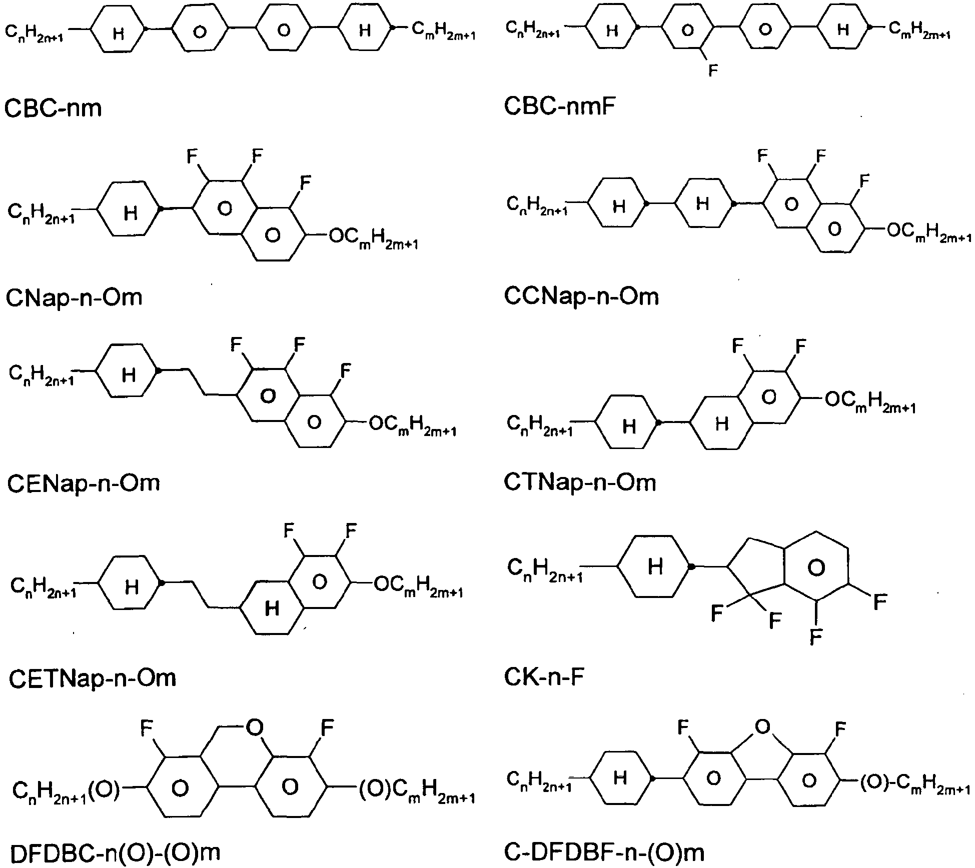

In einer bevorzugten Ausführungsform der vorliegenden Erfindung enthalten die erfindungsgemäßen FK-Medien eine oder mehrere Verbindungen ausgewählt aus der Guppe bestehend aus Verbindungen der Tabelle A.

**Tabelle B**

| | |
|---|---|
| In der Tabelle B werden mögliche chirale Dotierstoffe angegeben, die den erfindungsgemäßen FK-Medien zugesetzt werden können. | |
| 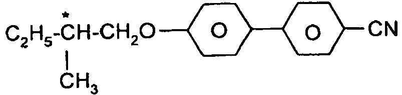 | 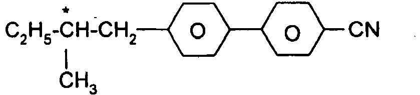 |
| **C 15** | **CB 15** |
| 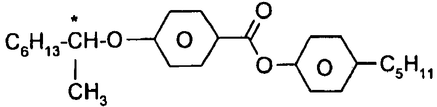 | 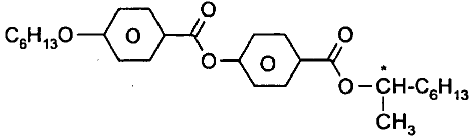 |
| **CM 21** | **R/S-811** |
| 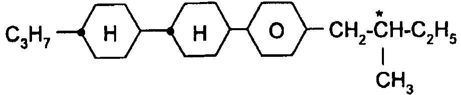 | 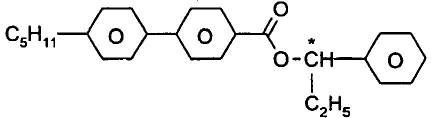 |
| **CM 44** | **CM 45** |
| 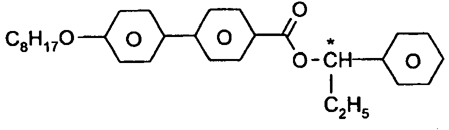 | 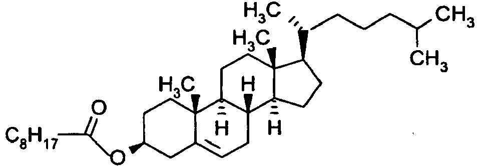 |
| **CM 47** | **CN** |
| 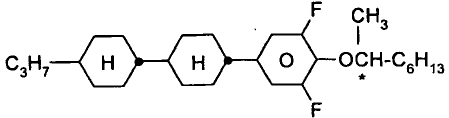 | 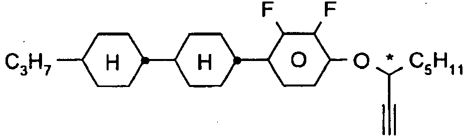 |
| **R/S-2011** | **R/S-3011** |
| 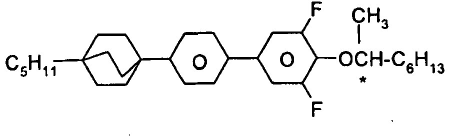 | 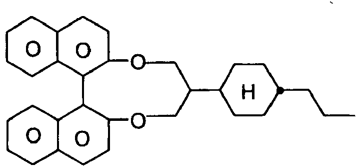 |
| **R/S-4011** | **R/S-5011** |
| 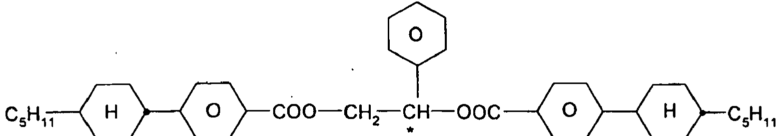 | |
| **R/S-1011** | |

Vorzugsweise enthalten die FK-Medien 0 bis 10 Gew.%, insbesondere 0,01 bis 5 Gew.%, besonders bevorzugt 0,1 bis 3 Gew.% an Dotierstoffen. Vorzugsweise enthalten die FK-Medien einen oder mehrere Dotierstoffe ausgewählt aus der Guppe bestehend aus Verbindungen der Tabelle B.

**Tabelle C**

| | |
|---|---|
| In der Tabelle C werden mögliche Stabilisatoren angegeben, die den erfindungsgemäßen FK-Medien zugesetzt werden können. (n bedeutet hier eine ganze Zahl von 1 bis 12, vorzugsweise 1, 2, 3, 4, 5, 6, 7 oder 8, endständige Methylgruppen sind nicht gezeigt). | |
| 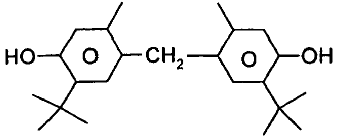 | 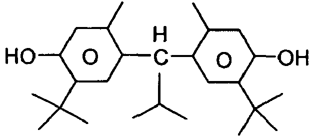 |
| 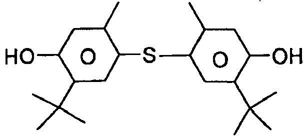 | 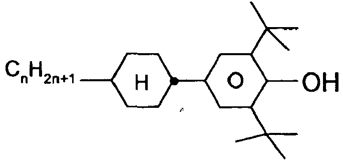 |
| 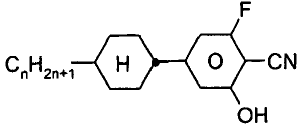 | 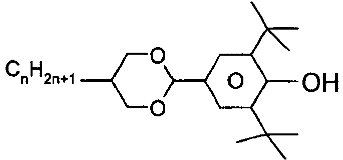 |
| 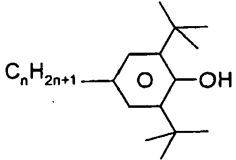 | 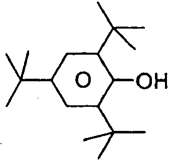 |
| 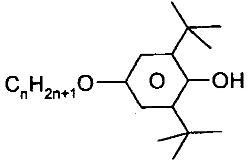 | 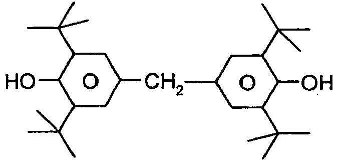 |
| 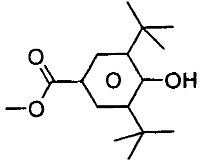 | 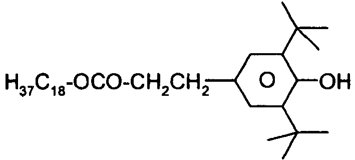 |
| 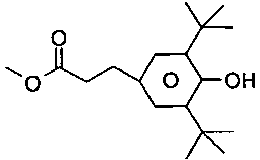 | 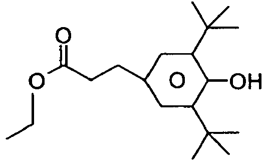 |
| 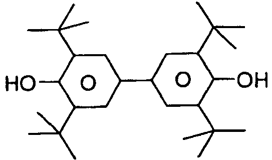 | 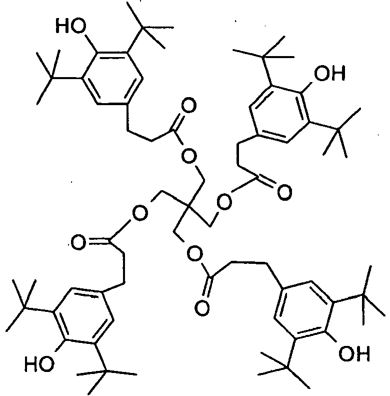 |
| 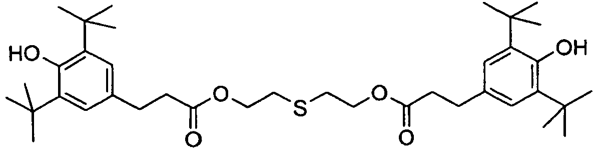 | |
| 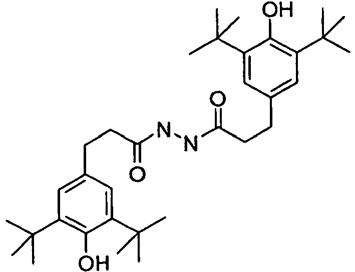 | 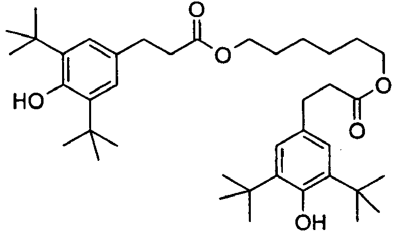 |
| 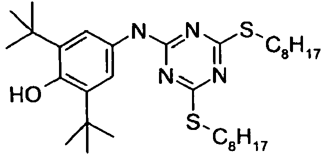 | 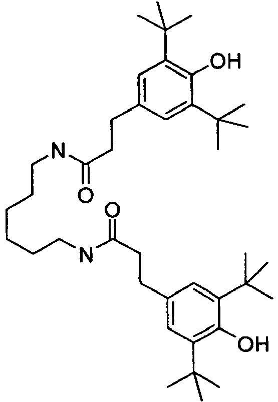 |
| 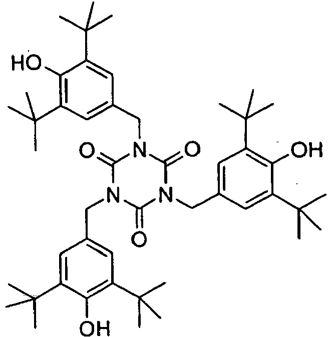 | 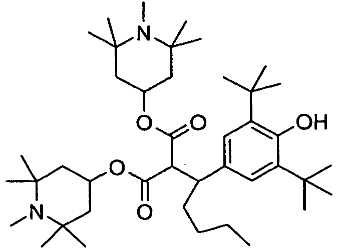 |
| 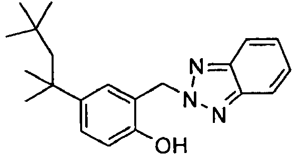 | 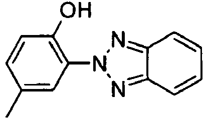 |
| 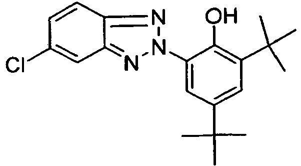 | 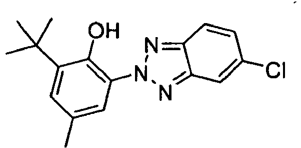 |
| 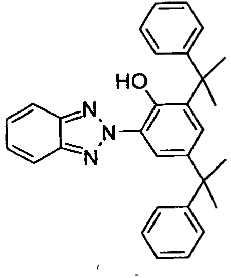 | 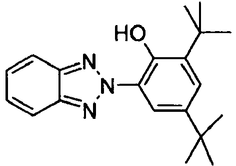 |
| 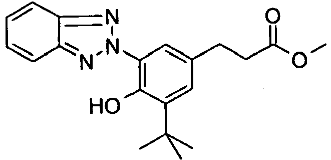 | 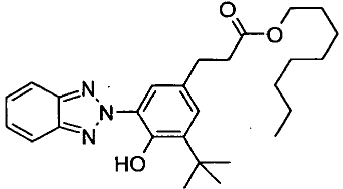 |
| 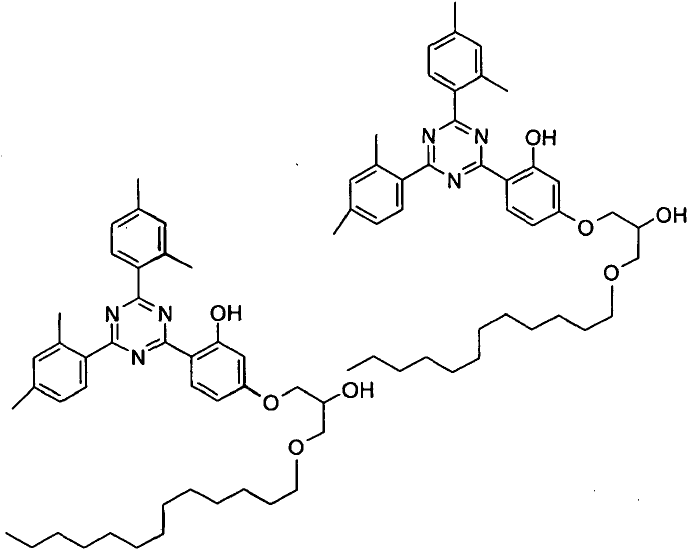 | |
| 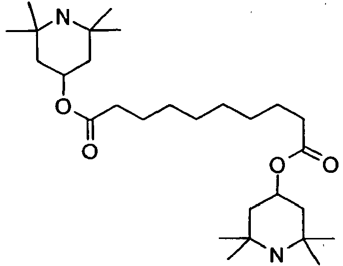 | 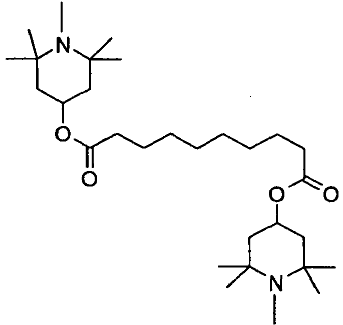 |

Vorzugsweise enthalten die FK-Medien 0 bis 10 Gew.%, insbesondere 1ppm bis 5 Gew.%, besonders bevorzugt 1ppm bis 1 Gew.% an Stabilisatoren. Vorzugsweise enthalten die FK-Medien einen oder mehrere Stabilisatoren ausgewählt aus der Gruppe bestehend aus Verbindungen der Tabelle C.

**Tabelle D**

| |
|---|
| In der Tabelle D sind Beispielverbindungen zusammengestellt, die in den FK-Medien gemäß der vorliegenden Erfindung vorzugsweise als reaktive mesogene Verbindungen verwendet werden können. |
| 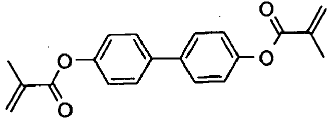 |
| **RM-1** |
| 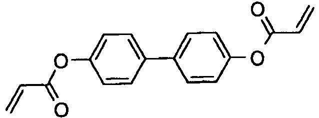 |
| **RM-2** |
| 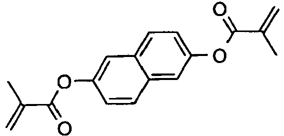 |
| **RM-3** |
| 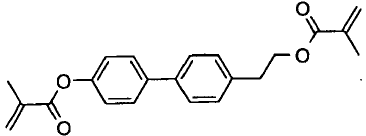 |
| **RM-4** |
| 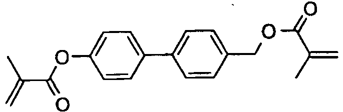 |
| **RM-5** |
| 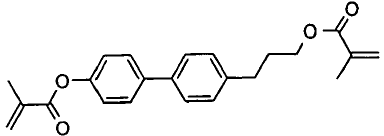 |
| **RM-6** |
| 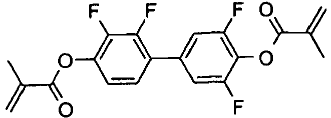 |
| **RM-7** |
| 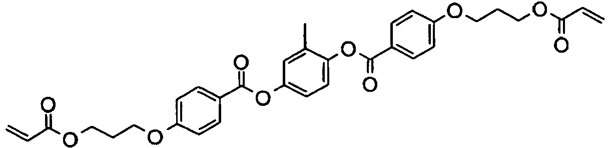 |
| **RM-8** |
| 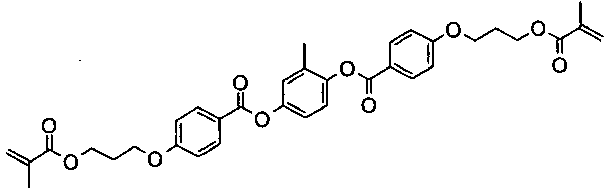 |
| **RM-9** |
| 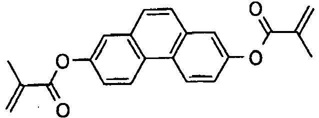 |
| **RM-10** |
| 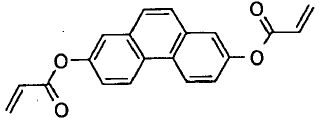 |
| **RM-11** |
| 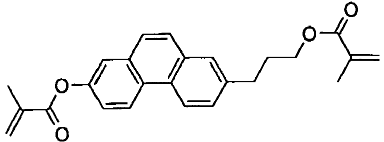 |
| **RM-12** |
| 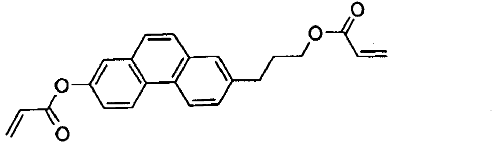 |
| **RM-13** |
| 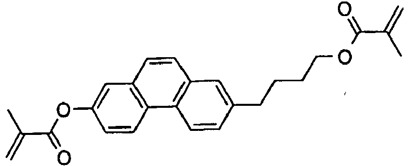 |
| **RM-14** |
| 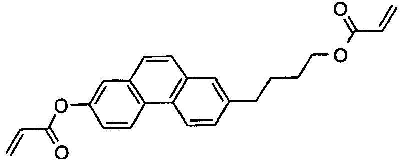 |
| **RM-15** |
| 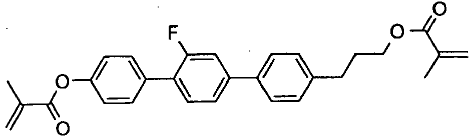 |
| **RM-16** |
| 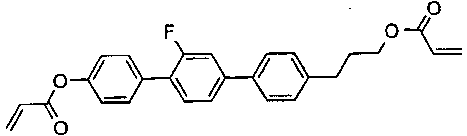 |
| **RM-17** |
| 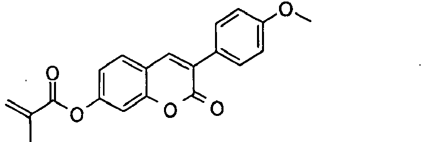 |
| **RM-18** |
| 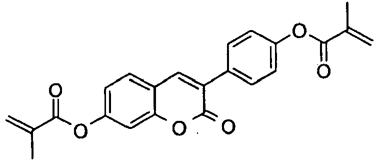 |
| **RM-19** |
| 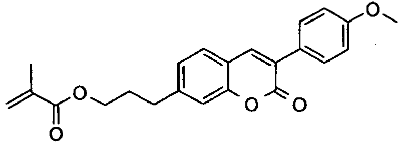 |
| **RM-20** |
| 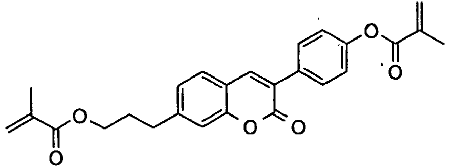 |
| **RM-21** |
| 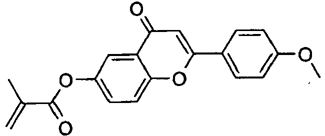 |
| **RM-22** |
| 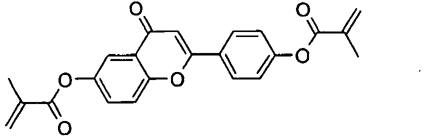 |
| **RM-23** |

In einer bevorzugten Ausführungsform der vorliegenden Erfindung enthalten die mesogenen Medien eine oder mehrere Verbindungen ausgewählt aus der Gruppe der Verbindungen der Tabelle D.

Außerdem werden folgende Abkürzungen und Symbole verwendet:
- Vₒ: Schwellenspannung, kapazitiv [V] bei 20°C,
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε_{⊥}: dielektrische Permittivität senkrecht zum Direktor bei 20°C und 1 kHz,
- ε_{∥}: dielektrische Permittivität parallel zum Direktor bei 20°C und 1 kHz,
- Δε: dielektrische Anisotropie bei 20°C und 1 kHz,
- Kp., T(N,I): Klärpunkt [°C],
- γ₁: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN].

Soweit nicht explizit anders vermerkt, sind in der vorliegenden Anmeldung alle Konzentrationen in Gewichtsprozent angegeben und beziehen sich auf die entsprechende Gesamtmischung, enthaltend alle festen oder flüssigkristallinen Komponenten, ohne Lösungsmittel.

Soweit nicht explizit anders vermerkt, sind in der vorliegenden Anmeldung alle angegebenen Werte für Temperaturen, wie z. B. der Schmelzpunkt T(C,N), der Übergang von der smektischen (S) zur nematischen (N) Phase T(S,N) und der Klärpunkt T(N,I), in Grad Celsius (°C) angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und Δε bei 1 kHz bestimmt, sofern nicht jeweils explizit anders angegeben.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen kann auch, wie allgemein üblich, die optische Schwelle für 10 % relativen Kontrast (V₁₀) angegeben werden.

Die zur Messung der kapazitiven Schwellenspannung verwendete Anzeige besteht aus zwei planparallelen Glasträgerplatten im Abstand von 20 µm, welche auf den Innenseiten jeweils ein Elektrodenschicht sowie eine darüberliegende, ungeriebene Orientierungsschicht aus Polyimid aufweisen, die eine homöotrope Randorientierung der Flüssigkristallmoleküle bewirken.

Die zur Messung der Tiltwinkel verwendete Anzeige bzw. Testzelle besteht aus zwei planparallelen Glasträgerplatten im Abstand von 4 µm, welche auf den Innenseiten jeweils eine Elektrodenschicht sowie eine darüberliegende Orientierungsschicht aus Polyimid aufweisen, wobei die beiden Polyimidschichten antiparallel zueinander gerieben werden und eine homöotrope Randorientierung der Flüssigkristallmoleküle bewirken.

Die polymerisierbaren Verbindungen werden in der Anzeige bzw. Testzelle durch Bestrahlung mit UVA-Licht (üblicherweise 365nm) einer definierten Intensität für eine vorgegebene Zeit polymerisiert, wobei gleichzeitig eine Spannung an die Anzeige angelegt wird (üblicherweise 10V bis 30V Wechselstrom, 1 kHz). In den Beispielen wird, falls nicht anders angegeben, eine Quecksilberdampflampe mit 50 mW/cm² verwendet, die Intensität wird mit einem Standard-UV-Meter (Fabrikat Ushio UNI meter) gemessen, der mit einem Bandpassfilter bei 365nm ausgerüstet ist.

Der Tiltwinkel wird per Drehkristall-Experiment (Autronic-Melchers TBA-105) bestimmt. Ein niedriger Wert (d.h. eine große Abweichung vom 90°-Winkel) entspricht dabei einem großen Tilt.

Der VHR -Wert wird wie folgt gemessen: Zur FK-Host-Mischung werden 0.3% einer polymerisierbaren monomeren Verbindung zugesetzt, und die dadurch entstandene Mischung in TN-VHR-Testzellen gefüllt (90° gerieben, Orientierungsschicht TN-Polyimid, Schichtdicke d ≈ 6 µm). Der HR-Wert wird nach 5min bei 100°C vor und nach 2h UV-Belastung (suntest) bei 1V, 60Hz, 64µs pulse bestimmt (Messgerät: Autronic-Melchers VHRM-105).

Zur Untersuchung der Tieftemperaturstabilität, auch als "LTS" (low temperature stability) bezeichnet, d.h. der Stabilität der FK-Mischung gegen spontane Auskristallisation einzelner Komponenten bei tiefen Temperaturen, werden Fläschchen mit 1g FK/RM-Mischung bei -10°C eingelagert und es wird regelmäßig überprüft, ob die Mischungen auskristallisiert waren.

### Beispiel 1

Die nematische FK-Mischung N1 wird wie folgt formuliert

| | | | |
|---|---|---|---|
| CCH-501 | 9,00 % | Kp. | + 70,0 |
| CCH-35 | 14,00 % | Δn | 0,0825 |
| PCH-53 | 8,00 % | Δε | -3,5 |
| CY-3-O4 | 14,00 % | ε_{∥} | 3,5 |
| CY-5-O4 | 13,00 % | K₃/K₁ | 1,00 |
| CCY-3-O2 | 8,00 % | γ_{□} | 141 |
| CCY-5-O2 | 8,00 % | V₀ | 2,06 |
| CCY-2-1 | 9,00 % | | |
| CCY-3-1 | 9,00 % | | |
| CPY-2-O2 | 8,00 % | | |

Die folgenden polymerisierbaren Verbindungen werden getestet:

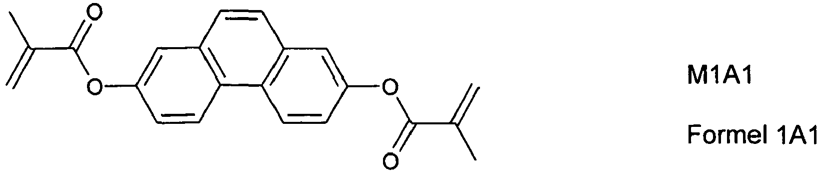

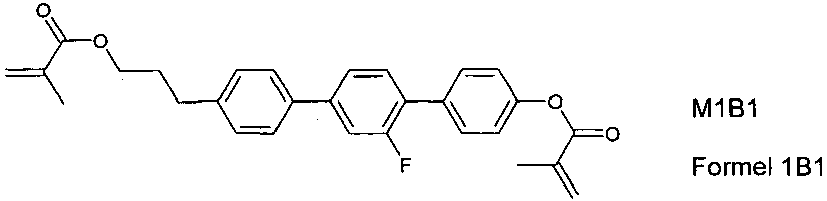

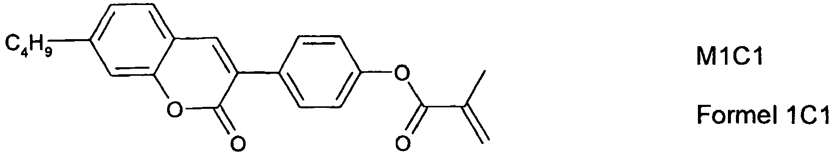

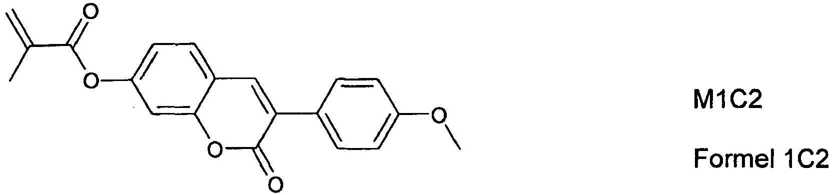

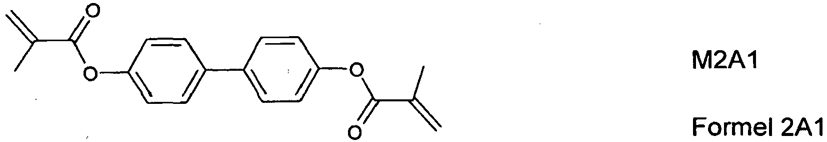

Zur FK-Mischung N1 werden polymerisierbare monomere Verbindungen der oben gezeigten Formeln in den jeweils angegebenen Mengen und Kombinationen zugesetzt, und die dadurch entstandenen Mischungen in VA-e/o-Testzellen gefüllt (alkalifreies Glas, antiparallel gerieben, Orientierungsschicht VA-Polyimid, Schichtdicke d ≈ 4µm). Unter Anlegen einer Spannung von 24 V (Wechselstrom) werden die Zellen in der angegebenen Zeit mit UV-Licht der Intensität 100 mW/cm² bestrahlt, dadurch erfolgt Polymerisation der monomeren Verbindung. Vor und nach der UV-Bestrahlung wird per Drehkristall-Experiment (Autronic-Melchers TBA-105) der Tiltwinkel bestimmt.

Die vergleichenden Tiltwinkelergebnisse sind in Tabelle 1 aufgeführt.

**Tabelle 1 (t = Belichtungszeit)**

| | 0,3% M2A1 | 0,25% M2A1 + 0,05% M1A1 | 0,25% M2A1 + 0,05% M1 B1 | 0,25% M2A1 + 0,05% M1C1 |
|---|---|---|---|---|
| t /s | Tiltwinkel / ° | | | |
| 0 | 88,3 | 88,3 | 88,2 | 88,2 |
| 120 | 83,4 | 77,7 | 78,9 | 80,2 |
| 240 | 76,3 | 71,0 | 72,6 | 75,8 |
| 360 | 74,8 | 70,3 | 72,2 | 75,1 |

Zur Bestimmung der Polymerisationsgeschwindigkeit wird der Restgehalt an unpolymerisiertem RM (in Gew.%) in den Testzellen nach verschiedenen Belichtungszeiten mit der HPLC-Methode gemessen. Dazu wird jede Mischung jeweils unter den angegebenen Bedingungen in der Testzelle polymerisiert. Danach wird die Mischung mit MEK (Methylethylketon) aus der Testzelle gespült und vermessen.

Die RM-Konzentrationen nach verschiedenen Belichtungszeiten sind in Tabelle 2 zusammengefasst.

**Tabelle 2 (t = Belichtungszeit)**

| | 0,3% M2A1 | 0,25% M2A1 + 0,05% M1A1 | 0,25% M2A1 + 0,05% M1B1 | 0,25% M2A1 + 0,05% M1C1 |
|---|---|---|---|---|
| t/s | RM-Konzentration / % | | | |
| 0 | 0,300 | 0,300 | 0,300 | 0,300 |
| 120 | 0,251 | 0,180 | 0,175 | 0,154 |
| 240 | 0,140 | 0,078 | 0,108 | 0,108 |
| 360 | 0,080 | 0,054 | 0,051 | 0,051 |

Der VHR -Wert wird wie folgt gemessen: Zur FK-Host-Mischung N1 werden eine oder mehrere polymerisierbare monomere Verbindungen in den jeweils angegebenen Mengen zugesetzt, und die dadurch entstandene Mischung in VHR-Testzellen gefüllt (Orientierungsschicht VA-Polyimid, homöotrope Orientierung). Der VHR-Wert wird nach 5min Wartezeit bei 100°C vor und nach entsprechender Belastung bei 1V, 60Hz, 64µs pulse bestimmt (Messgerät: Autronic-Melchers VHRM-105). Zu Vergleichszwecken wird eine Messung mit der reinen FK-Mischung N1 (d.h. ohne Zusatz von Monomeren) durchgeführt.

Die jeweiligen VHR-Werte sind in Tabelle 3 zusammengefasst.

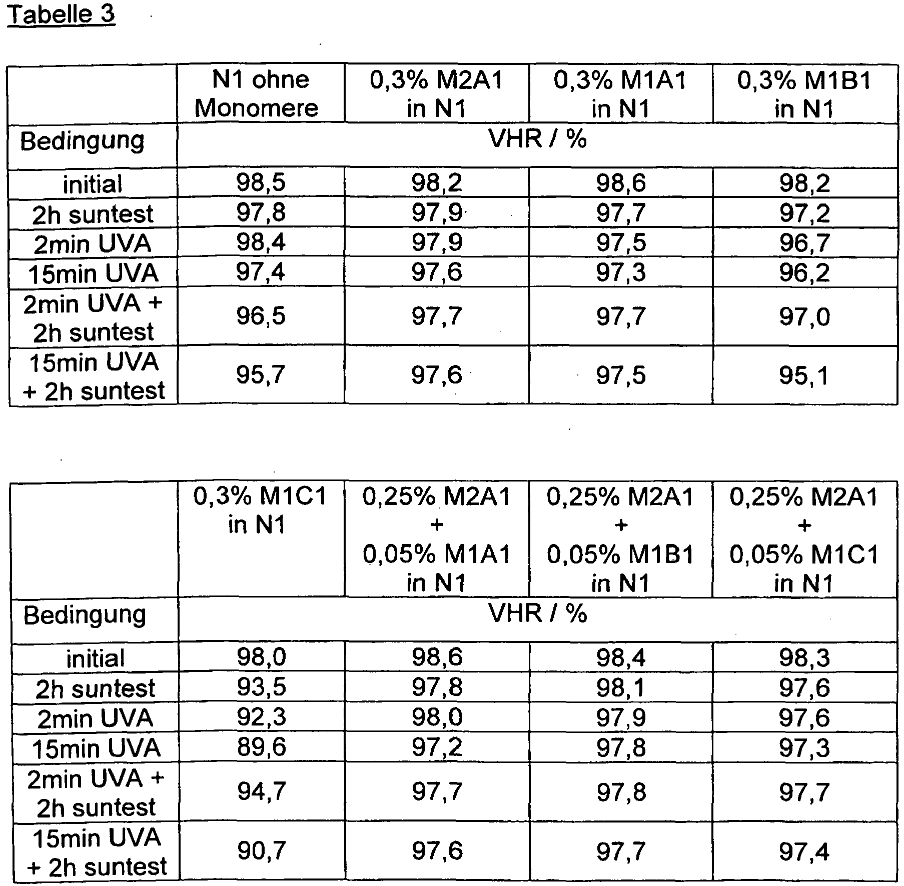

Die oben beschriebenen Versuche werden in analoger Weise für die polymerisierbare monomere Verbindung M1C2 der oben gezeigten Formel 1 C2 durchgeführt. Unterschiede zu den oben beschriebenen Versuchsbedingungen sind in der jeweiligen Tabelle angegeben.

Die vergleichenden Tiltwinkelergebnisse sind in Tabelle 4 aufgeführt.

**Tabelle 4 (t = Belichtungszeit), Intensität 50mW/cm²**

| | 0,3% M2A1 | 0,25% M2A1 + 0,05% M1C2 |
|---|---|---|
| t/s | Tiltwinkel / ° | |
| 0 | 89,2 | 89,6 |
| 30 | 89,1 | 88,5 |
| 60 | 88,4 | 85,7 |
| 120 | 83,9 | 81,5 |
| 240 | 76,5 | 77,9 |
| 360 | - | 75,3 |

Die RM-Konzentrationen nach verschiedenen Belichtungszeiten sind in Tabelle 5 zusammengefasst.

**Tabelle 5 (t = Belichtungszeit), Intensität 50mW/cm², Testzellen aus Kalk-Natronglas**

| | 0,3% M2A1 | 0,25% M2A1 + 0,05% M1C2 |
|---|---|---|
| t/s | RM-Konzentration / % | |
| 0 | 0,300 | 0,300 |
| 120 | 0,268 | 0,181 |
| 240 | 0,226 | 0,134 |
| 360 | 0,176 | 0,116 |

Die jeweiligen VHR-Werte sind in Tabelle 6 zusammengefasst.

**Tabelle 6, Testzellen mit TN Polyimid, planare Orientierung**

| | N1 ohne Monomere | 0,3% M2A1 in N1 | 0,3% M1C2 in N1 | 0,25% M2A1 + 0,05% M1C2 in N1 |
|---|---|---|---|---|
| Bedingung | VHR / % | | | |
| initial | 93,8 | 91,6 | 91,8 | 92,9 |
| 2h suntest | 89,3 | 92,2 | 86,9 | 92,0 |

Aus den Tabellen 1, 2, 4 und 5 ist ersichtlich, dass der Beginn der Polymerisation und die Tiltwinkelgenerierung durch Zugabe einer ersten polymerisierbaren Verbindung (M1A1-M1C1) zu der zweiten polymerisierbaren Verbindung (M2A1) beschleunigt wird. Dieses Verhalten der ersten polymerisierbaren Verbindung entspricht dem eines typischen Photoinitiators. Die daraus resultierenden Vorteil sind eine schnellere Einstellung des gewünschten Tiltwinkels sowie eine schnellere Polymerisation, d.h. geringerer Rest-RM Anteil, in der späteren Anzeige.

Aus Tabelle 3 und 6 ist zudem ersichtlich, dass bei Verwendung einer Kombination aus einer ersten polymerisierbaren Verbindung (M1A1-M1C1) und einer zweiten polymerisierbaren Verbindung (M2A1) zusätzlich sehr gute VHR-Werte auch nach sehr langen UV-Belichtungen realisiert werden können. Dies ist mit der Verwendung einer jeweils einzelnen polymerisierbaren Verbindung nicht möglich, falls eine schnelle Polymerisation angestrebt wird. Die polymerisierbaren Verbindungen 1C1 und 1 C2 zeigen z.B. jeweils ein relativ niedriges VHR nach UV-Belastung. Die Kombination dieser polymerisierbaren Verbindung mit einer zweiten polymerisierbaren Verbindung M2A1 führt jedoch zu einem sehr guten VHR nach UV-Belastung.

Die Polymerisation und Tiltwinkelgenerierung verläuft in einer FK-Mischung enthaltend eine Kombination aus zwei polymerisierbaren Verbindungen somit schneller als in einer FK-Mischung, die nur die polymerisierbare Verbindung M2A1 enthält. Ausserdem kann zusätzlich zu einer schnelleren Reaktionsgeschwindigkeit auch ein sehr guter VHR-Wert erreicht werden.

## Patentansprüche

1. Polymerisierbare Mischung enthaltend mindestens eine erste polymerisierbare Verbindung und mindestens eine zweite polymerisierbare Verbindung, wobei die erste polymerisierbare Verbindung die Polymerisation der zweiten polymerisierbaren Verbindung initiiert und/oder beschleunigt, **dadurch gekennzeichnet, dass** die erste polymerisierbare Verbindung ausgewählt ist aus der Gruppe bestehend aus folgenden Formeln: 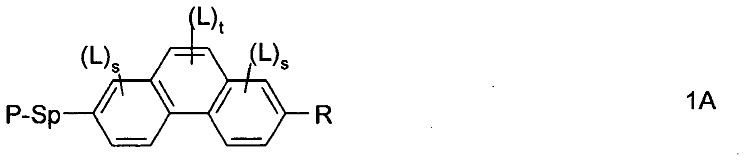 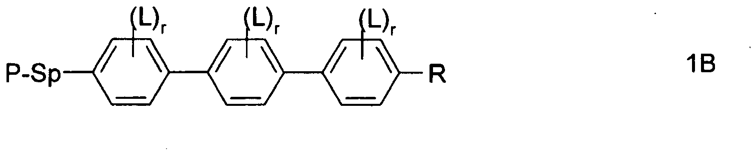 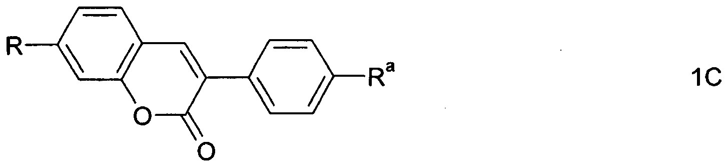 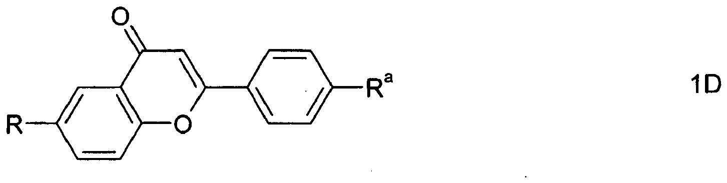 worin die einzelnen Reste folgende Bedeutung besitzen
L bei jedem Auftreten gleich oder verschieden F, Cl, CN, oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen,
r 0, 1, 2, 3 oder 4,
s 0, 1, 2 oder 3,
t 0, 1 oder 2.
P bei jedem Auftreten gleich oder verschieden eine polymerisierbare Gruppe,
Sp bei jedem Auftreten gleich oder verschieden eine Abstandsgruppe oder eine Einfachbindung,
R, R^{a} jeweils unabhängig voneinander P-Sp-, H, F, Cl, Br, I, -CN, - NO₂, -NCO, -NCS, -OCN, -SCN, SF₅, geradkettiges oder verzweigtes Alkyl mit 1 bis 25 C-Atomen, worin auch eine oder mehrere nicht benachbarte CH₂-Gruppen jeweils unabhängig voneinander durch Arylen, -C(R⁰)=C(R⁰⁰)-, - C≡C-, -N(R⁰)- -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN oder P-Sp- ersetzt sein können, oder Aryl oder Heteroaryl, vorzugsweise mit 2 bis 25 C-Atomen, welches auch zwei oder mehr anellierte Ringe enthalten kann und welches optional durch L' ein- oder mehrfach substituiert ist, wobei in Formel 1C und 1 D mindestens einer der Reste R und R^{a} P-Sp- bedeutet,
L' bei jedem Auftreten gleich oder verschieden P-Sp-, H, OH, CH₂OH, Halogen, SF₅, NO₂, eine Kohlenstoffgruppe oder Kohlenwasserstoffgruppe,
R⁰, R⁰⁰ jeweils unabhängig voneinander und bei jedem Auftreten gleich oder verschieden H oder Alkyl mit 1 bis 12 C-Atomen,
bedeuten.

2. Polymerisierbare Mischung nach Anspruch 1, **dadurch gekennzeichnet, dass** die zweite polymerisierbare Verbindung ausgewählt ist aus der Gruppe bestehend aus folgenden Formeln: 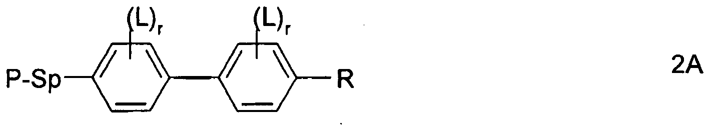 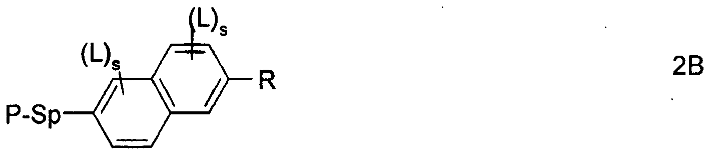 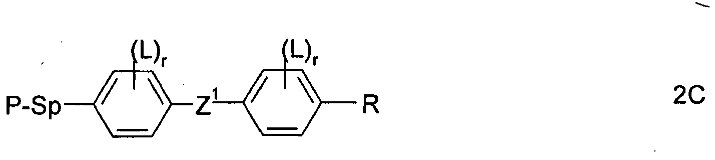 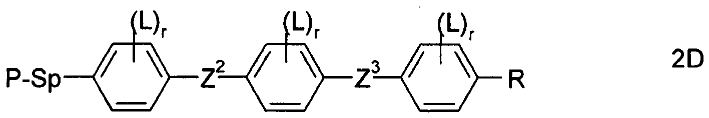 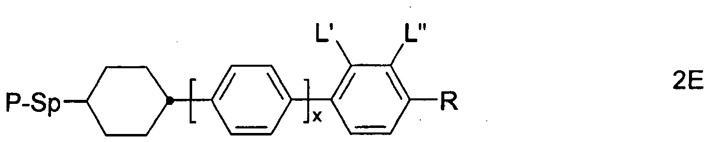 worin P, Sp, R, L und r die in Anspruch 4 angegebene Bedeutung besitzen,
Z¹ -O-, -CO-, -CO-O, -O-CO-, -C(R^{y}R^{z})-,oder -CF₂CF₂-,
R^{y} und R^{z} jeweils unabhängig voneinander H, F, CH₃ oder CF₃,
Z² und Z³ jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
L' und L" jeweils unabhängig voneinander H, F oder Cl, und
x 0 oder 1,
bedeuten.

3. FK-Medium enthaltend eine polymerisierbare Mischung nach Anspruch 1 oder 2.

4. FK-Medium nach Anspruch 3, enthaltend
- eine polymerisierbare Komponente A) enthaltend eine polymerisierbare Mischung nach Anspruch 1 oder 2, sowie
- eine flüssigkristalline Komponente B) enthaltend eine oder mehrere niedermolekulare Verbindungen.

5. FK-Medium enthaltend ein Polymer, welches durch Polymerisation einer polymerisierbaren Mischung nach einem oder mehreren der Ansprüche 1 bis 4 erhältlich ist, sowie eine oder mehrere zusätzliche Verbindungen, welche auch mesogen, flüssigkristallin und/oder polymerisierbar sein können.

6. FK-Medium nach einem oder mehreren der Ansprüche 3 bis 5,
**dadurch gekennzeichnet, dass** es eine oder mehrere Verbindungen der Formel CY und/oder PY enthält: 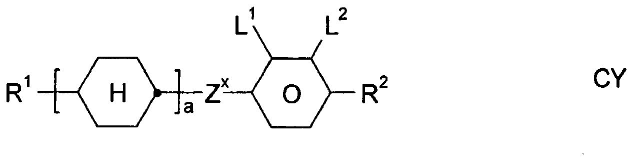 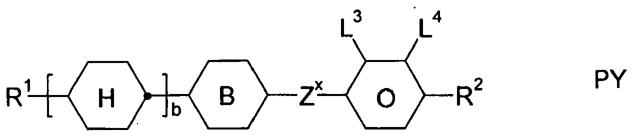 worin die einzelnen Reste folgende Bedeutung besitzen
a 1 oder 2,
b 0 oder 1, 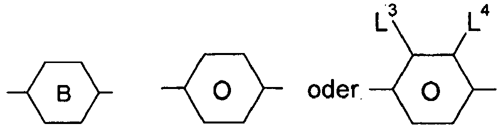
R¹ und R² jeweils unabhängig voneinander Alkyl mit 1 bis 12 C-Atomen, wobei auch eine oder zwei nicht benachbarte CH₂-Gruppen durch -O-, -CH=CH-, -CO-, -O-CO- oder -CO-O- so ersetzt sein können, dass O-Atome nicht direkt miteinander verknüpft sind,
Z^{x} -CH=CH-, -CH₂O-, -OCH₂-, -CF₂O-, -OCF₂-, -O-, -CH₂-, -CH₂CH₂-, oder eine Einfachbindung, vorzugsweise eine Einfachbindung,
L¹⁻⁴ jeweils unabhängig voneinander F, Cl, OCF₃, CF₃, CH₃, CH₂F, CHF₂.

7. FK-Medium nach einem oder mehreren der Ansprüche 3 bis 6, **dadurch gekennzeichnet, dass** es eine oder mehrere Verbindungen der folgenden Formel enthält: 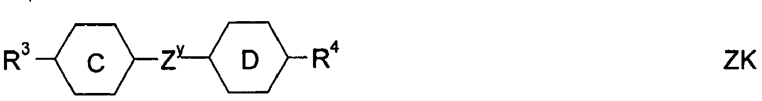 worin die einzelnen Reste folgende Bedeutung besitzen 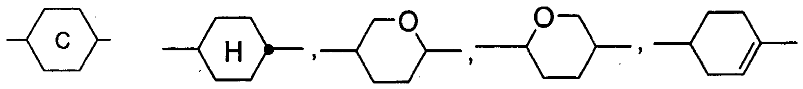 oder 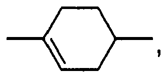 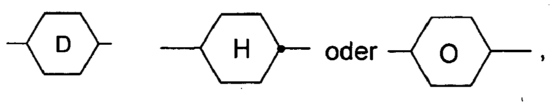
R³ und R⁴ jeweils unabhängig voneinander Alkyl mit 1 bis 12 C-Atomen, worin auch eine oder zwei nicht benachbarte CH₂-Gruppen durch -O-, -CH=CH-, -CO-, -O-CO- oder -CO-O- so ersetzt sein können, dass O-Atome nicht direkt miteinander verknüpft sind,
Z^{y} -CH₂CH₂-, -CH=CH-, -CF₂O-, -OCF₂-, -CH₂O-, -OCH₂-, -COO-, -OCO-, -C₂F₄-, -CF=CF- oder eine Einfachbindung.

8. Verwendung einer polymerisierbaren Mischung oder eines FK-Mediums nach einem oder mehreren der Ansprüche 1 bis 7 in FK-Anzeigen des PS- oder PSA-Typs.

9. FK-Anzeige enthaltend eine polymerisierbare Mischung oder ein FK-Medium nach einem oder mehreren der Ansprüche 1 bis 8.

10. Verwendung oder FK-Anzeige nach Anspruch 8 oder 9, **dadurch gekennzeichnet, dass** die FK-Anzeige eine FK-Zelle mit zwei Substraten und zwei Elektroden enthält, wobei mindestens ein Substrat lichtdurchlässig ist und mindestens ein Substrat eine oder zwei Elektroden aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer polymerisierbaren Mischung nach einem oder mehreren der Ansprüche 1 bis 2 zwischen den Substraten der FK-Zelle im FK-Medium, vorzugsweise unter Anlegen einer elektrischen Spannung an die Elektroden.

11. Verwendung oder FK-Anzeige nach einem oder mehreren der Ansprüche 8 bis 10, **dadurch gekennzeichnet, dass** sie eine PSA-VA-, PSA-OCB-, PSA-Posi-VA-, PSA-IPS-, PSA-FFS- oder PSA-TN-Anzeige ist.

12. Verfahren zu Herstellung einer FK-Anzeige des PS- oder PSA-Typs, indem man ein FK-Medium nach einem oder mehreren der Ansprüche 3 bis 7 in eine FK-Zelle mit zwei Substraten und zwei Elektroden, wobei mindestens ein Substrat lichtdurchlässig ist und mindestens ein Substrat eine oder zwei Elektroden aufweist, füllt, und die polymerisierbare Mischung, vorzugsweise unter Anlegen einer elektrischen Spannung an die Elektroden, polymerisiert.

## Claims

1. Polymerisable mixture comprising at least one first polymerisable compound and at least one second polymerisable compound, where the first polymerisable compound initiates and/or accelerates the polymerisation of the second polymerisable compound, **characterised in that** the first polymerisable compound is selected from the group consisting of the following formulae: 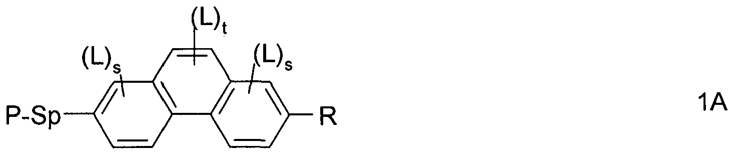 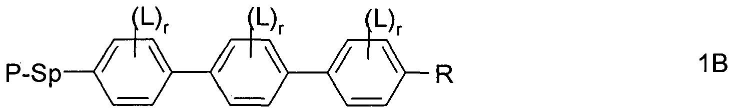 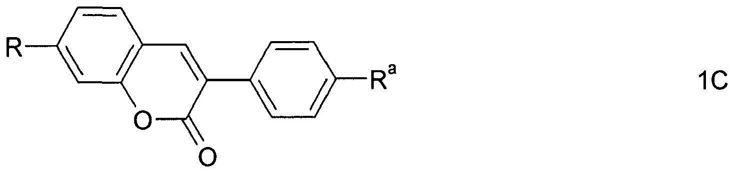 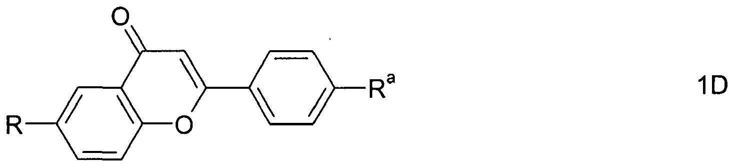 in which the individual radicals have the following meaning:
L on each occurrence, identically or differently, denotes F, Cl, CN, or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms,
r denotes 0, 1, 2, 3 or 4,
s denotes 0, 1, 2 or 3,
t denotes 0, 1 or 2,
P on each occurrence, identically or differently, denotes a polymerisable group,
Sp on each occurrence, identically or differently, denotes a spacer group or a single bond,
R, R^{a} each, independently of one another, denote P-Sp-, H, F, Cl, Br, I, -CN, -NO₂, -NCO, -NCS, -OCN, -SCN, SF₅, straight-chain or branched alkyl having 1 to 25 C atoms, in which, in addition, one or more non-adjacent CH₂ groups may each be replaced, independently of one another, by arylene, -C(R⁰)=C(R⁰⁰)- -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN or P-Sp-, or aryl or heteroaryl, preferably having 2 to 25 C atoms, which may also contain two or more fused rings and which is optionally mono- or polysubstituted by L', where at least one of the radicals R and R^{a} in the formulae 1C and 1D denotes P-Sp-,
L' on each occurrence, identically or differently, denotes P-Sp-, H, OH, CH₂OH, halogen, SF₅, NO₂, a carbon group or a hydrocarbon group,
R⁰, R⁰⁰ each, independently of one another and on each occurrence identically or differently, denote H or alkyl having 1 to 12 C atoms.

2. Polymerisable mixture according to Claim 1, **characterised in that** the second polymerisable compound is selected from the group consisting of the following formulae: 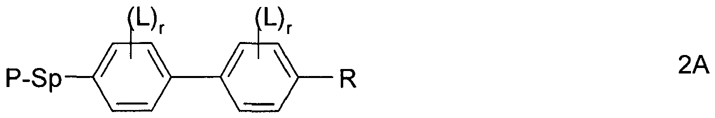 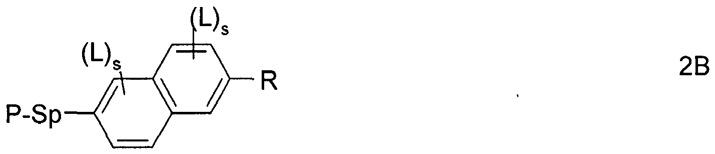 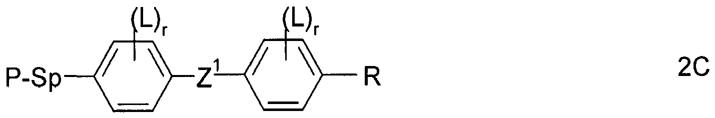 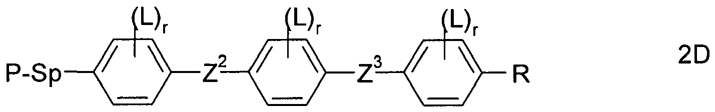 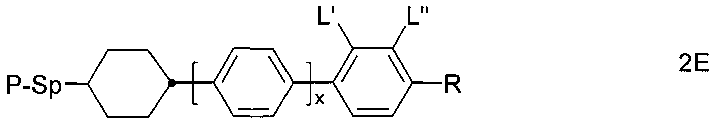 in which P, Sp, R, L and r have the meaning indicated in Claim 1,
Z¹ denotes -O-, -CO-, -CO-O-, -O-CO-, -C(R^{y}R^{z})- or -CF₂CF₂-,
R^{y} and R^{z} each, independently of one another, denote H, F, CH₃ or CF₃,
Z² and Z³ each, independently of one another, denote -CO-O-, -O-CO-, -CH₂O-, -OCH₂-, -CF₂O-, -OCF₂- or -(CH₂)ₙ-, where n is 2, 3 or 4,
L' and L" each, independently of one another, denote H, F or Cl, and
x denotes 0 or 1.

3. LC medium comprising a polymerisable mixture according to Claim 1 or 2.

4. LC medium according to Claim 3, comprising
- a polymerisable component A) comprising a polymerisable mixture according to Claim 1 or 2, and
- a liquid-crystalline component B) comprising one or more low-molecular-weight compounds.

5. LC medium comprising a polymer which is obtainable by polymerisation of a polymerisable mixture according to Claim 1 or 2, and one or more additional compounds, which may also be mesogenic, liquid-crystalline and/or polymerisable.

6. LC medium according to one or more of Claims 3 to 5, **characterised in that** it comprises one or more compounds of the formulae CY and/or PY: 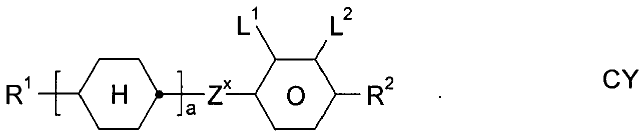 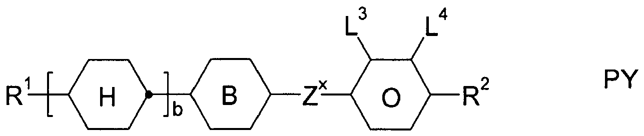 in which the individual radicals have the following meaning:
a denotes 1 or 2,
b denotes 0 or 1, 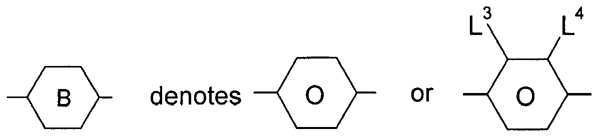
R¹ and R² each, independently of one another, denote alkyl having 1 to 12 C atoms, in which, in addition, one or two non-adjacent CH₂ groups may be replaced by -O-, -CH=CH-, -CO-, -O-CO- or -CO-O- in such a way that O atoms are not linked directly to one another,
Z^{x} denotes -CH=CH-, -CH₂O-, -OCH₂-, -CF₂O-, -OCF₂-, -O-, -CH₂-, -CH₂CH₂- or a single bond, preferably a single bond,
L¹⁻⁴ each, independently of one another, denote F, Cl, OCF₃, CF₃, CH₃, CH₂F, CHF₂.

7. LC medium according to one or more of Claims 3 to 6, **characterised in that** it comprises one or more compounds of the following formula: 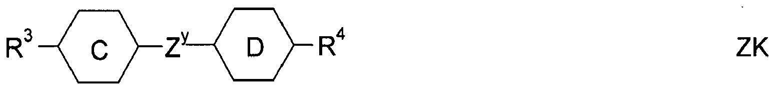 in which the individual radicals have the following meaning: 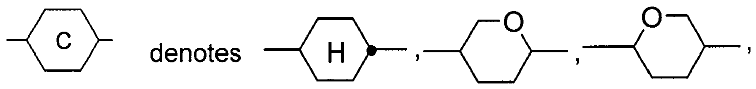 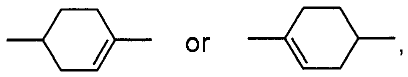 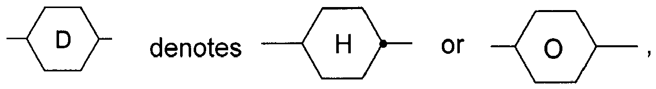
R³ and R⁴ each, independently of one another, denote alkyl having 1 to 12 C atoms, in which, in addition, one or two non-adjacent CH₂ groups may be replaced by -O-, -CH=CH-, -CO-, -O-CO- or -CO-O- in such a way that O atoms are not linked directly to one another,
Z^{y} denotes -CH₂CH₂-, -CH=CH-, -CF₂O-, -OCF₂-, -CH₂O-, -OCH₂-, -COO-, -OCO-, -C₂F₄-, -CF=CF- or a single bond.

8. Use of a polymerisable mixture or of an LC medium according to one or more of Claims 1 to 7 in LC displays of the PS or PSA type.

9. LC display containing a polymerisable mixture or an LC medium according to one or more of Claims 1 to 7.

10. Use or LC display according to Claim 8 or 9, **characterised in that** the LC display contains an LC cell having two substrates and two electrodes, where at least one substrate transmits light and at least one substrate has one or two electrodes, and a layer, which is located between the substrates, of an LC medium comprising a polymerised component and a low-molecular-weight component, where the polymerised component is obtainable by polymerisation of a polymerisable mixture according to one or more of Claims 1 and 2 between the substrates of the LC cell in the LC medium, preferably with application of an electrical voltage to the electrodes.

11. Use or LC display according to one or more of Claims 8 to 10, **characterised in that** it is a PSA-VA, PSA-OCB, PSA-positive-VA, PSA-IPS, PSA-FFS or PSA-TN display.

12. Process for the production of an LC display of the PS or PSA type in which an LC medium according to one or more of Claims 3 to 7 is introduced into an LC cell having two substrates and two electrodes, where at least one substrate transmits light and at least one substrate has one or two electrodes, and the polymerisable mixture is polymerised, preferably with application of an electrical voltage to the electrodes.

## Revendications

1. Mélange polymérisable comprenant au moins un premier composé polymérisable et au moins un second composé polymérisable, où le premier composé polymérisable initie et/ou accélère la polymérisation du second composé polymérisable, **caractérisé en ce que** le premier composé polymérisable est choisi parmi le groupe constitué par les formules qui suivent : 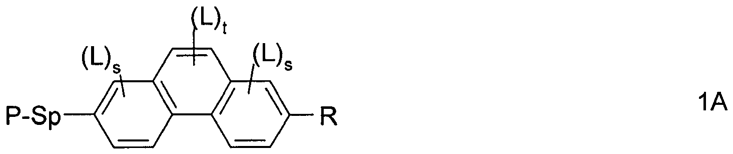 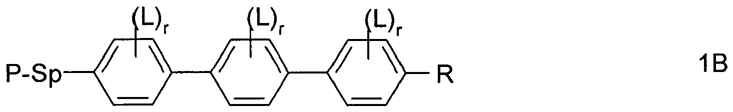 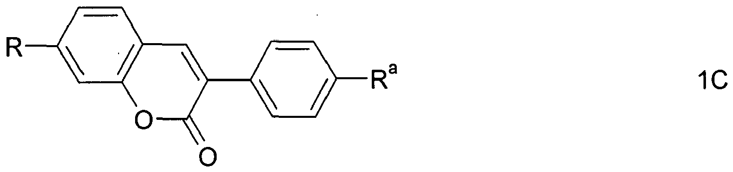 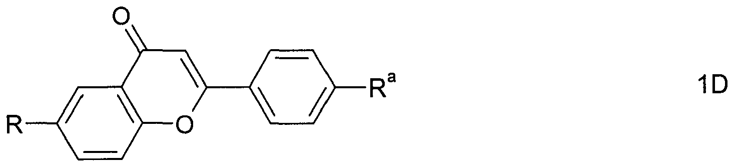 dans lesquelles les radicaux individuels présentent la signification qui suit :
L représente, pour chaque occurrence, de manière identique ou différente, F, Cl, CN ou alkyle, alcoxy, alkényle, alkynyle, alkyl-carbonyle, alcoxycarbonyle, alkylcarbonyloxy ou alcoxycarbonyl-oxy, en option monofluoré ou polyfluoré, en chaîne droite ou ramifié comportant de 1 à 12 atomes de C,
r représente 0, 1, 2, 3 ou 4,
s représente 0, 1, 2 ou 3,
t représente 0, 1 ou 2,
P représente, pour chaque occurrence, de manière identique ou différente, un groupe polymérisable,
Sp représente, pour chaque occurrence, de manière identique ou différente, un groupe d'espaceur ou une liaison simple,
R, R^{a} représentent chacun, indépendamment l'un de l'autre, P-Sp-, H, F, Cl, Br, I, -CN, -NO₂, -NCO, -NCS, -OCN, -SCN, SF₅, alkyle en chaîne droite ou ramifié comportant de 1 à 25 atomes de C, où, en outre, un ou plusieurs groupe(s) CH₂ non adjacents peut/peuvent chacun être remplacé(s), indépendamment les uns des autres, par arylène, -C(R⁰)=C(R⁰⁰)-, -C≡C-, -N(R⁰)-, -O-, -S-, -CO-, -CO-O-, -O-CO-, -O-CO-O- de telle sorte que des atomes de O et/ou de S ne soient pas liés directement les uns aux autres, et où, en outre, un ou plusieurs atome(s) de H peut/peuvent être remplacé(s) par F, Cl, Br, I, CN ou P-Sp-, ou aryle ou hétéroaryle, de façon préférable comportant de 2 à 25 atomes de C, lequel peut également contenir deux cycles fusionnés ou plus et lequel est en option monosubstitué ou polysubstitué par L', où au moins l'un des radicaux R et R^{a} dans les formules 1C et 1 D représente P-Sp-,
L' représente, pour chaque occurrence, de manière identique ou différente, P-Sp-, H, OH, CH₂OH, halogène, SF₅, NO₂, un groupe carbone ou un groupe hydrocarbone,
R⁰, R⁰⁰ représentent chacun, indépendamment l'un de l'autre et pour chaque occurrence de manière identique ou différente, H ou alkyle comportant de 1 à 12 atome(s) de C.

2. Mélange polymérisable selon la revendication 1, **caractérisé en ce que** le second composé polymérisable est choisi parmi le groupe constitué par les formules qui suivent : 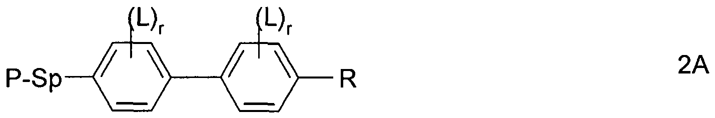 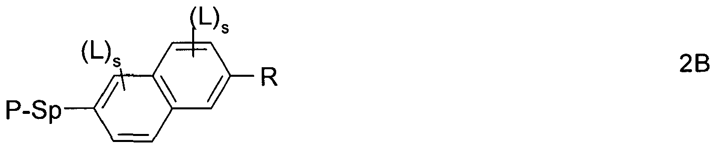 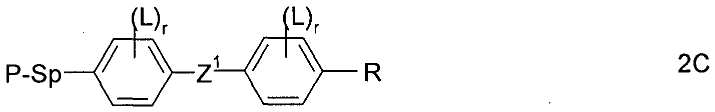 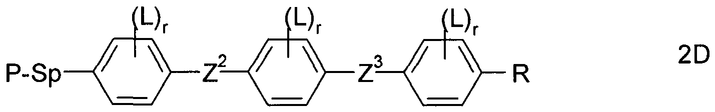 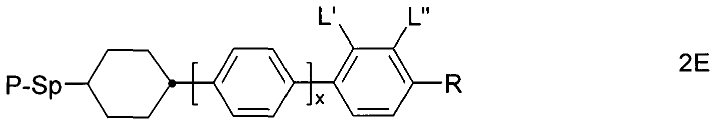 dans lesquelles P, Sp, R, L et r présentent la signification indiquée selon la revendication 1,
Z¹ représente -O-, -CO-, -CO-O-, -O-CO-, -C(R^{y}R^{z})- ou -CF₂CF₂-,
R^{y} et R^{z} représentent chacun, indépendamment l'un de l'autre, H, F, CH₃ ou CF₃,
Z² et Z³ représentent chacun, indépendamment l'un de l'autre, -CO-O-, -O-CO-, -CH₂O-, -OCH₂-, -CF₂O-, -OCF₂- ou -(CH₂)ₙ-, où n est 2, 3 ou 4,
L' et L" représentent chacun, indépendamment l'un de l'autre, H, F ou Cl, et
x représente 0 ou 1.

3. Milieu LC comprenant un mélange polymérisable selon la revendication 1 ou 2.

4. Milieu LC selon la revendication 3, comprenant :
- un composant polymérisable A) comprenant un mélange polymérisable selon la revendication 1 ou 2, et
- un composant cristallin liquide B) comprenant un ou plusieurs composé(s) de poids moléculaire faible.

5. Milieu LC comprenant un polymère, lequel peut être obtenu par polymérisation d'un mélange polymérisable selon la revendication 1 ou 2, et un ou plusieurs composé(s) additionnel(s), lequel/lesquels peut/peuvent également être mésogène(s), cristallin(s) liquide(s) et/ou polymérisable(s).

6. Milieu LC selon une ou plusieurs des revendications 3 à 5, **caractérisé en ce qu'**il comprend un ou plusieurs composé(s) des formules CY et/ou PY : 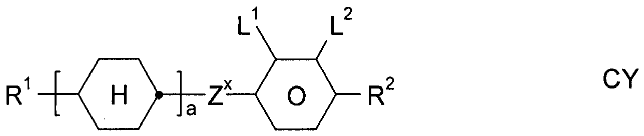 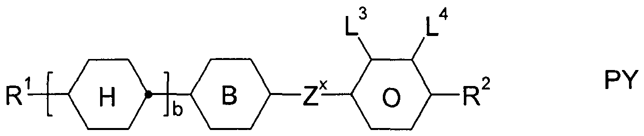 dans lesquelles les radicaux individuels présentent la signification qui suit :
a représente 1 ou 2,
b représente 0 ou 1, 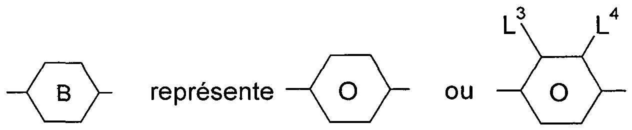
R¹ et R² représentent chacun, indépendamment l'un de l'autre, alkyle comportant de 1 à 12 atome(s) de C, où, en outre, un ou deux groupe(s) CH₂ non adjacents peut/peuvent être remplacé(s) par -O-, -CH=CH-, -CO-, -O-CO- ou -CO-O- de telle sorte que des atomes de O ne soient pas liés directement les uns aux autres,
Z^{x} représente -CH=CH-, -CH₂O-, -OCH₂-, -CF₂O-, -OCF₂-, -O-, -CH₂-, -CH₂CH₂- ou une liaison simple, de façon préférable une liaison simple,
L¹⁻⁴ représentent chacun, indépendamment les uns des autres, F, Cl, OCF₃, CF₃, CH₃, CH₂F, CHF₂.

7. Milieu LC selon une ou plusieurs des revendications 3 à 6, **caractérisé en ce qu'**il comprend un ou plusieurs composé(s) de la formule qui suit : 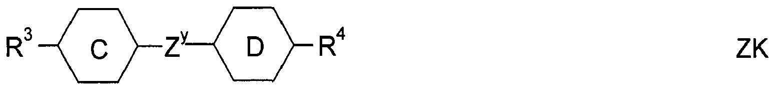 dans laquelle les radicaux individuels présentent la signification qui suit : 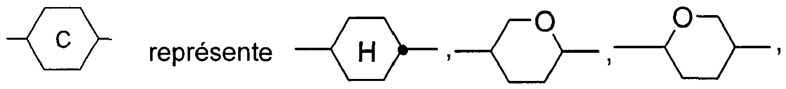 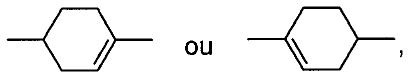 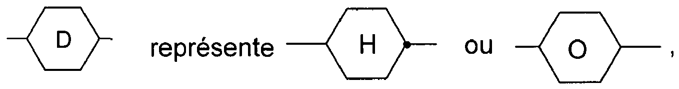
R³ et R⁴ représentent chacun, indépendamment l'un de l'autre, alkyle comportant de 1 à 12 atome(s) de C, où, en outre, un ou deux groupe(s) CH₂ non adjacents peut/peuvent être remplacé(s) par -O-, -CH=CH-, -CO-, -O-CO- ou -CO-O- de telle sorte que des atomes de O ne soient pas liés directement les uns aux autres,
Z^{y} représente -CH₂CH₂-, -CH=CH-, -CF₂O-, -OCF₂-, -CH₂O-, -OCH₂-, -COO-, -OCO-, -C₂F₄-, -CF=CF- ou une liaison simple.

8. Utilisation d'un mélange polymérisable ou d'un milieu LC selon une ou plusieurs des revendications 1 à 7 dans des affichages LC du type PS ou PSA.

9. Affichage LC contenant un mélange polymérisable ou un milieu LC selon une ou plusieurs des revendications 1 à 7.

10. Utilisation ou affichage LC selon la revendication 8 ou 9, caractérisé(e) en ce que l'affichage LC contient une cellule LC comportant deux substrats et deux électrodes, où au moins un substrat laisse passer la lumière et au moins un substrat comporte une ou deux électrode(s), et une couche, laquelle est située entre les substrats, en un milieu LC comprenant un composant polymérisé et un composant de poids moléculaire faible, où le composant polymérisé peut être obtenu par polymérisation d'un mélange polymérisable selon une ou plusieurs des revendications 1 et 2 entre les substrats de la cellule LC dans le milieu LC, de façon préférable moyennant l'application d'une tension électrique aux bornes des électrodes.

11. Utilisation ou affichage LC selon une ou plusieurs des revendications 8 à 10, caractérisé(e) en ce qu'il s'agit d'un affichage PSA-VA, PSA-OCB, PSA-positif-VA, PSA-IPS, PSA-FFS ou PSA-TN.

12. Procédé pour la fabrication d'un affichage LC du type PS ou PSA dans lequel un milieu LC selon une ou plusieurs des revendications 3 à 7 est introduit à l'intérieur d'une cellule LC comportant deux substrats et deux électrodes, où au moins un substrat laisse passer la lumière et au moins un substrat comporte une ou deux électrode(s), et le mélange polymérisable est polymérisé, de façon préférable moyennant l'application d'une tension électrique aux bornes des électrodes.
